(19) Europäisches Patentamt
European Patent Office
Office européen des brevets

(11) **EP 1 669 889 A1**

(12) **EUROPEAN PATENT APPLICATION**
published in accordance with Art. 158(3) EPC

(43) Date of publication:
**14.06.2006 Bulletin 2006/24**

(51) Int Cl.:
***G06F 17/30*** (1995.01)

(21) Application number: **04724188.0**

(22) Date of filing: **29.03.2004**

(86) International application number:
**PCT/JP2004/004451**

(87) International publication number:
**WO 2005/033972 (14.04.2005 Gazette 2005/15)**

(84) Designated Contracting States:
**AT BE BG CH CY CZ DE DK EE ES FI FR GB GR
HU IE IT LI LU MC NL PL PT RO SE SI SK TR**

(30) Priority: **30.09.2003 JP 2003341904**

(71) Applicant: **Intellectual Property Bank Corp.
Tokyo 105-0001 (JP)**

(72) Inventors:
• **MASUYAMA, Hiroaki
Toyonaka-shi, Osaka 5600054 (JP)**

• **YOSHINO, Noriaki,
Lions Mansion Kawasaki Kaizuka
Kawasaki-shi, Kanagawa 2100014 (JP)**

(74) Representative: **Style, Kelda Camilla Karen et al
Page White & Farrer,
54 Doughty Street
London WC1N 2LS (GB)**

(54) **SIMILARITY CALCULATION DEVICE AND SIMILARITY CALCULATION PROGRAM**

(57) There is provided a similarity calculation device for calculating an index for judging technical similarity between technical document groups consisting of technical documents. The similarity calculation device includes: technical document group input means (365) for inputting a first technical document group and a second technical document group to be compared; technical information input means (371) for inputting technical information; cluster analysis means (380) for searching technical documents contained in the first technical document group and the second technical document group and including the technical information which has been input and decomposing the searched technical documents into a cluster for each technical information; similarity calculation means (380) for calculating the ratio of the number of mixed clusters including the technical documents of both of the first technical document group and the second technical document group against the total number of clusters obtained as the cluster decomposition; and output means (365) for outputting the similarity calculated.

FIG. 4

## EP 1 669 889 A1

**Description**

<u>TECHNICAL FIELD</u>

The present invention relates to a similarity calculation device and similarity calculation program, which compare technical document groups and judge the similarity thereof.

<u>BACKGROUND ART</u>

In conventional patent maps, patent documents are used to compare technology for the contents of the same or similar research and development themes, by which means it is thought that overall trends and distributions can be ascertained. By examining a patent map, a manager can analyze elements vital to management decisions, such as market trends, technology trends, trends of enterprises entering a market and rival enterprises, future prospects, and the like.

In a patent map, when it is necessary to perform a macro-scope comparison of a group of technical documents A relating to company A and a group of technical documents B relating to company B, micro-scope comparisons between individual technical documents associated with the group of technical documents A and individual technical documents associated with the group of technical documents B have been performed, and from these results, macro-scope comparisons between the technical document groups have been derived.

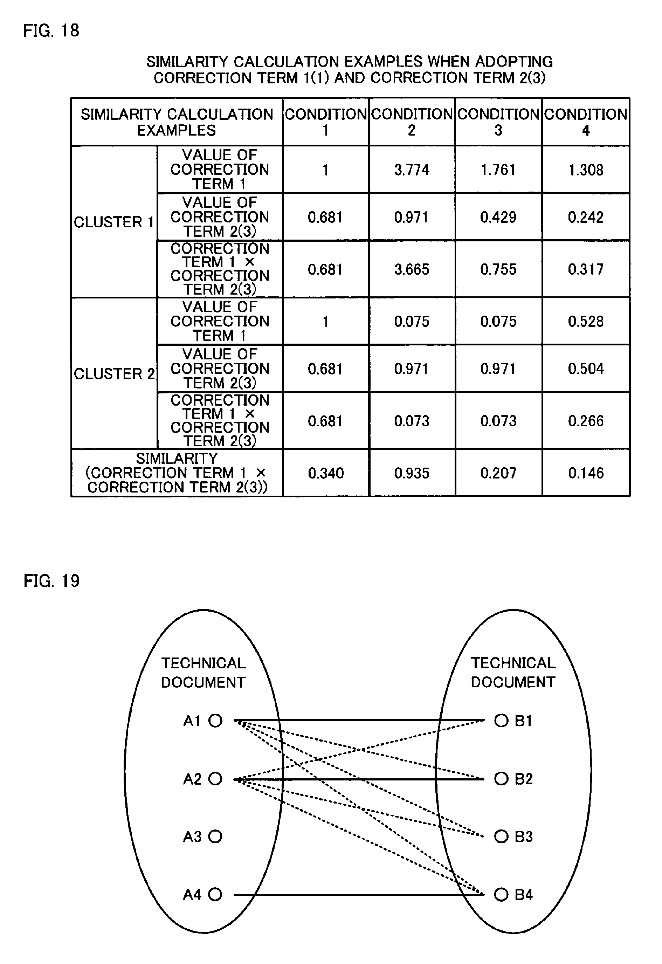

Fig. 19 shows the circumstances of comparisons in the prior art, involving individual micro-scope comparisons between technical documents belonging to technical document group A and technical documents belonging to technical document group B.

As shown in Fig. 19, when comparing the technology of technical document group B for comparison with the technology described in technical document group A, micro-scope comparisons are conventionally performed for all combinations of the technical documents (patent publications, technical reports, and the like) contained in technical document group A and the technical documents (patent publications, technical reports, and the like) contained in technical document group B, the results are quantified as similarities, and by computing the average and variance, numerical comparisons of two technical document groups have been performed (see for example "Patent Map Guidance", Japan Patent Office, August 4 2002; on the Internet, http://www5.ipdl.jpo.go.jp/pmgs1/pmgs1/pmgs).

In Japanese Patent Laid-open No. 2000-348015, an intellectual property evaluation device, intellectual property evaluation method, and the like are described, for evaluation of the property value of intellectual property relating to inventions and the like during application or after registration. This intellectual property evaluation device comprises implementation profit input means, for input of data relating to implementation profit; present value rate input means, for input of data relating to the present value rate for each year; present value computation means, for computing the present value of annual compensation for each year, by multiplication of the implementation profit with data relating to the present value rate for each year, input through the input means; intellectual property price calculation means, for calculating intellectual property value by adding, for each year, the present value of compensation amounts for each year, calculated by the present value computation means; and output means, for outputting the intellectual property value calculated by the intellectual property price calculation means.

This and other similar intellectual property evaluation devices attempt to ascertain the asset value of patents currently remaining by depreciation of registered patents and of sales and profits related thereto. In these inventions, when evaluating the value of each patent, it is assumed that a company's own evaluation and the evaluations of other companies can be ranked and input, and that the contributions of each can be evaluated, to calculate the asset value of intellectual property for which specific license has not been set.

In Japanese Patent Laid-open No. 2001-76042, a system, method, and recording media are described to evaluate evaluation items which can fluctuate with time, based on first data having a prescribed update interval and on second data the update interval of which is shorter than that for the first data. This system comprises (a) means for creating a first evaluation model, according to input of first data for sample; (b) means for applying the first data for the sample to a first evaluation model, and calculating a first evaluation output; (c) means for creating a second evaluation model, according to input of second data for the sample and the first evaluation output; (d) means for applying the first data to the first evaluation model according to the first data input for the sample, and calculating the second evaluation output; and, (e) means for applying the second data for the sample and the second evaluation output to the second evaluation model, and calculating the evaluation output for the evaluation. Thus evaluation items for evaluation which can fluctuate with time are evaluated.

In this system, it is deemed possible to calculate at appropriate times the latest enterprise evaluations through application of enterprise data for evaluation to two evaluation models, which are a static model in which enterprise evaluations are performed employing ranking data, bankruptcy probabilities and the like calculated from first data with comparatively long update intervals, such as financial data derived from balance sheets and profit/loss statements updated on an annually or quarterly basis, and a dynamic model in which enterprise evaluations are performed dynamically, based on input of second data with comparatively short update intervals such as daily fluctuating stock prices, interest and exchange rates, with forecasts based on such changes.

Further, in Japanese Patent Laid-open No. 8-287081, Japanese Patent Laid-open No. 2001-337992, Japanese Patent Laid-open No. 10-74205, Japanese Patent Laid-open No. 8-278982, Japanese Patent Laid-open No. 11-73415, and Japanese Patent Laid-open No. 2001-331527, similar document search devices and similarity search systems and the like are described which, when searching for documents or text with contents similar to certain documents or text, enables accurate searching for similar documents, with a high degree of similarity between documents and text and with high reliability.

## DISCLOSURE OF THE INVENTION

However, in the patent map described in "Patent Map Guidance", Japan Patent.Office, August 4 2002, and in the inventions described in Japanese Patent Laid-open No. 8-287081, Japanese Patent Laid-open No. 2001-337992, Japanese Patent Laid-open No. 10-74205, Japanese Patent Laid-open No. 8-278982, Japanese Patent Laid-open No. 11-73415, and Japanese Patent Laid-open No. 2001-331527, even if there is a request for macro-scope comparison of the contents described in technical documents between, for example, technical document group A relating to company A and technical document group B relating to company B, in the prior art micro-scope comparisons are performed between each of the technical documents belonging to technical document group A and to technical document group B, and a macro-scope comparison of the two technical document groups is derived from the plurality of computation results, so that there is the problem that operation efficiency is poor.

Further, in the case of the patent map of "Patent Map Guidance", Japan Patent Office, August 4 2002, in technical comparisons it is deemed possible to determine overall trends and distributions for the contents of each of the same or similar research and development themes. However, since it is not possible to calculate relative evaluations for each technology across enterprises, taking all the technical documents of an entire enterprises as a population, quantitative or qualitative results are not obtained as a value evaluation method for intangible assets, and so there is the problem that an index for technology evaluation for use in enterprise patent strategy decisions, addressing evaluations of trusts and investments, cannot be calculated.

Further, when a calculation method entailing averaging of such micro-scope similarities is used, in for example a case such as that of Fig. 19, when a technical document group A and a technical document group B are completely different, the similarity is calculated to be 0. Further, the average similarity calculated for all combinations is also 0, so there seems to be no problem.

However, even when a first technical document group and a second technical document group are exactly the same, when the micro-scope similarities between the technical document A1 contained in the first technical document group and the technical documents B1, B2, B3, B4 in the second technical document group are determined, when two technical documents are exactly the same (e.g. A1 = B1) the similarity between A1 and B1 is calculated to be one, but in other cases, generally the similarity is not one. Further, the average similarity determined for all combinations of documents other than A1, such as A2, A3, A4 and the like, is an average value of one and numerical values smaller than one, so that there is the problem that the similarity is never calculated to be one.

Further, when calculating similarities for a large volume of technical documents, such as in cases when the total number of technical documents numbers several tens of thousands or greater, it is necessary to calculate similarities for all combinations of technical documents, so that a vast amount of computation is necessary to calculate similarities, a large amount of computation time is required, and there is the further problem that the similarity calculation result cannot be displayed rapidly.

Also, when calculating similarities as in the prior art, if a method is employed in which the survey object and population technical documents are divided by keyword, the ratios of the number of technical documents containing each keyword to the total number of technical documents are computed, and the computed ratios are averaged for all keywords to calculate similarities, if weighting based on keyword importance is not performed, there is the problem that a discrepancy may arise between the calculated similarities and actual perceived similarities.

When using such weighted keywords to calculate similarities, an operator can assign weightings for all keywords to create a thesaurus, and similarities can be calculated based on these weightings. This is theoretically possible, but in actuality it is considerably difficult (bordering on impossible) to assign weightings to each of a vast number of keywords, and such a task does not lend itself to automated processing. Further, similarities are computed for each individual technical document, so that there is no solution to the problem that micro-scope comparisons of technical documents are performed.

Moreover, in the case of the patent map described in "Patent Map Guidance", Japan Patent Office, August 4 2002, the price of software to assist in the creation of patent maps ranges from approximately 150,000 yen to 500,000 yen, and operation of such software necessitates advanced engineering skills and knowledge, not only with respect to computers, but also reading the claims and drawings of the patents and the like. And when a patent survey organization is requested to perform such tasks, costs typically range from 300,000 yen upwards per case, and the time required for patent map creation is approximately one month or longer.

Hence it is anticipated that the use of patent maps will be limited when used by venture businesses with limited capital and development budgets, or when there is a need for timeliness in filing patent applications.

Further, in intellectual property evaluation devices and the like of the prior art, there has been the problem of difficulty in collecting information from the past to the latest over a broad range to perform analysis of technical trends among competing companies, and in conducting surveys on technical trends and the like to ascertain engineering levels, prior to embarking on product research and development.

As the value of intangible assets within enterprise value has increased in recent years, the value of intangible assets has come to greatly affect the value of enterprises.

Hence there is a tendency toward use of intangible assets as an index, by trust companies in relation to trust, by investors in relation to investment, and by enterprises in relation to patent strategy movements which emphasize profits created by intellectual property.

However, in the prior art there has been no appropriate index for comparing intangible assets held by enterprises using general technical documents, to be referenced when making investment decisions.

In particular, in corporate management where the viability of the enterprise is at stake, it is vitally important that an index be available for use in examining patent strategies, including whether a technical field is sufficiently valuable to warrant development funds in an early stage of new entry into a market or the start of development of new products, whether a patent application should be filed, whether an examination should be requested, the probability of obtaining rights to technology, whether license negotiations would be preferable from the standpoint of profitability, and the like.

Hence in light of the above situation with the prior art, an object of this invention is to provide a similarity calculation device, similarity calculation program, and similarity calculation method enabling comparison of technical document groups over a broad range, not limited to patent publications or the like, among different enterprises, and calculation of an appropriate similarity corresponding to a human perception and thereby calculation of an index making possible quantitative and qualitative evaluations, as well as evaluations of the relative value of intangible assets.

A further object of this invention is to provide a similarity calculation device, similarity calculation program, and similarity calculation method which are capable of calculating comparison results for macro-scope similarity between a first technical document group and a second technical document group, without requiring large volumes of calculation over long lengths of time, with little probability that calculated similarity values may change due to the arbitrary judgment of the analyzer, which calculate the similarity to be 0 only when the first technical document group and the second technical document group are completely different, and which calculate the similarity to be one only when the first technical document group and the second technical document group are exactly the same.

A further object of this invention is to provide a similarity calculation device, similarity calculation program, and similarity calculation method which, even when the total number of technical documents to be compared is several tens of thousand or greater in number, can perform similarity calculations in a comparatively short calculation time.

A further object of this invention is to provide a similarity calculation device, similarity calculation program, and similarity calculation method capable of macro-scope comparison of technical document groups.

A further object of this invention is to provide a similarity calculation device, similarity calculation program, and similarity calculation method which can be easily operated even by investors and general businessmen needing to examine enterprise value in terms of intangible assets.

In order to resolve the above problems, a similarity calculation device of this invention calculates an index for judging technical similarity between a first technical document group and a second technical document group, comprising patent documents, technical reports, or other technical documents, and is characterized in comprising technical document group input means for inputting the first technical document group and the second technical document group for comparison; technical information input means for inputting technical information such as keywords or IPC symbols; cluster analysis means for retrieving technical documents containing the input technical information from technical documents contained in the first technical document group and the second technical document group, and for clustering the retrieved technical documents by each technical information; similarity calculation means for calculating, as the similarity, the ratio of the number of intermixed clusters, containing technical documents of both the first technical document group and the second technical document group, to the total number of clusters obtained as a result of the cluster analysis; and output means for outputting the calculated similarity to recording means, to display means, or to communication means.

Also in order to resolve the above problems, the present invention comprises:

technical document group input means for inputting the first technical document group and the second technical document group for comparison;
technical information input means for inputting technical information such as keywords or IPC symbols;
cluster analysis means for retrieving technical documents containing the input technical information from technical documents contained in the first technical document group and the second technical document group, and for clustering the retrieved technical documents by each technical information;

similarity calculation means for calculating the total number of clusters obtained as a result of the cluster analysis and the number of intermixed clusters containing technical documents of both the first technical document group and the second technical document group, as well as for calculating the sum, over all intermixed clusters, of the product of a first correction value which takes a value according to the number of technical documents contained in each intermixed cluster and a second correction value which takes a value according to the state of mixing of technical documents of the first technical document group and the technical documents of the second technical document group in each intermixed cluster, and dividing the sum by the calculated total number of clusters to calculate the similarity; and,

output means for outputting the calculated similarity to recording means, to display means, or to communication means.

Also in order to resolve the above problems, the present invention comprises:

technical document group input means for inputting the first technical document group and the second technical document group for comparison;

technical information input means for inputting technical information such as keywords or IPC symbols;

cluster analysis means for retrieving technical documents containing the input technical information from technical documents contained in the first technical document group and the second technical document group, and for clustering the retrieved technical documents by each technical information;

similarity calculation means for calculating the total number of clusters obtained as a result of the cluster analysis and the number of intermixed clusters containing technical documents of both the first technical document group and the second technical document group, as well as for calculating the sum, over all intermixed clusters, of a correction value proportional to the $\alpha$th power (where $0<\alpha$) of the number of technical documents in each cluster, and dividing the sum by the calculated total number of clusters to calculate the similarity; and,

output means for outputting the calculated similarity to recording means, to display means, or to communication means.

Also in order to resolve the above problems, the present invention comprises:

technical document group input means for inputting the first technical document group and the second technical document group for comparison;

technical information input means for inputting technical information such as keywords or IPC symbols;

cluster analysis means for retrieving technical documents containing the input technical information from technical documents contained in the first technical document group and the second technical document group, and for clustering the retrieved technical documents by each technical information;

similarity calculation means for calculating the total number of clusters obtained as a result of the cluster analysis and the number of intermixed clusters containing technical documents of both the first technical document group and the second technical document group, as well as for calculating the sum, over all intermixed clusters, of a correction value obtained by dividing the $\alpha$th power (where $0<\alpha$) of the number of technical documents in each cluster by a standardizing factor such as the average value of the number of technical documents in all clusters, and dividing the sum by the calculated total number of clusters to calculate the similarity; and,

output means for outputting the calculated similarity to recording means, to display means, or to communication means.

Also in order to resolve the above problems, the present invention comprises:

technical document group input means for inputting the first technical document group and the second technical document group for comparison;

technical information input means for inputting technical information such as keywords or IPC symbols;

cluster analysis means for retrieving technical documents containing the input technical information from technical documents contained in the first technical document group and the second technical document group, and for clustering the retrieved technical documents by each technical information;

similarity calculation means for calculating the total number of clusters obtained as a result of the cluster analysis and the number of intermixed clusters containing technical documents of both the first technical document group and the second technical document group, as well as for calculating the sum, over all intermixed clusters, of a correction value proportional to the $\gamma$th power (where $0<\gamma$) of the probability of retrieving the m technical documents from the first technical document group and the n technical documents from the second technical document group, in order to perform correction according to the probability of the number of technical documents of the first technical document group and the second technical document group contained in each intermixed cluster obtained as a result of the cluster analysis, and dividing the sum by the calculated total number of clusters to calculate the similarity; and, output means for outputting the calculated similarity to recording means, to display means, or to communication means.

Also in order to resolve the above problems, the present invention comprises:

technical document group input means for inputting the first technical document group and the second technical document group for comparison;
technical information input means for inputting technical information such as keywords or IPC symbols;
cluster analysis means for retrieving technical documents containing the input technical information from technical documents contained in the first technical document group and the second technical document group, and for clustering the retrieved technical documents by each technical information;
similarity calculation means for calculating the total number of clusters obtained as a result of the cluster analysis and the number of intermixed clusters containing technical documents of both the first technical document group and the second technical document group, as well as for calculating the sum, over all intermixed clusters, of a correction value obtained by dividing, by a standardizing factor, the $\gamma$th power (where $0<\gamma$) of the probability of retrieving the m technical documents from the first technical document group and the n technical documents from the second technical document group, in order to perform correction according to the probability of the number of technical documents of the first technical document group and the second technical document group contained in each intermixed cluster obtained as a result of the cluster analysis, and dividing the sum by the calculated total number of clusters to calculate the similarity; and,
output means for outputting the calculated similarity to recording means, to display means, or to communication means.

The present invention may also be characterized in that the standardizing factor is the $\gamma$th power (where $0<\gamma$) of the maximum value of the probability of retrieving the m technical documents from the first technical document group and the n technical documents from the second technical document group.

Also in order to resolve the above problems, the present invention comprises:

technical document group input means for inputting the first technical document group and the second technical document group for comparison;
technical information input means for inputting technical information such as keywords or IPC symbols;
cluster analysis means for retrieving technical documents containing the input technical information from technical documents contained in the first technical document group and the second technical document group, and for clustering the retrieved technical documents by each technical information;
similarity calculation means for calculating the total number of clusters obtained as a result of the cluster analysis and the number of intermixed clusters containing technical documents of both the first technical document group and the second technical document group, as well as for calculating the sum, over all intermixed clusters, of a correction value proportional to the $\zeta$th power (where $0<\zeta$) of the ratio of a composition ratio N/M and an intermixing ratio n/m, for the composition ratio N/M of the number of technical documents N contained in the second technical document group to the number of technical documents M contained in the first technical document group and for the intermixing ratio n/m of the number of technical documents n of the second technical document group to the number of technical documents m of the first technical document group contained in each intermixed cluster obtained as a result of the cluster analysis, and dividing the sum by the calculated total number of clusters to calculate the similarity; and,
output means for outputting the calculated similarity to recording means, to display means, or to communication means.

Also in order to resolve the above problems, the present invention comprises:

technical document group input means for inputting the first technical document group and the second technical document group for comparison;
technical information input means for inputting technical information such as keywords or IPC symbols;
cluster analysis means for retrieving technical documents containing the input technical information from technical documents contained in the first technical document group and the second technical document group, and for clustering the retrieved technical documents by each technical information;

similarity calculation means for calculating the total number of clusters obtained as a result of the cluster analysis and the number of intermixed clusters containing technical documents of both the first technical document group and the second technical document group, and calculating an expectation value for retrieving a technical document of the first technical document group by multiplying the probability of retrieving a technical document of the first technical document group from among a technical document group covering the first technical document group and the second technical document group by the number of technical documents contained in each intermixed cluster, and calculating as an expectation value difference the difference between the expectation value and the number of technical documents of the first technical document group contained in each intermixed cluster, as well as for calculating the sum, over all intermixed clusters, of a correction value obtained by setting the expectation value difference as negative exponent for an arbitrary constant $\xi$ (where $1<\xi$), and dividing the sum by the calculated total number of clusters to calculate the similarity; and

output means for outputting the calculated similarity to recording means, to display means, or to communication means.

Also in order to resolve the above problems, the present invention comprises:

technical document group input means for inputting the first technical document group and the second technical document group for comparison;

technical information input means for inputting technical information such as keywords or IPC symbols;

cluster analysis means for retrieving technical documents containing the input technical information from technical documents contained in the first technical document group and the second technical document group, and for clustering the retrieved technical documents by each technical information;

similarity calculation means for calculating the total number of clusters obtained as a result of the cluster analysis and the number of intermixed clusters containing technical documents of both the first technical document group and the second technical document group, and calculating the expectation value for retrieving a technical document of the first technical document group by multiplying the probability of retrieving a technical document of the first technical document group from among a technical document group covering the first technical document group and the second technical document group by the number of technical documents contained in each intermixed cluster, and calculating as an expectation value difference the difference between the expectation value and the number of technical documents of the first technical document group contained in each intermixed cluster, as well as for calculating the sum, over all intermixed clusters, of a correction value obtained by dividing the expectation value difference by the number of technical documents in each intermixed cluster and setting the divided expectation value difference as negative exponent for an arbitrary constant $\xi$ (where $1<\xi$), and then dividing the sum by the calculated total number of clusters to calculate the similarity; and

output means for outputting the calculated similarity to recording means, to display means, or to communication means.

According to the present invention, a similarity calculation device, which calculates an index for judging technical similarity between a first technical document group and a second technical document group, each comprising patent documents, technical reports, or other technical documents comprises:

technical document group input means for inputting the first technical document group and the second technical document group for comparison;

technical information input means for inputting technical information such as keywords or IPC symbols;

cluster analysis means for retrieving technical documents containing the input technical information from technical documents contained in the first technical document group and the second technical document group, and for clustering the retrieved technical documents by each technical information;

similarity calculation means for calculating, as the similarity, the ratio of the number of intermixed clusters containing technical documents of both the first technical document group and the second technical document group, to the total number of clusters obtained as a result of the cluster analysis; and,

output means for outputting the calculated similarity to recording means, to display means, or to communication means.

Therefore, an index indicating the similarity of technical content described in technical document groups can easily be calculated, based on the ratio of the total number of analyzed clusters to the number of intermixed clusters.

Also according to the present invention, the similarity calculation means execute a function for calculating the sum, over all intermixed clusters, of the product of a first correction value which takes a value according to the number of technical documents contained in each intermixed cluster and a second correction value which takes a value according to the state of mixing of technical documents of the first technical document group and the technical documents of the second technical document group in each intermixed cluster, and dividing the sum by the calculated total number of clusters to calculate the similarity.

Therefore, correction can be performed which, due to the existence of a correction term 1, weights more heavily an intermixed cluster according to the number of technical documents contained therein, and due to the existence of a correction term 2, weights a cluster as more important as the composition of technical documents contained in the intermixed cluster is closer to a prescribed value, so as to increase the similarity value, such that the result of the similarity calculation can be corrected so as to agree with human perception.

Hence through calculation of similarity using the correction term 1 and correction term 2, the similarity can be corrected emphasizing intermixed clusters with a large number of technical documents, and correcting the similarity to a smaller value when the state of mixing of technical documents is uneven.

Also according to the present invention, the similarity calculation means execute a function for calculating the sum, over all intermixed clusters, of a correction value proportional to the $\alpha$th power (where $0<\alpha$) of the number of technical documents in each cluster, and dividing the sum by the calculated total number of clusters to calculate the similarity.

Therefore, the similarity can be calculated such that a cluster assumes more importance when the number of technical documents within the cluster is greater.

Also according to the present invention, the similarity calculation means execute a function for dividing the $\alpha$th power (where $0<\alpha$) of the number of technical documents in each cluster by a standardizing factor such as total number of cluster to calculate the similarity.

Therefore, it is possible to ensure that $0 \le$ similarity $\le 1$. As the standardizing factor, the average value of the number of technical documents in all clusters is employed, so that the number of technical documents can be calculated using as reference the average value of the number of technical documents in all clusters.

Also according to the present invention, the similarity calculation means execute a function for calculating the sum, over all intermixed clusters, of a correction value proportional to the $\gamma$th power (where $0<\gamma$) of the probability of retrieving the m technical do cuments from the first technical document group and the n technical documents from the second technical document group, and dividing the sum by the calculated total number of clusters to calculate the similarity.

In other words, a function is provided to perform computation with (number of combinations retrieving m technical documents from group A and n technical documents from group B)/(number of combinations retrieving m+n technical documents from a mixture of group A and group B) placed in the numerator in the similarity calculation means. Therefore, the similarity can be corrected to a small value for large bias and to a large value for small bias, according to the bias (artificiality) of the number of technical documents of group A and group B contained in each intermixed cluster. As the standardizing factor, the $\gamma$th power (where $0<\gamma$) of the maximum value of the probability of retrieving m technical documents from the first technical document group and n technical documents from the second technical document group is provided, so that the calculated similarity can be ensured to be in the range $0 \le$ similarity $\le 1$.

Also according to the present invention, the similarity calculation means execute a function for calculating the sum, over all intermixed clusters, of a correction value proportional to the $\zeta$th power (where $0<\zeta$) of the ratio of a composition ratio N/M and an intermixing ratio n/m, for the composition ratio N/M of the number of technical documents N contained in the second technical document group to the number of technical documents M contained in the first technical document group and for the intermixing ratio n/m of the number of technical documents n of the second technical document group to the number of technical documents m of the first technical document group contained in each intermixed cluster obtained as a result of the cluster analysis, and dividing the sum by the calculated total number of clusters to calculate the similarity.

Therefore, the similarity can be calculated so as to be higher (approaching one) to the extent that the composition ratio of the numbers of technical documents of group A and group B is the same as the intermixing ratio of technical documents within each cluster.

By setting the exponent $\zeta$ for the ratio of the composition ratio and the intermixing ratio such that $\zeta>1$, the influence of intermixed clusters with a small ratio of the ratio of the number of technical documents of groups A and B and the intermixing ratio of technical documents within each cluster can be prevented from greatly influencing the result of similarity calculation.

And, by setting the exponent $\zeta$ to $\zeta=1$, the similarity can be made to simply increase or decrease according to the ratio of the composition ratio of the number of technical: documents of groups A and B and the intermixing ratio of technical documents in each cluster.

And, by setting the numerator exponent such that $0<\zeta<1$, the influence of the result of similarity calculation can be reduced when the ratio of the composition ratio of the number of technical documents of groups A and B and the intermixing ratio of technical documents within each cluster is large.

Also according to the present invention, the similarity calculation means execute a function for calculating an expectation value for retrieving a technical document of the first technical document group by multiplying the probability of retrieving a technical document of the first technical document group from among a technical document group covering the first technical document group and the second technical document group by the number of technical documents contained in each intermixed cluster, and calculating as an expectation value difference the difference between the expectation value and the number of technical documents of the first technical document group contained in each intermixed cluster, as well as for calculating the sum, over all intermixed clusters, of a correction value obtained by setting the expectation value difference as negative exponent for an arbitrary constant $\xi$ (where $1<\xi$), and dividing the sum by the calculated total number of clusters to,calculate the similarity.

Therefore, correction can be performed so as to cause the similarity calculation result to react sensitively to an expectation value difference according to the setting of a parameter $\xi$.

Also according to the present invention, the similarity calculation means execute a function for calculating the expectation value for retrieving a technical document of the first technical document group by multiplying the probability of retrieving a technical document of the first technical document group from among a technical document group covering the first technical document group and the second technical document group by the number of technical documents contained in each intermixed cluster, and calculating as an expectation value difference the difference between the expectation value and the number of technical documents of the first technical document group contained in each intermixed cluster, as well as for calculating the sum, over all intermixed clusters, of a correction value obtained by dividing the expectation value difference by the number of technical documents in each intermixed cluster and setting the divided expectation value difference as negative exponent for an arbitrary constant $\xi$ (where $1<\xi$), and then dividing the sum by the calculated total number of clusters to calculate the similarity.

Therefore, correction can be performed so as to cause the similarity calculation result to react sensitively to an expectation value difference according to the setting of a parameter $\xi$.

BRIEF DESCRIPTION OF THE DRAWINGS

Fig. 1 shows the overall configuration of a similarity calculation system of this invention;

Fig. 2 is a block diagram of a similarity calculation device of this invention;

Fig. 3 shows the configuration of technical documents contained in technical document group A and technical document group B;

Fig. 4 is a flowchart showing similarity display processing;

Fig. 5 shows a display example of an input screen for similarity calculation;

Fig. 6 shows a display example of a similarity display screen to notify the user of calculated similarities;

Fig. 7 shows the configuration of each cluster after cluster analysis of a technical document group using a similarity calculation device of this invention;

Fig. 8 is a flowchart showing similarity calculation processing;

Fig. 9 is a table showing the setting conditions used in similarity calculations;

Fig. 10 shows the circumstances of numerous technical documents being contained within an intermixed cluster 1;

Fig. 11 is a table of similarity calculation examples for a case in which correction term 1 (1) is adopted;

Fig. 12 is a table of similarity calculation examples for a case in which correction term 2 (1) is adopted;

Fig. 13 is a table of similarity calculation examples for a case in which both correction term 1 (1) and correction term 2 (1) are adopted;

Fig. 14 is a table of similarity calculation examples for a case in which correction term 2 (2) is adopted;

Fig. 15 is a table of similarity calculation examples for a case in which correction term 1 (1) and correction term 2 (2) are adopted;

Fig. 16 is a table showing calculation examples for expectation value differences when conditions 1 to 4 are substituted into equation (31);

Fig. 17 is a table of similarity calculation examples for cases in which conditions 1 to 4 are substituted into equation (32), when $\xi = 10$;

Fig. 18 is a table of similarity calculation examples for a case in which correction term 1 (1) and correction term 2 (3) are adopted; and,

Fig. 19 shows the circumstances of the prior art in which micro-scope comparisons of individual technical documents contained in a technical document group A and technical documents contained in a technical document group B are performed.

BEST MODE FOR CARRYING OUT THE INVENTION

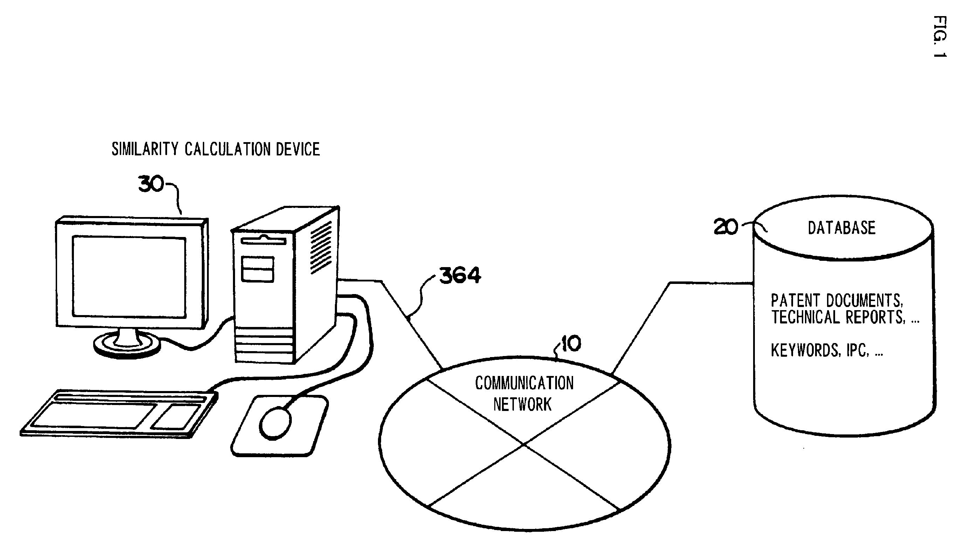

Fig. 1 shows the overall configuration of a similarity calculation system of this invention.
As indicated in the figure, a similarity calculation system of this invention is provided with a similarity calculation device 30, which reads technical documents necessary for similarity calculations from a technical document database 20 via a communication network 10, and calculates and displays similarities, and a technical document database 20 which records technical documents, including technical reports from various companies, as well as patent publications, utility model publications and other patent documents, obtained via the communication network 10.

The communication network 10 is the Internet or another communication network; the similarity calculation device 30 is able to obtain information relating to patent documents and other technical documents from the technical document database 20 via the communication network 10.

The similarity calculation device 30 receives information relating to technical documents for comparison as well as input of conditions for comparison of documents from a user, reads the technical documents necessary for similarity calculation from the technical document database 20 via the communication network 10, and can calculate and display similarities.

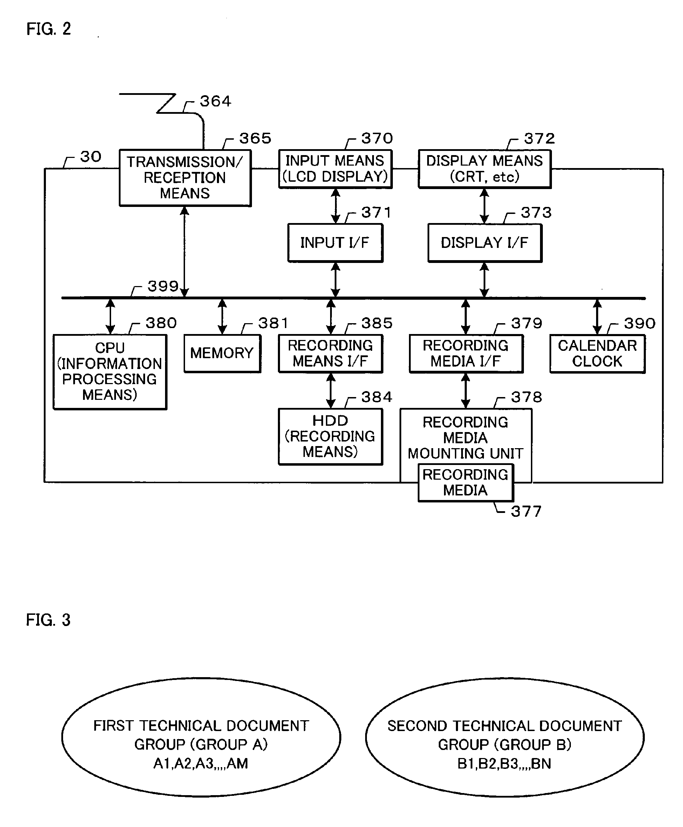

Fig. 2 is a block diagram of a similarity calculation device of this invention.
As indicated in the figure, transmission/reception means 365 (which may also comprise the functions of technical document group input means, technical information input means, or output means), capable of exchanging information with the technical document database 20 or another communication device via a communication network 364, such as public lines, a communication network or the like, is provided in the information transmission/reception portion of the similarity calculation device 30.

The transmission/reception means 365 can acquire technical documents necessary for similarity calculations from the technical document database 20 via the communication network 10.

Also, input means 370 (which may also comprise the functions of technical information input means), such as a keyboard, mouse or the like, for input by the user of information relating to technical document groups for comparison and conditions for comparison of documents, is provided in the similarity calculation device 30.

The similarity calculation device 30 also comprises an input interface 371 (which may comprise the functions of technical information input means), to read various information input through the input means 370 and convey the information to the information processing means 380, described below, and to output display commands to an LCD or the like based on instructions from the information processing means 380; display means 372 (which may also comprise the functions of output means), to display image, text, and other information; and a display interface 373 (which may comprise the functions of output means), to output image signals for display to the display means 372 based on an instruction of the information processing means 380. The input means 370 is not limited to a keyboard or mouse, but may for example comprise a tablet or other input device.

The similarity calculation device 30 is provided with a recording media mounting unit 378 into which can be removably inserted recording media 377, and a recording media interface 379 (which may comprise the functions of technical document group input means, technical information input means, or output means), which records and reads various kinds of information onto and from recording media 377. The recording media 377 is removably insertable recording media for magnetic recording, optical recording, or other recording, of which memory cards and other semiconductor devices, MO media, magnetic disks, and the like are representative.

The similarity calculation device 30 is further provided with information processing means 380 which controls the entire similarity calculation device 30, and memory 381, in turn comprising ROM which stores programs executed by the information processing means 380 and various constants, and RAM which is recording means serving as a work area when the information processing means 380 executes processing.

The information processing means 380 (cluster analysis means, or similarity calculation means) can realize functions to receive information relating to technical document groups for comparison and conditions for comparison of technical documents input by a user, acquire technical documents necessary for similarity calculation from the technical document database 20, and based on a similarity computation program and similarity calculation processing program stored in storage means 384, calculate similarities between technical documents. Functions are available to display the similarity calculation results on display means 372.

The information processing means 380 (cluster analysis means) can realize functions to separate and write texts comprising words (single words, compound words, nouns, verbs, prepositions, adjectives, adverbs, particles, and the like) contained in the claims, detailed descriptions of inventions, brief explanations of drawings, abstracts, and the like within documents; mechanically extract one character, two characters, and the like to retrieve technical documents; and perform cluster analysis of the retrieved technical documents by each technical information.

The information processing means 380 (cluster analysis means) can realize functions to perform cluster analysis, using items included in the bibliographic particulars and the like (IPC symbol or other classification, date of filing, filing number, applicant names, inventors, whether an examination has been requested, whether there are amendments, whether there is domestic priority, whether there have been filings in other countries, whether there have been reasons for rejection, registration date, registration number, and the like).

The information processing means 380 (similarity calculation means) can realize functions to calculate the ratio of the number of intermixed clusters containing technical documents in both a first technical document group and a second technical document group to the total number of clusters obtained from cluster analysis results, to calculate the similarity between technical document groups.

Instead of having the information processing means 380 execute all of this processing, the objects of this invention can be achieved by distributing execution among a plurality of processing devices.

The similarity calculation device 30 is further provided with a hard disk or other recording means 384, capable of recording various constants related to processing of the similarity calculation device 30, attribute information employed in communication connection to communication devices on a network, URLs (Uniform Resource Locators), gateway information, DNS (Domain Name System) and other connection information, information related to enterprise management, information related to patents, patent documents, technical reports, keywords, technical information, and other kinds of information; a recording means interface 385 (which may comprise the functions of technical document group input means, technical information input means, or output means), which reads information recorded in the recording means 384 and writes information to the recording means 384; and a calendar/clock 390 which keeps time.

The various peripheral circuits, including the information processing means 380, display interface 373, memory 381, recording means interface 385, calendar/clock 390, and the like within the similarity calculation device 30 are connected by a bus 399, and in the information processing means 380, functions to control the various peripheral circuits based on a program being executed can be realized.

The transmission/reception means 365, recording media interface 379, recording means interface 385, and other technical information input means can input the first technical document group and the second technical document group which are to be compared.

The transmission/reception means 365, input means 370, input interface 371, recording media interface 379, recording means interface 385, and other technical information input means can input keywords, IPC symbol, and other technical information.

The transmission/reception means 365, display interface 373, recording means interface 385, recording media interface 379, printer interface and other output means can output similarities calculated by the similarity calculation means to recording means, display means, or communication means.

Cases are considered in which the database 20 shown in Fig. 1 is recorded on the recording means 384, is provided in the form of CD-ROM, CD-RW, DVD, M0, or other recording media 377, and is acquired from other communication devices via a communication network 364.

Further, the above-described similarity calculation device 30 can be realized using a personal computer, workstation, or various other types of computer. Moreover, implementation is possible by connecting computers to a network and distributing functions.

The similarity between technical documents as calculated by a similarity calculation device or similarity calculation program of this invention is a numerical value calculated by means of macro-scope comparisons, based on prescribed keywords, IPC symbol and the like, between a first technical document group (technical document group A) and a different second technical document group (technical document group B); this numerical value is used as an index to indicate the extent to which technical document groups are technically related.

The first technical document group (technical document group A) and the second technical document group (technical document group B) are assumed to be collections of technical documents each having some specific attributes.

In this invention, by calculating a numerical value as an index to qualitatively evaluate the degree of similarity between the technical content described in a first technical document group (technical document group A) of patent publications filed by company A or technical reports issued by company A, and the technical content described in a second technical document group (technical document group B) of patent publications filed by company B or technical reports issued by company B, the technical documents can be easily compared.

In the embodiment explained below, the similarity is defined as having a greater value for greater degrees of similarity between the technical content described in the first technical document group (technical document group A) and the second technical document group (technical document group B) .

In this invention, computations are performed such that $0 \leq$ similarity $\leq 1$, such that even when different conditions are set when calculating similarities, it is possible to directly compare the calculated similarity between a first technical document group (technical document group A) and a second technical document group (technical document group B), and the calculated similarity between a third technical document group (technical document group C) and a fourth technical document group (technical document group D). However, the range of values which similarities can take is not limited to this range.

Fig. 3 shows the configuration of technical documents contained in technical document group A and technical document group B.

As indicated in the figure, technical document group A comprises M technical documents A1, A2, A3, ..., AM, while technical document group B comprises N technical documents B1, B2, B3, ..., BN.

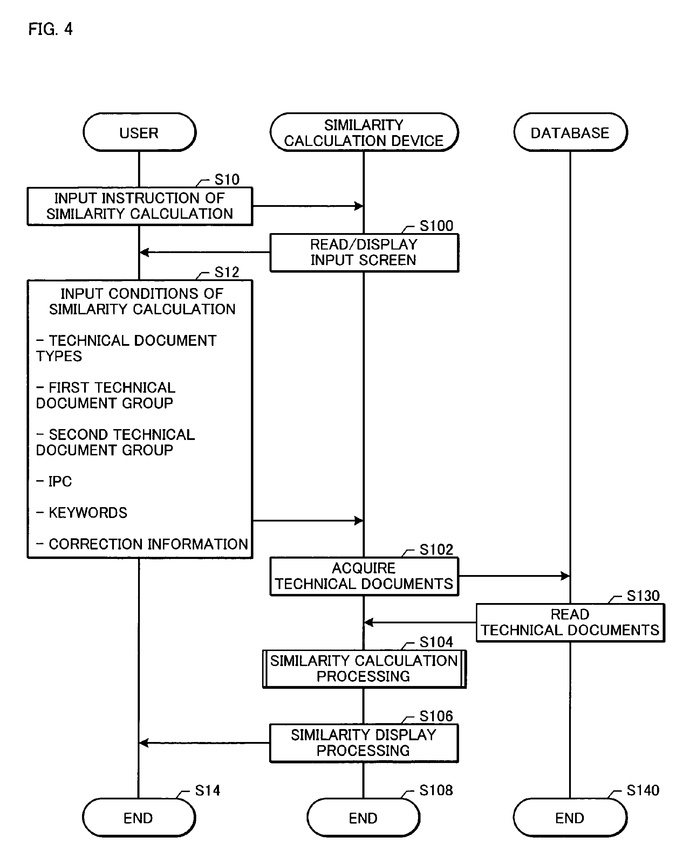

Fig. 4 is a flowchart showing similarity display processing.

As indicated in the figure, when the user intends to compare the technical document groups and survey the extent of similarity of the technical content, in S10, "input instruction of similarity calculation" (hereafter abbreviated to "S10" and the like), the user operates the keyboard, mouse, or other input means 370 of the similarity calculation device 30 to input a similarity calculation instruction, causing subsequent processing to be performed.

In S100, "read/display input screen", the similarity calculation device 30 reads display information for the input screen for various conditions relating to similarity calculations from the recording means 384, based on the similarity calculation instruction, and displays the input screen with conditions necessary for the similarity calculation on the display means 372, based on the display information.

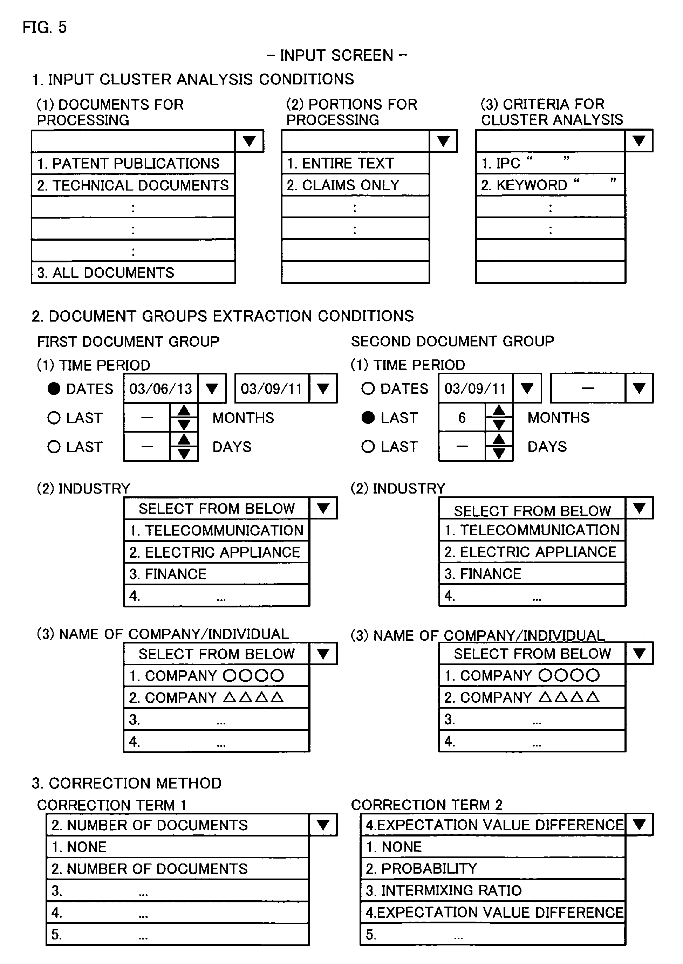

Fig. 5 shows a display example of an input screen for similarity calculation.

As indicated in the figure, the input screen displays information specifying extraction conditions for the first technical document group and the second technical document group to be compared, and information relating to specification of keywords, IPC symbol, and other technical information. The user can input various items based on this display screen.

At the portion to input conditions for cluster analysis, patent publications, technical reports, and other documents for processing can be input. Also, settings indicating the portions for processing, whether the entire text, only the claims, and the like, arid various conditions for processing such as criteria for cluster analysis, including IPC symbol, keywords and the like can be input. Further, as the conditions for extraction of document groups, items for input of the period of filing dates for patent publications, industry descriptions, names of enterprises and individuals which are document sources, and the like are displayed. The user can easily input conditions for similarity calculations and select the desired calculation conditions among a plurality of calculation conditions set in advance, based on the input screen shown in Fig. 5.

In Fig. 5, a portion is provided for input of a correction method to correct the intermixed cluster ratio according to the purpose of the similarity calculation.

For example, as a correction term 1, the user can input a correction condition to correct the similarity based on a value determined according to the quantity of technical documents contained in each intermixed cluster.

And as a correction term 2, the user can input a correction condition for correction of the similarity value based on a value determined according to the extent of intermixing of the technical documents of the first technical document group and the technical documents of the second technical document group contained in each intermixed cluster.

In this invention, as a correction method in accordance with the extent of intermixing with technical documents, a correction method can be selected according to the "probability of the number of technical documents". In this correction method, the sum, for each intermixed cluster, of the correction values proportional to the $\gamma$th power (where $0 < \gamma$) of the probability of retrieving m technical documents from among the first technical document group and n technical documents from among the second technical document group is calculated, and the result of dividing this sum by the total number of clusters is used to correct the similarity.

In this invention, a correction method in accordance with the "technical document intermixing ratio" can be selected. In this correction method, the sum is calculated for each intermixed cluster of a correction value proportional to the $\zeta$th power (where $0 < \zeta$) of the ratio of a composition ratio and an intermixing ratio, for the composition ratio N/M of the number of technical documents M contained in the first technical document group and the number of technical documents N contained in the second technical document group, and for the intermixing ratio n/m of the number of technical documents m of the first technical document group to the number of technical documents n of the second technical document group contained in each intermixed cluster obtained as a result of cluster analysis; this sum is divided by the total number of clusters to perform similarity correction.

In this invention, a correction method can be selected according to the "difference in expectation values of technical documents". In this correction method, the probability of retrieving a technical document of the first technical document group from the technical document group combining the first technical document group and the second technical document group is multiplied by the number of technical documents contained in each intermixed cluster resulting from the cluster analysis to compute the expectation value of retrieving a technical document of the first technical document group, and the difference between this expectation value and the number of technical documents of the first technical document group contained in each intermixed cluster is calculated as the expectation value difference; correction values taking the negative of this correction value difference as the exponent for an arbitrary constant $\xi$ (where $1 < \xi$) are summed for each intermixed cluster, and the result is divided by the number of all clusters to perform similarity correction.

In S12 "input conditions of similarity calculation" shown in Fig. 4, the user inputs, via the input means 370, based on guidelines displayed on the display means, patent documents, technical reports, company news letters, technical papers, and other technical document types, as well as the technical document groups for comparison, the IPC symbol or keywords to be used as conditions for the retrieval of technical documents from technical document groups for which cluster analysis is performed, and the correction information in accordance with the purpose of the similarity calculation.

In S102, "acquire technical documents", the information processing means 380 specifies the database to be searched based on the technical document type (for example, patent documents) input by the user, and outputs, to the specified database, acquisition information for the technical document groups based on specification, input by the user, of the technical document groups (for example, technical document group A for company A and technical document group B for company B).

In S130, "read technical documents", the technical document database 20 reads technical documents retrieved from the database based on the technical document type, technical document groups and the like acquired from the similarity calculation means 30, and transmits the documents to the similarity calculation device 30.

In S104, "similarity calculation processing", the similarity calculation device 30 selects technical documents having the IPC symbol and keywords specified by the user from among the technical document groups acquired from the database 20 (for example, technical document group A for company A and technical document group B for company B), and performs clustering.

An intermixed cluster is defined as a cluster in which, as a result of cluster analysis, technical documents belonging to technical document group A and technical documents belonging to technical document group B are intermixed. In this invention, similarity is calculated based on the fraction of intermixed clusters existing among all clusters.

Depending on the purpose for which the similarity is to be used, corrections can be performed according to the number of technical documents contained in each intermixed cluster, the intermixing probability, the intermixing ratio, or a combination of these.

In S106, "similarity display processing", the similarity calculation device 30 displays the calculated similarity on the display means 372, to notify the user. In S106, instead of displaying the similarity on the display means 372, the calculated similarity may be output and transmitted to another communication device via the transmission/reception means 365 and communication network 10, or may be output and recorded to the recording means 384 via the recording means interface 385, or may be output and recorded on recording media 377 via the recording media interface 379. Further, the calculated similarity may be output to printing means via a printer interface for printing (not shown).

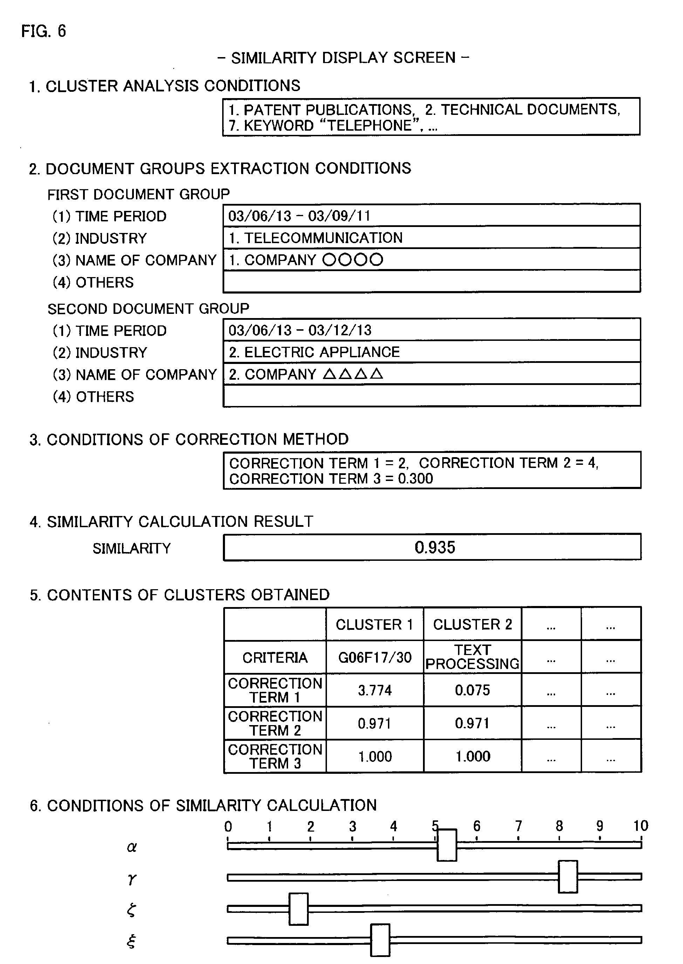

Fig. 6 shows a display example of a similarity display screen to notify the user of similarities calculated by the similarity calculation device 30.

As shown in the figure, information input by the user to specify and extract technical document groups, as well as criteria for use in cluster analysis of keywords, IPC symbols and other technical information, and input information for correction methods and the like, are displayed on the similarity display screen for the purpose of confirmation.

In addition, as a correction term 3, the user can for example input to the similarity display screen, for each cluster, correction conditions for performing arbitrary weighting, with attention paid to prescribed patent classifications and keywords when performing cluster analysis. In the example shown, a numerical value of "1.000" is set as the numerical value for correction term 3.

Portions are also provided in the similarity display screen to display similarity calculation results, slide bars for continuously (without steps) modifying similarity calculation conditions such as $\alpha$, $\gamma$, $\zeta$, $\xi$, and the like to correct similarities, and the content of analyzed clusters for use in confirming correction terms for each cluster.

The user can freely modify the similarity calculation conditions while viewing calculated similarities. When the user operates a slide bar, the information processing means 380 judges the completion of the slide bar operation based on the time measured by the calendar/clock 390. Then the processing executed by the information processing means 380 branches to S104, the similarities are again calculated, and the similarity calculation results are displayed on the similarity display screen.

Similarity calculation processing ends at S14, "end", S108, "end", and S140, "end", in Fig. 4.

Cluster analysis of technical documents in this invention entails classification of technical documents using keywords, IPC symbols and the like, when calculating a "similarity" for use in macro-scope comparisons of a first technical document group (group A) and a second technical document group (group B).

While creating this invention, when an attempt was made to obtain a panoramic view of two technical document groups for comparison, when the two technical document groups were separate, calculations were extremely complicated. However, it was thought that calculations would be simplified if the two were "mixed" and arranged in order, and so the initiative was taken in "mixing" the two. And as expected, this situation was found to be well-suited to similarity calculations. After mixing the two technical document groups, upon performing classification through cluster analysis, clusters (intermixed clusters) existed which contained component elements (technical documents) of both technical document groups, and the fraction of the intermixed clusters relative to the number of all clusters was found to be close to the similarity, in terms of our own normal perception.

First, the technical documents of both the first technical document group and of the second technical document group are mixed, as described above, to obtain a single group.

The group of mixed technical documents is analyzed into small collections (called clusters) of technical documents by some classification method. Suppose that a certain cluster contains m technical documents belonging to the first technical document group, and n technical documents belonging to the second technical document group.

"Cluster analysis" is here defined as the "dividing into collections" of technical documents based on IPC (International Patent Classification) symbols, or according to whether the technical document contains a prescribed keyword.

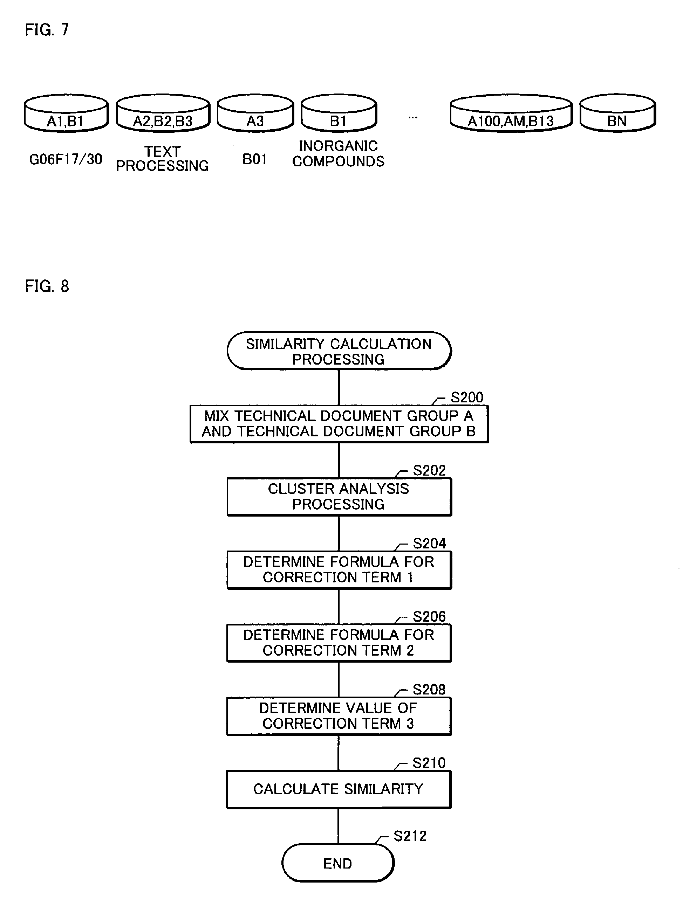

Fig. 7 shows the configuration of individual clusters after cluster analysis of a technical document group using a similarity calculation device of this invention.

For example, as shown in Fig. 7, when there exist "patent document A1" in the first technical document group and "patent document B1" in the second technical document group as technical documents classified into the IPC symbol "G06F 17/30", the IPC "G06F 17/30" cluster contains the elements "patent document A1" and "patent document B1".

Further, when, as technical documents containing the locution "text processing" as a keyword, "technical document A2" exists in the first technical document group and "technical document B2" and "technical document B3" exist in the second technical document group, the cluster for the keyword "text processing" comprises the elements "technical document A2", "technical document B2", and "technical document B3".

There are two approaches to cluster analysis methods; depending on the attributes of individual technical documents in a technical document group, as follows.

1. In the case of attributes for which there are external criteria (defined as attribute type 1), clusters can be configured using these attributes. For example, in terms of technical documents which are patent publications or the like, the filing date, IPC symbol, and other attributes are determined unambiguously.

2. When attributes are determined through internal relations (defined as attribute type 2), clusters must be formed through multivariate analysis (cluster analysis) or other means. For example, because of the difficulty in applying an external criterion to abstracts, claims, or other textual components in technical documents which are patent publications, micro-scope similarity between documents is separately defined, and clusters are formed using the results of multivariate analysis based on such definitions. By using the TFIDF method or other methods in general use for micro-scope similarities between documents, arbitrary intrusion of the analyzer can be prevented.

The information processing means 380 or other cluster analysis means retrieves technical documents containing the technical information input via the technical information input means for the technical documents contained in the first technical document group and the second technical document group, and performs cluster analysis of the retrieved technical documents for each technical information.

In embodiments of this invention, an intermixed cluster is defined as follows.

In the IPC "G06F 17/30" cluster shown in Fig. 7, the "patent document A1" belonging to technical document group A and the "patent document B1" belonging to technical document group B are intermixed. A cluster in which a technical document belonging to technical document group A and a technical document belonging to technical document group B are intermixed is called an intermixed cluster.

In embodiments of this invention, a non-intermixed cluster is defined as follows.

As for example shown in Fig. 7, "patent document A3" of technical document group A exists as a technical document classified as IPC "B01"; but when there exist no technical documents classified as IPC "B01" in technical document group B, the IPC "B01" cluster contains only the element "patent document A3".

As shown in Fig. 7, when technical documents containing for example the locution "inorganic compounds" as a keyword do not exist in technical document group A, but exists as "technical document B1" in technical document group B, the cluster for the keyword "inorganic compounds" contains only the element "technical document B1".

Thus a cluster in which technical documents belonging to technical document group A and technical documents belonging to technical document group B are not intermixed is defined as a non-intermixed cluster.

Fig. 8 is a flowchart showing similarity calculation processing.

When processing performed by the information processing means 380 advances to S104 in Fig. 4, the processing by the information processing means 380 branches to S200, and the processing of S200 and beyond is executed.

The information processing means 380 of the similarity calculation device 30, in S200, "mix technical document group A and technical document group B", intermixes the technical document groups acquired from the database in S102, "acquire technical documents" (for example, a first technical document group for company A and a second technical document group for company B), and performs processing to obtain a single technical document group.

In S202, "cluster analysis processing", the information processing means 380 performs cluster analysis processing based on keywords, IPC symbols, or other technical information. Then, in S204, "determine formula for correction term 1", upon input by the user of an instruction to correct the similarity according to the quantity of technical documents contained in each intermixed cluster, the information processing means 380 performs processing to select the formula for the correction term based on this instruction. Here, processing is performed to substitute a prescribed formula into correction term 1, according to the content of the correction.

The correction term 1 is a correction term used to correct the similarity with weighting applied such that the greater the number of technical documents contained in an intermixed cluster, the more important the cluster is regarded as being, and the higher the similarity becomes.

When correction of the similarity according to the number of technical documents contained in an intermixed cluster is not performed, the substitution correction term 1 = 1 (a constant) is made.

In S206, "determine formula for correction term 2", when the user has input an instruction to correct the similarity according to the state of mixing of the technical document group A and the technical document group B in each intermixed cluster, the information processing means 380 performs processing to select the formula for the correction term based on this instruction. Here, processing is performed to substitute the prescribed formula for the correction term 2 according to the content of the correction.

Correction term 2 is a correction term for performing similarity correction with weighting such that, the closer to a prescribed value the fraction of technical documents contained in an intermixed cluster, the more important the cluster is regarded as being, and the higher the similarity becomes.

When the similarity is not corrected according to the state of mixing of technical documents contained in an intermixed cluster, correction term 2 = 1 (a constant) is substituted.

In S208, "determine value of correction term 3", when the user has input an instruction to correct the similarity with arbitrary weighting focusing on prescribed patent classifications and keywords during cluster analysis, the information processing means 380 performs the selection of the formula for the correction term based on this instruction. Here, processing is performed to substitute a prescribed value for correction term 3 according to the content of the correction. When there is no particular need to focus on prescribed patent classifications or keywords during cluster analysis, correction term 3 = 1 (a constant) is substituted.

In S210, "calculate similarity", the information processing means 380 multiplies each of the correction terms, which are correction term 1, correction term 2, and correction term 3, for each intermixed cluster, and calculates the sum. In order to further standardize the result, this value is divided by the total number of clusters to calculate the similarity.

In S212, "end", the subroutine for similarity calculation processing ends, and execution returns to the original processing.

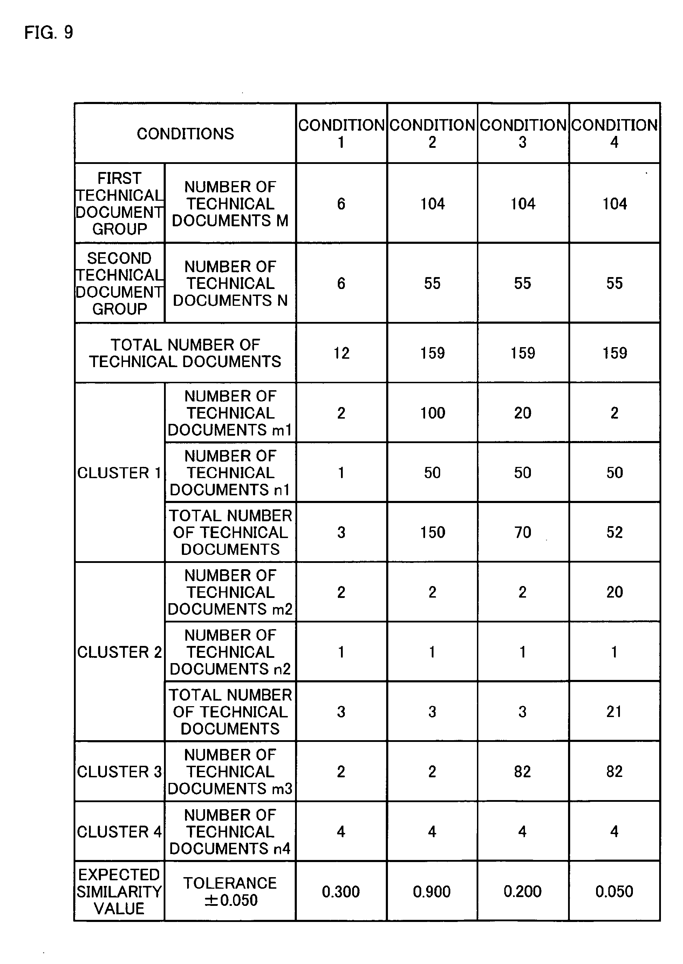

Fig. 9 shows the setting conditions used in similarity calculations.

Fig. 9 is a table showing the number of technical documents existing in a first technical document group and a second technical document group for comparison and in each of clusters 1 through 4, when the technical documents of the two groups are analyzed into four clusters. The "expected similarity" values in the right-hand column of the table indicates the similarity values expected to be calculated for each of the conditions 1 through 4 as a result of a hearing conducted by a plurality of specialists, who judged the similarities of the technical documents. The range of tolerance thought to be possible for the expected similarity values is, as indicated in the figure, tolerance range = ±0.050 approximately.

Hence when similarities are calculated using a similarity calculation device of this invention, if a similarity within the tolerance range indicated in Fig. 9 is calculated, the result indicates that optimal comparison of technical documents is being performed.

Basic type 1: Example of comparison of similarity (basic type 1) when correction terms are not considered Below, an example of calculation of basic similarity (basic type 1) not using correction terms is illustrated. This example of calculation of similarity (basic type 1) uses an intermixed cluster extraction method to compute the similarity of technical documents.

It is thought that the extent to which the technical content of the first technical document group is similar to the technical content of the second technical document group (the magnitude of the similarity value) will be proportional to the "number of intermixed clusters".

In order to set the similarity to a value in the range 0 ≤ similarity ≤ 1, for example the "number of intermixed clusters" is divided by the "total number of clusters" which is the "sum of the number of intermixed clusters and the number of non-intermixed clusters", and the following equation (1) for the similarity between the technical document groups is obtained.

A similarity calculation method which considers intermixed clusters is defined as an intermixed cluster extraction method. Equation (1) shown below is the most basic approach. In equation (1) below, an example is shown of calculation, as the similarity, of the ratio of the number of intermixed clusters containing technical documents in both the first technical document group and the second technical document group to the total number of clusters obtained as a result of cluster analysis (hereafter called the intermixed cluster ratio). Hence methods of calculating the ratio of the number of intermixed clusters to the total number of clusters are not limited to the following equation (1).

$$\text{Similarity (basic type 1)} = \frac{1}{\text{total number of clusters}} \sum_{\text{cluster}=1}^{\text{total number of clusters}} \delta$$

$$= \frac{\text{number of intermixed clusters}}{\text{total number of clusters}}$$

$$\ldots (1)$$

Here $\delta = 1$ for an intermixed cluster, 0 for a non-intermixed cluster.

As explained above, the similarity value is a numerical value indicating the degree of similarity between the technical content described in a first technical document group, and the technical content described in a second technical document group.

The number of intermixed clusters is a numerical value indicating the number of clusters in which technical documents belonging to the first technical document group and technical documents belonging to the second technical document group are intermixed.

The total number of clusters is a numerical value indicating the total number of clusters in which there exist technical documents of the first technical document group or technical documents of the second technical document group.

Below, calculation results when using a similarity (basic type 1) formula are explained.

When prescribed keywords, IPC symbols or the like are used in cluster analysis of a first technical document group and a second technical document group, if the total number of clusters resulting is 10 and the number of intermixed clusters is 3, then the similarity (basic type 1) is computed to be 3/10 = 0.3.

If the total number of clusters is 4, and the number of intermixed clusters is 2, then the similarity (basic type 1) is computed to be 2/4 = 0.5.

By performing cluster analysis using keywords, IPC symbols or the like of the technical documents contained in the first technical document group and the second technical document group, and computing, as the similarity, the ratio of the number of intermixed clusters to the total number of clusters, a value can be calculated as the basic portion of the similarity between the two technical document groups.

Further, when calculating the similarity, the value of the similarity calculated by dividing the number of intermixed clusters by the total number of clusters can be set in the range $0 \leq$ similarity $\leq 1$.

Below, advantageous results of the invention when using similarities (basic type 1) are explained.

By using keywords, IPC symbols and the like contained in a first technical document group and a second technical document group to perform cluster analysis, and by calculating the similarity based on the ratio of the number of intermixed clusters to the total number of clusters analyzed, it is possible to compute, by simple means, an index indicating the degree of technical similarity between two technical do cument groups. The similarity calculated here was found to agree well with the extent of similarity, as considered by us in terms of common-sense, between two technical document groups.

In this invention, the values of calculated similarities are computed so as to be in the range $0 \leq$ similarity $\leq 1$, so that an index can be calculated which is constant regardless of the total number of clusters or the number of intermixed clusters, and regardless of the number of technical documents contained in the technical document groups.

Further, a similarity comparing a first technical document group and a second technical document group under more numerous conditions can be compared directly with a similarity comparing the first technical document group with a third technical document group.

Basic type 2: Example of comparison of similarity (basic type 2) when correction terms are considered
Below, an example of calculation of basic similarity (basic type 2) using correction terms is illustrated. This example of calculation of similarity (basic type 2) adds correction terms 1 to 3 to the above-described similarity calculation example (basic type 1).

When the above equation (1) is used to calculate similarity, there is the advantage that a similarity value proportional to the number of intermixed clusters can be calculated extremely rapidly using a simple formula.

In the simplest case of equation (1) above, for example, clusters containing numerous technical documents and clusters containing few technical documents have equal contributions. As is clear from this, equation (1) has the drawback that the number of technical documents in individual clusters is not taken into account. Hence in equation (1), the same similarity is calculated whether numerous technical documents are contained in an intermixed cluster or only two technical documents are contained therein, and so the problem may arise that the calculated result will vary from what we think of, in terms of common sense, as the degree of similarity.

In addition to the number of technical documents contained in an intermixed cluster, there may be cases in which a calculated similarity value must be corrected according to the state of mixing of the technical documents of the first technical document group and the technical documents of the second technical document group contained in each intermixed cluster (proportion of technical documents of the first technical document group and technical documents of the second technical document group), or with arbitrary weighting applied when there is a need to focus on specific patent classifications or keywords.

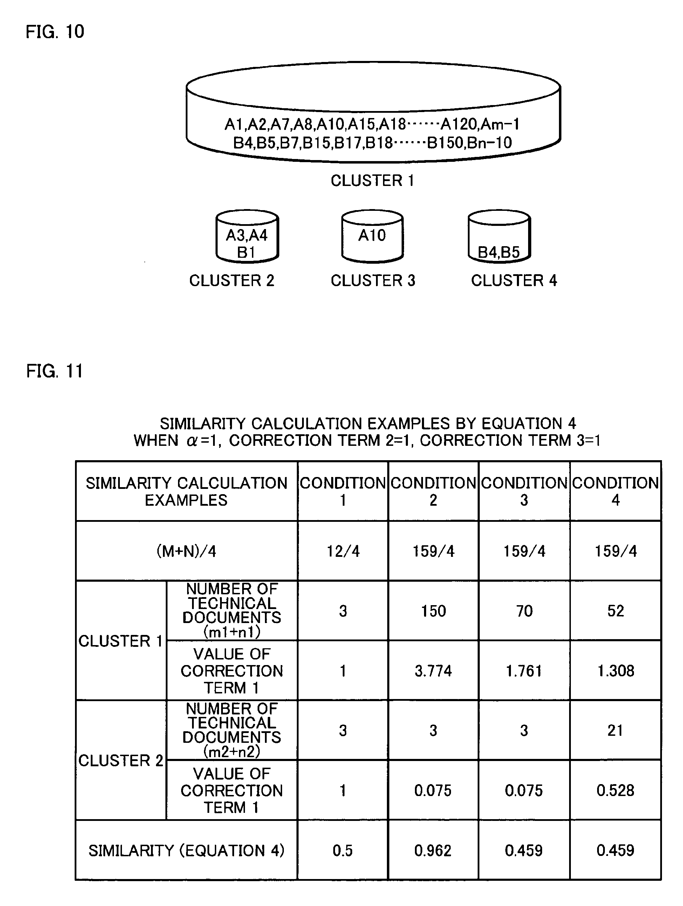

Fig. 10 shows the circumstances of numerous technical documents being contained within an intermixed cluster 1.

In the example of Fig. 10, numerous technical documents are contained in cluster 1 (an intermixed cluster), so that the cluster is thought to be important, and the contribution may be made greatest during similarity calculation.

Other clusters (for example, cluster 2, cluster 3, cluster 4, and the like) contain smaller numbers of technical documents and so are thought not to be important, and so it is desirable that the contributions of such clusters be much smaller than that of cluster 1.

In the case of circumstances such as those of the example in Fig. 10, there are cases in which the influence of cluster 2, cluster 3, and cluster 4 should be reduced compared with that of cluster 1. When the existence of clusters containing few technical documents is not ignored, the calculated similarity value falls to 0.5.

Hence as shown in equation (2) below, the $\delta$ in equation (1) (where $\delta=1$ when the cluster is an intermixed cluster, and in other cases $\delta=0$) is multiplied by correction terms. An appropriate standardizing factor is necessary to ensure that the range of similarity values does not exceed $0 \leq$ similarity $\leq 1$ as a result of this correction.

$$\text{Similarity (basic type 2)} = \frac{1}{\text{total number of clusters}}$$
$$\times \sum_{\text{cluster}=1}^{\text{total number of clusters}} \{(\text{correction term}\,1) \times (\text{correction term}\,2) \times (\text{correction term}\,3) \times \delta\}$$

$$\ldots (2)$$

Here $\delta = 1$ for an intermixed cluster, 0 for a non-intermixed cluster.

The correction term 1 in equation (2) is a correction term for calculating the similarity according to the number of technical documents contained in an intermixed cluster. This correction term 1 is a correction term used to correct the similarity with a heavier weighting such that the larger the number of technical documents contained in an intermixed cluster, the more important the cluster becomes, and the higher is the similarity.

Conversely, correction term 1 can be a correction term to correct the similarity with a lighter weighting such that the smaller the number of technical documents contained in an intermixed cluster, the less important is the cluster, so that the similarity is lower.

The correction term 1 can also be a correction term which uses another formula to calculate a first correction value which takes different values according to the number of technical documents contained in each intermixed cluster.

The correction term 2 in equation (2) is a correction term used to calculate the similarity according to the state of mixing of technical documents A and technical documents B in an intermixed cluster (the fractions of technical documents A and technical documents B).

The correction term 2 is a correction term to correct the similarity with a heavier weighting such that the closer the number of technical documents contained in an intermixed cluster is to a prescribed number, the more important the cluster becomes, and the higher is the similarity.

The correction term 2 is also a correction term enabling calculation of a second correction value, which can take values according to the state of mixing of technical documents of the first technical document group and technical documents of the second technical document group contained in each intermixed cluster.

As indicated in equation (2), the sum of correction term 1, correction term 2, or correction term 3 is computed for all intermixed clusters, and this sum is divided by the total number of clusters to compute the similarity.

The meaning of the "state of mixing" of technical documents used when calculating correction term 2 is as follows.

This is a correction term in which, focusing on the state of mixing of technical documents of the first technical document group and technical documents of the second technical document group contained in a certain intermixed cluster. When both types of technical document are well-mixed, that is, when there is no bias toward either type of technical document, the cluster is thought to be important and a heavy weighting is assigned; whereas when technical documents are not well-mixed, that is, when there is a bias toward a greater number of technical documents from one of the technical document groups, the cluster is thought not to be important, and a lighter weighting is assigned.

In other words, this is a correction term assigned a heavier weighting in the case where the number of technical documents of the first technical document group and the number of technical documents of the second technical document group contained in the intermixed cluster are close to the expectation value when documents are retrieved at random from the first technical document group and the second technical document group, whereas assigned a lighter weighting when the number is far from the expectation value.

The correction term 3 is a correction term used to calculate the similarity with an arbitrary weighting assigned when there is a desire to focus on a specific patent classification or keyword. This term is provided separately by a user who compares technical document groups, and so here the constant "1" is substituted without considering further details.

Application type 1: Example of calculation of correction term 1 (1)

$$
\text{Correction term 1(1)} = \frac{(\text{number of technical documents in cluster})^{\alpha}}{(\text{standardizing factor})}
$$

$$
= \frac{(\text{number of technical documents in cluster})^{\alpha}}{\dfrac{1}{\text{total number of clusters}} \sum_{\text{cluster}=1}^{\text{total number of clusters}} (\text{number of technical documents in cluster})^{\alpha}}
$$

Taking correction term 1 (1) into account, an example of similarity calculation (equation (4)) is as follows.

$$
\text{Similarity} = \frac{1}{\text{total number of clusters}}
$$
$$
\times \sum_{\text{cluster}=1}^{\text{total number of clusters}} \left\{ (\text{correction term 1}) \times (\text{correction term 2}) \times (\text{correction term 3}) \times \delta \right\}
$$

$$
= \frac{1}{\text{total number of clusters}}
$$
$$
\times \sum_{\text{cluster}=1}^{\text{total number of clusters}} \left\{ \frac{(\text{number of technical documents in cluster})^{\alpha}}{\dfrac{1}{\text{total number of clusters}} \sum_{\text{cluster}=1}^{\text{total number of clusters}} (\text{number of technical documents in cluster})^{\alpha}} \right.
$$
$$
\left. \times (\text{correction term 2}) \times (\text{correction term 3}) \times \delta \right\}
$$

$$
\ldots (4)
$$

In correction term 1 (1), in order to perform correction such that the similarity takes on a large value according to the number of technical documents contained in the intermixed cluster, the $\alpha$th power of the "number of technical documents within the cluster" (where $0 < \alpha$) is placed in the numerator. And in order to ensure that the range of the calculated similarity is $0 \leq$ similarity $\leq 1$, a standardizing factor is placed in the denominator in the formula for correction term 1 (1).

In computing the correction term 1 (1) in equation (4), the average value of the number of technical documents within all clusters is included, as a standardizing factor, in order to prevent the similarity value from exceeding one even when there is a large number of technical documents within a cluster placed in the numerator, and in order to provide a criterion for judging the quantity of technical documents. The standardizing factor may also be obtained by calculating the sum of the $\alpha$th power of the number of technical documents in all clusters and dividing the sum by the total number of clusters. It is sufficient that this standardizing factor ensures that $0 \leq$ similarity $\leq 1$, and the factor is not limited to the formula of equation (4).

Further, when there is a need to prevent intermixed clusters containing small numbers of technical documents from substantially affecting the similarity calculation result, the numerator exponent $\alpha$ is set to $\alpha > 1$.

When there is a desire to simply increase or decrease the similarity according to the number of technical documents in clusters, $\alpha$ is set to one.

When the similarity is to be calculated according to the number of technical documents contained in clusters, and there is a need to reduce the effect of the similarity calculation effect due to the existence of clusters containing large numbers of technical documents, it is sufficient to set $0 < \alpha < 1$.

Below, effect resulting from the numerator and denominator of the formula for "application type 1: correction term 1 (1)" is explained.

As explained in equation (4), the "number of technical documents in clusters" is provided in the numerator of correction term 1 (1), so that a similarity proportional to the number of technical documents in clusters can be calculated.

Further, the "standardizing factor" is provided in the denominator of correction term 1 (1), so that it can be assured that $0 \leq similarity \leq 1$. As the standardizing factor in the correction term 1 (1), the average value of the number of technical documents in all clusters is used, so that the relative number of technical documents can be calculated with reference to the average value of the number of technical documents in all clusters.

Further, by setting the exponent $\alpha$ in the numerator to $\alpha>1$, the effect of those intermixed clusters in which there are few technical documents can be prevented from greatly influencing the similarity calculation result. And by setting the numerator exponent to $\alpha=1$, it is possible to simply increase or decrease the similarity according to the number of technical documents in clusters (simple quantity comparison). And by setting the numerator exponent to $0<\alpha<1$, the effect on the similarity calculation result of the existence of clusters containing large numbers of technical documents can be reduced.

Below, a calculation example is presented for a case of substituting the conditions of Fig. 9 into the formula (equation (4)) for "application type 1: correction term 1 (1)". The calculation results are presented in a table (Fig. 11) describing the similarity calculation example (calculation result for substitution of conditions 1 through 4 into correction term 1 (1)), adopting correction term 1 (1).

Below, the results of trial calculations of similarities setting conditions 1 through 4 as the conditions for comparison of technical document groups are presented, when only correction term 1 (1) is considered and other correction terms are not included (that is, when correction term 2 = 1, correction term 3 = 1), and a simple comparison of the number of technical documents contained in each intermixed cluster is performed (that is, when $\alpha=1$).

The following equation (5) is used to explain calculation results for calculation example 4-1 (with condition 1 substituted into equation (4)).

In the case of condition 1, the number of technical documents contained in each intermixed cluster (in the case of this embodiment, cluster 1 and cluster 2) is three. Hence it is expected that the effect of similarity correction due to the number of technical documents contained in clusters will be small.

$$
\begin{aligned}
\text{Similarity (equation (4), condition 1)} &= \frac{1}{\text{total number of clusters}} \\
&\quad \times \sum_{cluster=1}^{\text{total number of clusters}} \left\{ (\text{correction term 1}) \times (\text{correction term 2}) \times (\text{correction term 3}) \times \delta \right\} \\
&= \frac{1}{\text{total number of clusters}} \\
&\quad \times \sum_{cluster=1}^{\text{total number of clusters}} \left\{ \frac{(\text{number of technical documents in cluster})^1}{\frac{1}{\text{total number of clusters}} \sum_{cluster=1}^{\text{total number of clusters}} (\text{number of technical documents in cluster})^1} \times 1 \times 1 \times \delta \right\} \\
&= \frac{1}{4}\left( \frac{3}{(3+3+2+4)/4} + \frac{3}{(3+3+2+4)/4} \right) \\
&= 0.5
\end{aligned}
$$

$$
\cdots (5)
$$

The similarity value (with condition 1 substituted in equation (4)) calculated using the above equation (5), 0.5, agrees with the similarity calculation result using equation (1); and when correction term 1 (1) is inserted also, there is no substantial deviation from the similarity judged by ourselves in terms of common-sense. Moreover, the numbers of technical documents within clusters are 3, 3, 2, and 4 respectively, so that there should be approximately the same contribution from all; here, the calculated similarity = 0.5 does not deviate greatly from the similarity judged by ourselves in terms of common-sense (approximately 0.30), and the requirements are essentially satisfied.

The following equation (6) is used to explain calculation results for calculation example 4-2 (with condition 2 substituted into equation (4)).

The number of technical documents contained in cluster 1 for condition 2 is significantly greater than the numbers of technical documents contained in cluster 2 through cluster 4, so that when calculating the similarity, clearly the effect of the number of technical documents contained in cluster 1 should be emphasized in calculating the similarity so as to obtain a larger value.

$$\text{Similarity (equation (4), condition 2)} = \frac{1}{\text{total number of clusters}}$$

$$\times \sum_{cluster=1}^{total\ number\ of\ clusters} \{(\text{correction term 1}) \times (\text{correction term 2}) \times (\text{correction term 3}) \times \delta\}$$

$$= \frac{1}{\text{total number of clusters}}$$

$$\times \sum_{cluster=1}^{total\ number\ of\ clusters} \left\{ \frac{(\text{number of technical documents in cluster})^1}{\frac{1}{\text{total number of clusters}} \sum_{cluster=1}^{total\ number\ of\ clusters}(\text{number of technical documents in cluster})^1} \right.$$

$$\left. \times 1 \times 1 \times \delta \right\}$$

$$= \frac{1}{4}\left( \frac{150}{(150+3+2+4)/4} + \frac{3}{(150+3+2+4)/4} \right)$$

$$= 0.962$$

$$\ldots (6)$$

The similarity value (with condition 2 substituted into equation (4)) of 0.962 calculated using the above equation (6) was corrected from a similarity of 0.5 (the similarity calculated with condition 1 substituted into equation (4)) to a similarity value of 0.962 (the similarity calculated with condition 2 substituted into equation (4)), drawn upward by the large number of technical documents contained in cluster 1.

Below, the advantageous results of equation (6) (with condition 2 substituted into equation (4)) are explained.

By means of processing to calculate equation (6), when the number of technical documents contained in a cluster is greater than the number of technical documents contained in other clusters, this number of technical documents can be made to affect the similarity calculation result. Because cluster 1 represents substantially the entire trend when calculating the similarity, this can be regarded as causing the properties of cluster 1 to act to determine the similarity.

This similarity calculation result was found to be substantially in agreement with the degree of similarity judged by ourselves in terms of common-sense.

The following equation (7) is used to explain calculation results for calculation example 4-3 (with condition 3 substituted into equation (4)).

In the case of condition 3, the sum of the numbers of technical documents contained in clusters is the same as in the case of condition 2, but the number of technical documents contained in cluster 1 alone is not exceedingly large, and so it is desirable that the effect of the number of technical documents contained in cluster 1 not be so greater as in the case of condition 2 when calculating the similarity.

$$\text{Similarity (equation (4), condition 3)} = \frac{1}{\text{total number of clusters}}$$

$$\times \sum_{cluster=1}^{\text{total number of clusters}} \left\{ (\text{correction term 1}) \times (\text{correction term 2}) \times (\text{correction term 3}) \times \delta \right\}$$

$$= \frac{1}{\text{total number of clusters}}$$

$$\times \sum_{cluster=1}^{\text{total number of clusters}} \left\{ \frac{(\text{number of technical documents in cluster})^1}{\frac{1}{\text{total number of clusters}} \sum_{cluster=1}^{\text{total number of clusters}} (\text{number of technical documents in cluster})^1} \right.$$

$$\left. \times 1 \times 1 \times \delta \right\}$$

$$= \frac{1}{4} \left( \frac{70}{(70+3+82+4)/4} + \frac{3}{(70+3+82+4)/4} \right)$$

$$= 0.459$$

$$\ldots (7)$$

The similarity value calculated using the above equation (7) (with condition 3 substituted into equation (4)) of 0.459 is the value corrected such that the number of technical documents contained in cluster 1, being somewhat smaller than that in another cluster 3, contributes hardly at all to the similarity correction.

Below, the effect of the calculation result of equation (7) (with condition 3 substituted into equation (4)) is explained.

By performing the computation processing of correction term 1 (1), even when there is a large number of technical documents in a cluster, if there is no great difference with the number of technical documents in another cluster, it is possible to keep this number of technical documents from greatly influencing the similarity calculation result.

The similarity calculation result using this equation (7) acts in a supplementary manner to greatly increase the effects of cluster 1 and cluster 3, so that there is no great deviation from the similarity judged by ourselves in terms of common-sense (approximately 0.20), and substantially the value desired is obtained.

The following equation (8) is used to explain calculation results for calculation example 4-4 (with condition 4 substituted into equation (4)).

In the case of condition 4, the sum of the number of technical documents contained in clusters is the same as for condition 3, but in this case the fractions of the first technical document group and the second technical document group contained in cluster 1 and cluster 2 are extremely unequal. Hence it is desirable that the calculated similarity not be high, despite the large number of technical documents contained in each intermixed cluster.

$$\text{Similarity (equation (4), condition 4)} = \frac{1}{\text{total number of clusters}}$$

$$\times \sum_{cluster=1}^{total\ number\ of\ clusters} \{(correction\ term\ 1) \times (correction\ term\ 2) \times (correction\ term\ 3) \times \delta\}$$

$$= \frac{1}{\text{total number of clusters}}$$

$$\times \sum_{cluster=1}^{total\ number\ of\ clusters} \left\{ \frac{(number\ of\ technical\ documents\ in\ cluster)^1}{\frac{1}{\text{total number of clusters}} \sum_{cluster=1}^{total\ number\ of\ clusters} (number\ of\ technical\ documents\ in\ cluster)^1} \right.$$

$$\left. \times 1 \times 1 \times \delta \right\}$$

$$= \frac{1}{4} \left( \frac{52}{(52+21+82+4)/4} + \frac{21}{(51+21+82+4)/4} \right)$$

$$= 0.459$$

$$\cdots (8)$$

The similarity value calculated using the above equation (8) (with condition 4 substituted into equation (4)) of 0.459 is the value corrected such that the number of technical documents contained in cluster 1 and cluster 2, being somewhat smaller than that in another cluster 3, contribute hardly at all to the similarity correction.

Below, the effect of the calculation result of equation (8) (with condition 4 substituted into equation (4)) is explained.

Through computation processing of equation (8), even when there is a large number of technical documents in a cluster, if there is no great difference with the number of technical documents in another cluster, it is possible to keep this number of technical documents from greatly influencing the similarity calculation result; however, in the case of condition 4, it is desirable, in terms of perceived results, that the similarity be a value of several percent.

Because in the case of condition 4 there may appear portions which do not agree with the perceptions of humans as a result of the processing of correction term 1 (1) alone, the correction term 2, explained below, can be useful. However, the influence of clusters 3, 1, 2 is considerable, and so the role of correction term 1 (1) is regarded as sufficient. Further, through the processing of correction term 1 (1), when there exist clusters with large numbers of technical documents, it is possible to cause the number of technical documents contained in the cluster to affect the similarity.

Fig. 11 shows a table of examples of similarity for cases in which correction term 1 (1) is adopted (calculation results with conditions 1 to 4 substituted into correction term 1 (1)).

Application type 2: Example of calculation of correction term 2 (1)

The following equation (9) for correction term 2 (1) is constructed so as to perform correction according to the probability of intermixing of technical documents within an intermixed cluster.

$$\text{Correction term 2 (1)} = \frac{(\text{intermixing probability})^{\gamma}}{(\text{maximum value of intermixing probability})^{\gamma}}$$

$$= \frac{\left(\begin{array}{l}\text{probability of retrieving m technical documents from}\\ \text{group A and n technical documents from group B}\end{array}\right)^{\gamma}}{\left(\begin{array}{l}\text{probability of retrieving x technical documents from}\\ \text{group A and y technical documents from group B}\end{array}\right)^{\gamma}}$$

$$= \frac{\left(\dfrac{\left(\begin{array}{l}\text{number of combinations retrieving m technical documents}\\ \text{from group A and n technical documents from group B}\end{array}\right)}{\left(\begin{array}{l}\text{number of combinations retrieving m + n technical}\\ \text{documents from a mixture of group A and group B}\end{array}\right)}\right)^{\gamma}}{\left(\dfrac{\left(\begin{array}{l}\text{number of combinations retrieving x technical documents}\\ \text{from group A and y technical documents from group B}\end{array}\right)}{\left(\begin{array}{l}\text{number of combinations retrieving m + n technical}\\ \text{documents from a mixture of group A and group B}\end{array}\right)}\right)^{\gamma}}$$

$$= \frac{\left(\dfrac{{}_{M}C_{m}\times{}_{N}C_{n}}{{}_{M+N}C_{m+n}}\right)^{\gamma}}{\text{MAX}\left(\dfrac{{}_{M}C_{x}\times{}_{N}C_{y}}{{}_{M+N}C_{m+n}}\right)^{\gamma}}$$

$$\ldots(9)$$

Here M is the number of technical documents contained in the first technical document group (group A), N is the number of technical documents contained in the second technical document group (group B), m is the number of technical documents of the first technical document group (group A) contained in a prescribed cluster, n is the number of technical documents of the second technical document group (group B) contained in the prescribed cluster, and $\gamma$ is an arbitrary constant, $\gamma > 0$.

An example of calculation of the similarity (equation (10)) taking the above correction term 2 (1) into account is shown below.

$$\text{Similarity} = \cfrac{1}{\text{total number of clusters}}$$

$$\times \sum_{cluster=1}^{\text{total number of clusters}} \left\{ (\text{correction term 1}) \times (\text{correction term 2}) \times (\text{correction term 3}) \times \delta \right\}$$

$$= \cfrac{1}{\text{total number of clusters}}$$

$$\times \sum_{cluster=1}^{\text{total number of clusters}} \left\{ (\text{correction term 1}) \times \cfrac{\left( \cfrac{_M C_m \times _N C_n}{_{M+N} C_{m+n}} \right)^{\gamma}}{\text{MAX}\left( \cfrac{_M C_x \times _N C_y}{_{M+N} C_{m+n}} \right)^{\gamma}} \times (\text{correction term 3}) \times \delta \right\}$$

$$\dots (10)$$

In correction term 2 (1) in equation (10), the $\gamma$th power (where $0<\gamma$) of the probability of retrieving m technical documents from the first technical document group (group A) and n technical documents from the second technical document group (group B) is placed in the numerator. Therefore, correction such that the similarity takes on a large value according to the probability associated with the number of technical documents of the first technical document group (group A) and the second technical document group (group B) contained in an intermixed cluster can be performed.

In order to ensure that the range of the calculated similarity is $0 \leq$ similarity $\leq 1$, for example as indicated in equation (10), the $\gamma$th power (where $0<\gamma$) of the maximum value of probability of retrieving m technical documents of the first technical document group (group A) and n technical documents of the second technical document group (group B) is placed, as a standardizing factor, in the denominator.

The standardizing factor need only be a term which can ensure that $0 \leq$ similarity $\leq 1$, and is not limited to the standardizing factor shown in equation (10).

Below, conditions for setting the exponent $\gamma$ are explained.

When it is necessary to correct the similarity value simply in proportion to the proximity of the distribution of technical documents of group A and group B contained in an intermixed cluster to the distribution when retrieving documents at random from the technical document groups A and B, the exponent $\gamma$ should be set to $\gamma=1$.

When it is necessary to correct the similarity to larger values when the distribution of technical documents of groups A and B contained in an intermixed cluster are close to the distribution when randomly retrieving from the technical document groups A and B, to emphasize importance, or when it is necessary to correct the similarity to smaller values when farther from the distribution when randomly retrieving from the technical document groups A and B, to reduce importance, the exponent $\gamma$ should be set to $\gamma>1$.

And, when it is necessary to perform correction with emphasis added even when the distribution of technical documents of groups A and B in an intermixed cluster are not close to the distribution upon random retrieval from the technical document groups A and B, the exponent $\gamma$ should be set to $0 < \gamma < 1$.

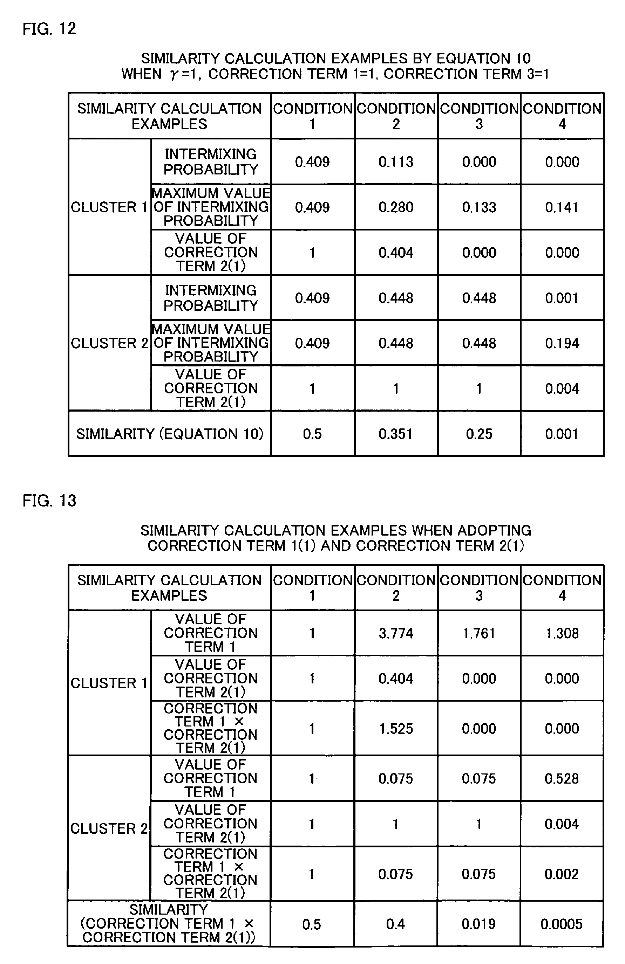

Below is shown an example of calculation when each of the conditions in Fig. 9 is substituted into the equation (10) for application type 2: correction term 2 (1). The calculation results are shown as a table of similarity calculation examples (calculation results with conditions 1 to 4 substituted into correction term 2 (1)), when the correction term 2 (1) is adopted in Fig. 12.

In the correction term 2 (1), (number of combinations retrieving m technical documents from group A and n technical documents from group B) / (number of combinations retrieving m+n technical documents from a mixture of group A and group B) is placed in the numerator. By this means, in the correction term 2 (1) it is possible to correct the similarity to a corrected value according to the bias (artificiality) in the numbers of technical documents of groups A and B contained in the intermixed cluster, to result in a small correction value when the bias is large, and a large correction value when the bias is small. In this embodiment, when the bias is large, calculation is performed such that the correction value is made smaller and the similarity will be small. When on the other hand the bias is large, the correction value is made large and the similarity will also be large.

As the standardizing factor, (number of combinations retrieving x technical documents from group A and y technical documents from group B)/(number of combinations retrieving m+n technical documents from a mixture of group A and group B) is placed in the denominator. As a result, because x and y is the combination maximizing the value of the denominator, it can be assured that the calculated similarity is in the range $0 \leq$ similarity $\leq 1$.

Further, by setting the numerator exponent $\gamma$ to $\gamma=1$, the similarity can be corrected to a value simply proportional to the closeness of the distribution of technical documents of the groups A and B contained in an intermixed cluster to the distribution upon randomly retrieving technical documents from the technical document groups A and B.

And, by setting the numerator exponent $\gamma$ to $\gamma>1$, correction can be performed to a larger value as the distribution of technical documents of the groups A and B contained in an intermixed cluster is closer to the distribution upon randomly retrieving technical documents from the technical document groups A and B. And, correction can be performed to a smaller value as the distribution is farther from the distribution upon randomly retrieving technical documents from the technical document.groups A and B.

When there is a need to perform correction with emphasis even when the distribution of technical documents of groups A and B contained in an intermixed cluster is not close to the distribution upon randomly retrieving technical documents from the technical document groups A and B, the numerator exponent $\gamma$ can be set such that $0<\gamma<1$.

The following equation (11) is used to explain calculation results for calculation example 10-1 (with condition 1 substituted into equation (10)).

When only correction term 2 (1) is considered, without considering the effect of other correction terms (that is, with correction term 1 = 1 and correction term 3 = 1), and when performing comparisons based simply on the intermixing probability (that is, when $\gamma=1$), the results of trial calculations of the similarity with the conditions for comparison of technical document groups set to conditions 1 through 4 are as follows.

As indicated in the following equation (11), in the case of condition 1 the probability of intermixing of technical documents contained in intermixed cluster 1 is calculated to be 0.409. Similarly, the ratio of intermixing of technical documents contained in cluster 2 is calculated to be 0.409.

$$= \left( \frac{{}_M C_m \times {}_N C_n}{{}_{M+N} C_{m+n}} \right) = \left( \frac{{}_6 C_2 \times {}_6 C_1}{{}_{6+6} C_{2+1}} \right) = \frac{{}_6 C_2 \times {}_6 C_1}{{}_{12} C_3} = \frac{15 \times 6}{220} = 0.409$$

$$\ldots (11)$$

On the other hand, the standardizing factor in the denominator is the maximum value of the intermixing probability for intermixed cluster 1, so that the standardizing factor is calculated to be 0.409 as shown below. In the case of condition 1, the standardizing factor for cluster 2 is also calculated to be 0.409.

Standardizing factor (condition 1, cluster 1)

$$= \text{MAX} \left( \frac{{}_M C_x \times {}_N C_y}{{}_{M+N} C_{m+n}} \right) = \text{MAX} \left( \frac{{}_6 C_x \times {}_6 C_y}{{}_{6+6} C_{2+1}} \right) = \frac{{}_6 C_2 \times {}_6 C_1}{{}_{12} C_3} = \frac{15 \times 6}{220} = 0.409$$

$$\ldots (12)$$

Hence the value of correction term 2 (1) when condition 1 is substituted into equation (12) is calculated to be correction term 2 (1) = 1. Similarly, correction term 2 (1) for intermixed cluster 2 is also calculated to be 1.

Therefore the value of correction term 2 (1) is calculated to be 1 as in equation (13) below, so that no correction in particular is performed, and the similarity is calculated to be 0.5.

$$\text{Similarity (equation (10), condition 1)} = \cfrac{1}{\text{total number of clusters}}$$

$$\times \sum_{\text{cluster}=1}^{\text{total number of clusters}} \left\{ (\text{correction term 1}) \times (\text{correction term 2}) \times (\text{correction term 3}) \times \delta \right\}$$

$$= \cfrac{1}{\text{total number of clusters}} \times \sum_{\text{cluster}=1}^{\text{total number of clusters}} \left\{ 1 \times \cfrac{\left( \cfrac{_M C_m \times _N C_n}{_{M+N} C_{m+n}} \right)^{\gamma}}{\text{MAX} \left( \cfrac{_M C_x \times _N C_y}{_{M+N} C_{m+n}} \right)^{\gamma}} \times 1 \times \delta \right\}$$

$$= \frac{1}{4} \left( \frac{0.409}{0.409} + \frac{0.409}{0.409} \right) = 0.5$$

$$\cdots (13)$$

The similarity value of 0.5 calculated using the above equation (13) (with condition 1 substituted into equation (10)) agrees with the result of similarity calculation using equation (1), without corrections. The numbers of technical documents contained in the technical document groups are six and six respectively, and the number of technical documents contained in the intermixed clusters are two and one, so that the above result substantially agrees with the degree of similarity judged by ourselves in terms of common-sense. Hence even when correction term 2 (1) is inserted, a result can be obtained within the tolerance range.

The following equation (14) is used to explain calculation results for calculation example 10-2 (with condition 2 substituted into equation (10)).

In the case of condition 2, the probability of intermixing of technical documents contained in cluster 1 is close to the ratio of the magnitudes of the first technical document group (group A) and the second technical document group (group B). Hence it is clear that when calculating the similarity, the influence of the intermixing ratio of technical documents comprised by cluster 1 should be emphasized, and the similarity should be calculated to obtain a larger value.

The following equation (14) illustrates an example of calculation of the intermixing probability in the numerator of the correction term 2 (1).

$$\text{Intermixing probability(condition 2, cluster 1)}$$

$$= \left( \frac{_M C_m \times _N C_n}{_{M+N} C_{m+n}} \right) = \left( \frac{_{104} C_{100} \times _{55} C_{50}}{_{104+55} C_{100+50}} \right) = \frac{_{104} C_{100} \times _{55} C_{50}}{_{159} C_{150}} = \frac{4598126 \times 3478761}{1.42E+14} = 0.113$$

$$\cdots (14)$$

On the other hand, the standardizing factor in the denominator is the maximum value of the intermixing probability for intermixed cluster 1, and so the standardizing factor is calculated to be 0.280, as below. In the case of condition 2, the standardizing factor for cluster 2 is also calculated to be 0.280.

$$\text{Standardizing factor (condition 2, cluster 1)}$$

$$= \text{MAX} \left( \frac{_M C_x \times _N C_y}{_{M+N} C_{m+n}} \right) = \left( \frac{_{104} C_{98} \times _{55} C_{52}}{_{104+55} C_{98+52}} \right) = \frac{_{104} C_{98} \times _{55} C_{52}}{_{159} C_{150}} = \frac{(1.52E+09) \times 26235}{1.42E+14} = 0.280$$

$$\cdots (15)$$

Hence the value of correction term 2 (1) for cluster 1 in condition 2 is calculated to be correction term 2 (1) = 0.404. And, the value of correction term 2 (1) for cluster 2 in condition 2 is calculated to be "1", so that as indicated by equation (16) below, the similarity based on correction term 2 (1) is calculated to be 0.351 (see Fig. 12).

$$\text{Similarity (equation (10), condition 2)} = \frac{1}{\text{total number of clusters}}$$

$$\times \sum_{cluster=1}^{\text{total number of clusters}} \{(\text{correction term 1}) \times (\text{correction term 2}) \times (\text{correction term 3}) \times \delta\}$$

$$= \frac{1}{\text{total number of clusters}} \times \sum_{cluster=1}^{\text{total number of clusters}} \left\{ 1 \times \frac{\left(\frac{_MC_m \times _NC_n}{_{M+N}C_{m+n}}\right)^\gamma}{\text{MAX}\left(\frac{_MC_x \times _NC_y}{_{M+N}C_{m+n}}\right)^\gamma} \times 1 \times \delta \right\}$$

$$= \frac{1}{4}\left(\frac{0.113}{0.280} + \frac{0.448}{0.448}\right) = 0.351$$

$$\ldots (16)$$

The value of 0.351 calculated using the above equation (16) (with condition 2 substituted into equation (10)) is the value affected by the intermixing probability of technical documents contained in cluster 1, and is corrected from a similarity of 0.962 (with condition 2 substituted into equation (4)) to a similarity of 0.351 (with condition 2 substituted into equation (5)).

The following equations (17) through (19) are used to explain calculation results for calculation example 10-3 (with condition 3 substituted into equation (10)). The following equation (17) is an example of calculation of the intermixing probability in the numerator of correction term 2 (1).

$$\text{Intermixing probability(condition 3, cluster 1)}$$

$$= \left(\frac{_MC_m \times _NC_n}{_{M+N}C_{m+n}}\right) = \left(\frac{_{104}C_{20} \times _{55}C_{50}}{_{104+55}C_{20+50}}\right) = \frac{_{104}C_{20} \times _{55}C_{50}}{_{159}C_{70}} = \frac{(1.28E+21) \times 3478761}{1.49E+46} = 2.98E-19 \approx 0.000$$

$$\ldots (17)$$

On the other hand, the standardizing factor in the denominator is the maximum value of the intermixing probability for intermixed cluster 1, and so the standardizing factor is calculated to be 0.133 as follows. In the case of condition 3, the standardizing factor for cluster 2 is calculated to be 0.448.

$$\text{Standardizing factor (condition 3, cluster 1)}$$

$$= \text{MAX}\left(\frac{_MC_x \times _NC_y}{_{M+N}C_{m+n}}\right) = \left(\frac{_{104}C_{46} \times _{55}C_{24}}{_{104+55}C_{46+24}}\right) = \frac{_{104}C_{46} \times _{55}C_{24}}{_{159}C_{70}} = \frac{(7.96E+29) \times (2.49E+15)}{1.49E+46} = 0.133$$

$$\ldots (18)$$

Hence the value of correction term 2 (1) for condition 3 is calculated to be correction term 2 (1) = 0.000. The value of correction term 2 (1) for intermixed cluster 2 is, similarly to the cases of condition 1 and condition 2, calculated to be 1.

Thus the similarity is calculated to be 0.25, as shown below.

$$\text{Similarity (equation (10), condition 3)} = \frac{1}{\text{total number of clusters}}$$

$$\times \sum_{cluster=1}^{\text{total number of clusters}} \{(\text{correction term 1}) \times (\text{correction term 2}) \times (\text{correction term 3}) \times \delta\}$$

$$= \frac{1}{\text{total number of clusters}} \times \sum_{cluster=1}^{\text{total number of clusters}} \left\{ 1 \times \frac{\left(\frac{_MC_m \times _NC_n}{_{M+N}C_{m+n}}\right)^\gamma}{MAX\left(\frac{_MC_x \times _NC_y}{_{M+N}C_{m+n}}\right)^\gamma} \times 1 \times \delta \right\}$$

$$= \frac{1}{4}\left(\frac{0.000}{0.133} + \frac{0.448}{0.448}\right) = 0.25$$

$$\ldots (19)$$

The value calculated using the above equation (19) for the similarity of 0.25 (with condition 3 substituted into equation (10)) is the value affected by the intermixing probability of technical documents in cluster 1, with the similarity of 0.459 (for condition 3 substituted into equation (4)) corrected to a similarity of 0.25 (with condition 3 substituted into equation (10)).

The following equations (20) to (24) are used to explain calculation results for calculation example 10-4 (with condition 4 substituted into equation (10)).

In the case of condition 4, the sum of the numbers of technical documents contained in clusters is the same as in the case of condition 3, but the fractions of technical document group A and technical document group B contained in cluster 1 and cluster 2 are unequal in the extreme. Hence although large numbers of technical documents are contained in intermixed clusters, it is desirable that the similarity not be made larger in calculations.

The intermixing probability in the numerator for intermixed cluster 1 of correction term 2 (1) is as follows.

$$\text{Intermixing probability(condition 4, cluster 1)}$$

$$= \left(\frac{_MC_m \times _NC_n}{_{M+N}C_{m+n}}\right) = \left(\frac{_{104}C_2 \times _{55}C_{50}}{_{104+55}C_{2+50}}\right) = \frac{_{104}C_2 \times _{55}C_{50}}{_{159}C_{52}} = \frac{5356 \times 3478761}{2.98E+42} = 6.26E-33 \approx 0.000$$

$$\ldots (20)$$

On the other hand, the standardizing factor in the denominator is the maximum value of the intermixing probability for intermixed cluster 1, and so the standardizing factor is calculated to be 0.141, as follows.

$$\text{Standardizing factor (condition 4, cluster 1)}$$

$$= MAX\left(\frac{_MC_x \times _NC_y}{_{M+N}C_{m+n}}\right) = \left(\frac{_{104}C_{34} \times _{55}C_{18}}{_{104+55}C_{34+18}}\right) = \frac{_{104}C_{34} \times _{55}C_{18}}{_{159}C_{52}} = \frac{(2.91E+27) \times (1.44E+14)}{2.98E+42} = 0.141$$

$$\ldots (21)$$

Hence the value of correction term 2 (1) for intermixed cluster 1 given condition 4 is calculated to be correction term 2 (1) = 0.000.

On the other hand, the value of the correction term 2 (1) for intermixed cluster 2 is calculated to be correction term 2 (1) = 0.004, as follows.

Intermixing probability(condition 4, cluster 2)

$$= \left( \frac{{}_M C_m \times {}_N C_n}{{}_{M+N} C_{m+n}} \right) = \left( \frac{{}_{104} C_{20} \times {}_{55} C_1}{{}_{104+55} C_{20+1}} \right) = \frac{{}_{104} C_{20} \times {}_{55} C_1}{{}_{159} C_{21}} = \frac{(1.28E+21) \times 55}{8.34E+25} = 0.001$$

$$\ldots (22)$$

The standardizing factor in the denominator for intermixed cluster 2 is the maximum value of the intermixing probability for intermixed cluster 2, so that in the case of condition 4, the standardizing factor is calculated to be 0.194, as follows.

Standardizing factor (condition 4, cluster 2)

$$= \text{MAX} \left( \frac{{}_M C_x \times {}_N C_y}{{}_{M+N} C_{m+n}} \right) = \left( \frac{{}_{104} C_{14} \times {}_{55} C_7}{{}_{104+55} C_{14+7}} \right) = \frac{{}_{104} C_{14} \times {}_{55} C_7}{{}_{159} C_{21}} = \frac{(7.95E+16) \times (2.03E+08)}{8.34E+25} = 0.194$$

$$\ldots (23)$$

Hence the similarity is calculated to be 0.001, as follows.

$$\text{Similarity (equation (10), condition 4)} = \frac{1}{\text{total number of clusters}}$$

$$\times \sum_{cluster=1}^{\text{total number of clusters}} \left\{ (\text{correction term 1}) \times (\text{correction term 2}) \times (\text{correction term 3}) \times \delta \right\}$$

$$= \frac{1}{\text{total number of clusters}} \times \sum_{cluster=1}^{\text{total number of clusters}} \left\{ 1 \times \frac{\left( \frac{{}_M C_m \times {}_N C_n}{{}_{M+N} C_{m+n}} \right)^{\gamma}}{\text{MAX}\left( \frac{{}_M C_x \times {}_N C_y}{{}_{M+N} C_{m+n}} \right)^{\gamma}} \times 1 \times \delta \right\}$$

$$= \frac{1}{4} \left( \frac{0.000}{0.141} + \frac{0.001}{0.194} \right) = 0.001$$

$$\ldots (24)$$

By means of the above equation (24), the similarity value is corrected from a similarity of 0.459 (substituting condition 4 into equation (4)) to a similarity of 0.001 (substituting condition 4 into equation (10)). This arises from the fact that the intermixing probability of technical documents contained in cluster 1 and cluster 2 is much smaller than the maximum value of the intermixing probability when technical documents are retrieved at random from technical document group A and technical document group B.

Fig. 12 shows a table of similarity calculation examples (calculation results when conditions 1 through 4 are substituted into correction term 2 (1)) when adopting correction term 2 (1).
As indicated in the table, of the intermixed clusters, the value of the correction term 2 (1) is greater for those clusters in which technical documents are well-intermixed (clusters with conditions such that the intermixing probability is high). Moreover, in the case of clusters in which technical documents are not well-intermixed (clusters with conditions such that the intermixing probability is low), the value of the correction term 2 (1) is a low value, at substantially "0", and the calculated similarity is also a small value.

Fig. 13 shows a table of similarity calculation examples (calculation results when conditions 1 through 4 are substituted into correction term 1 (1) and correction term 2 (1)) when adopting both correction term 1 (1) and correction term 2 (1).

The similarity of 0.5 calculated for condition 1 substantially agrees with the degree of similarity judged by ourselves in terms of common-sense.

In the case of condition 2, the number of technical documents contained in intermixed cluster 1 is clearly greater than the number of technical documents contained in intermixed clusters 2 through 4. However, the similarity of 0.5 when condition 2 is substituted into the calculated similarity value (equation (1)) is corrected to a similarity of 0.4 when condition 2 is substituted using correction term 1 (1) and correction term 2 (1). Calculation of the similarity using these correction term 1 (1) and correction term 2 (1) is useful when there is a need to avoid heavily weighting cluster 1 with a large number of technical documents.

In the case of condition 3, the sum of technical documents contained in clusters is the same as for condition 2, but the number of technical documents in intermixed cluster 1 is not particularly large, so that the value of the calculated similarity is corrected to the smaller value of 0.019. This calculation of similarity using.correction term 1 (1) and correction term 2 (1) is useful when there is a need to prevent the large number of technical documents contained in cluster 1 from affecting the similarity calculation result.

In the case of condition 4, the sum of the number of technical documents contained in clusters is the same as for condition 2, but the number of technical documents in intermixed.cluster 1 and intermixed cluster 2 is not particularly large, and when the state of mixing of technical documents is still more extreme, the similarity value is corrected to 0.0005. By thus using correction term 1 (1) and correction term 2 (1) to calculate the similarity, even when the number of technical documents in each intermixed cluster is large, if the state of mixing of technical documents is unequal it is possible to perform correction so as to reduce the similarity value.

That is, by using correction term 1 (1) and correction term 2 (1) to calculate similarity, the similarity can be corrected with emphasis placed on intermixed clusters with large numbers of technical documents, and when the state of mixing of technical documents is unequal, the similarity can be corrected to a smaller value.

As indicated in the figure, in the equation for correction term 2 (1) there is a tendency for the value of the correction term to react sensitively to the state of mixing of technical documents, so that in some cases it may be necessary to adjust the value of $\gamma$ appropriately. As explained above, correction based on the number of technical documents contained in an intermixed cluster and correction based on the state of mixing of technical documents contained in an intermixed cluster are closely related, and so it is deemed important to appropriately determine the value of $\gamma$ as well as the value of $\alpha$.

Fig. 13 was an example of calculation when $\alpha$=1 and $\gamma$=1. However, when a trial calculation is performed with $\alpha$ left as 1 but $\gamma$ set to 0.25, it is possible to calculate similarities with, for condition 1, similarity = 0.5 → 0.5; for condition 2, similarity = 0.4 → 0.769; for condition 3, similarity = 0.019 → 0.019; and for condition 4, similarity = 0.0005 → 0.033.

Application type 3: Example of calculation of correction term 2 (2)

Correction term 2 (2) is a correction term to correct the similarity according to the intermixing ratio of technical documents in each intermixed cluster.

When the ratios of the number of technical documents contained in the first technical document group (group A) and the second technical document group (group B) differ greatly, the intermixing ratio of technical documents contained in each intermixed cluster naturally should also differ. Further, it is reasonable to suppose that, to the extent that the numbers of technical documents contained in the two groups are in contention, the intermixing ratio of technical documents contained in clusters will be close to the ratio of the numbers of technical documents (composition ratio) contained in the first technical document group (group A) and in the second technical document group (group B).

Hence in this invention, as a correction term for correction of the calculated similarity, a correction term is provided which is proportional to the $\xi$th power (where $0<\xi$) of the ratio of the composition ratio and the intermixing ratio, for the composition ratio N/M of the numbers of technical documents contained in the first technical document group (group A) and the second technical document group (group B), and for the intermixing ratio n/m of the number of technical documents contained in each cluster.

That is, a formula is used to set the similarity higher (approaching one) when the composition ratio N/M of the numbers of technical documents contained in the first technical document group (group A) and the second technical document group (group B) is close to the intermixing ratio n/m of the numbers of technical documents in each cluster.

Hence the value of correction term 2 (2) takes on values smaller than one, as the composition ratio of the numbers of technical documents contained in the first technical document group (group A) and the second technical document group (group B) differs more from the intermixing ratio of technical documents within each cluster.

$$\text{Correction term 2 (2)} = \left\{ \frac{\text{N/M or n/m, whichever smaller}}{\text{N/M or n/m, whichever larger}} \right\}^{\zeta}$$

$$= \left\{ \frac{\text{MIN}\left(\dfrac{N}{M},\dfrac{n}{m}\right)}{\text{MAX}\left(\dfrac{N}{M},\dfrac{n}{m}\right)} \right\}^{\zeta} = \text{MIN}\left(\frac{N \times m}{M \times n}, \frac{M \times n}{N \times m}\right)^{\zeta}$$

$$\ldots (25)$$

The following equation (26) is an example of calculation of similarity taking correction term 2 (2) into account.

$$\text{Similarity} = \frac{1}{\text{total number of clusters}}$$

$$\times \sum_{\text{cluster}=1}^{\text{total number of clusters}} \left\{ (\text{correction term 1}) \times (\text{correction term 2}) \times (\text{correction term 3}) \times \delta \right\}$$

$$= \frac{1}{\text{total number of clusters}}$$

$$\times \sum_{\text{cluster}=1}^{\text{total number of clusters}} \left\{ (\text{correction term 1}) \times \left\{ \frac{\text{MIN}\left(\dfrac{N}{M},\dfrac{n}{m}\right)}{\text{MAX}\left(\dfrac{N}{M},\dfrac{n}{m}\right)} \right\}^{\zeta} \times (\text{correction term 3}) \times \delta \right\}$$

$$\ldots (26)$$

In the correction term 2 (2) as indicated in the above equations (25) and (26), the similarity is set higher (approaching one) to the extent that the composition ratio of technical document group A and technical document group B and the intermixing ratio of technical documents in each cluster are closer, so that "N/M or n/m, whichever smaller" is placed in the numerator, and "N/M or n/m, whichever larger" is placed in the denominator.

In this case, when it is necessary to prevent an intermixed cluster with a small technical document intermixing ratio from greatly affecting the result of the similarity calculation, the correction term exponent $\zeta$ should be set to $\zeta > 1$.

Further, when it is desired to simply increase or decrease the similarity according to the technical document intermixing ratio in clusters, $\zeta$ should be set to $\zeta = 1$.

If there is a need to prevent each intermixed cluster with a large intermixing ratio from greatly influencing the result of the similarity calculation, $\zeta$ should be set such that $0 < \zeta < 1$.

Below, the result of use of correction term 2 (2) when calculating similarity is explained.

In correction term 2 (2), either the composition ratio of the technical documents of group A and group B or the intermixing ratio of technical documents in each cluster, whichever smaller, is placed in the numerator, and either the composition ratio of the technical documents of group A and group B or the intermixing ratio of technical documents in each cluster, whichever larger, is placed in the denominator. As a result, the more nearly the composition ratio of the technical documents of group A and group B is equal to the intermixing ratio of technical documents in each cluster, the higher the similarity is calculated to be (approaching one). And, the more different the composition ratio of technical documents in group A and group B is from the intermixing ratio of technical documents in each cluster, the lower the similarity is calculated to be.

Further, the ratio of the composition ratio of technical documents in group A and group B and the intermixing ratio between technical documents in each cluster is calculated, so that the calculated similarity is assured to be in the range $0 \leq \text{similarity} \leq 1$.

Moreover, by setting the exponent $\zeta$ to $\zeta > 1$, intermixed clusters for which the ratio of the composition ratio of technical documents of groups A and B and the intermixing ratio of technical documents within the cluster is small can be prevented from greatly influencing the similarity calculation result.

And by setting $\zeta$ to $\zeta=1$, the similarity can be simply increased or decreased according to the ratio of the composition ratio of technical documents of groups A and B and the intermixing ratio of technical documents within each cluster (simple intermixing ratio comparison).

And by setting the numerator exponent to $0 < \zeta < 1$, the influence on the similarity calculation result when the ratio of the composition ratio of technical documents of groups A and B and the intermixing ratio of technical documents in each cluster can be made small.

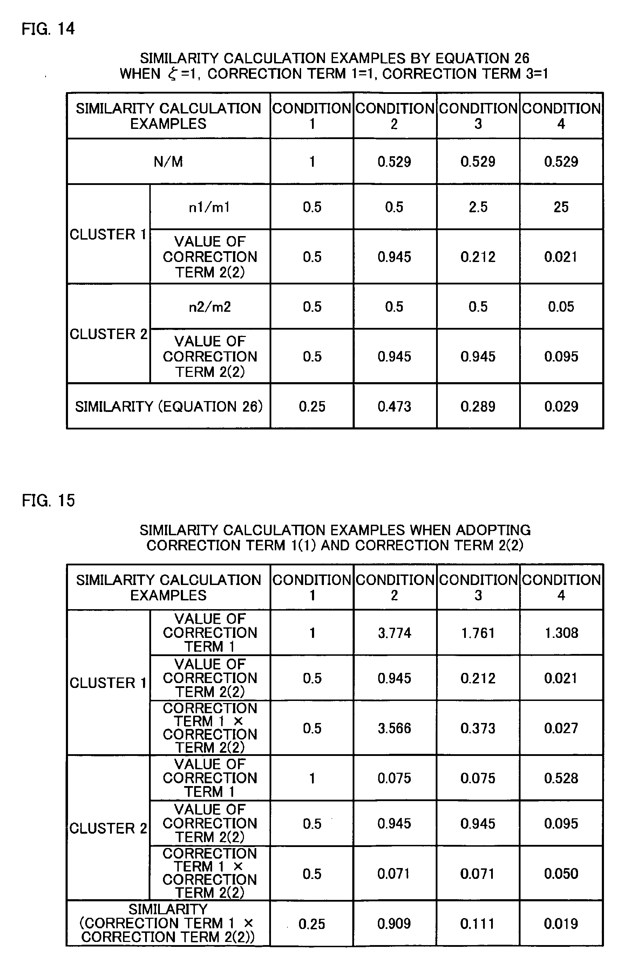

Below, the results of trial calculation of similarity when, as the conditions for comparison of technical document groups, only correction term 2 (2) is considered without considering the effect of other correction terms (that is, when correction term 1 = 1 and correction term 3 = 1), to perform a simple intermixing ratio comparison (that is, $\zeta=1$), are described using equation (26) with the conditions 1 through 4 set. The calculation results are shown in Fig. 14 as a table of similarity calculation examples adopting correction term 2 (2) (calculation results with conditions 1 through 4 substituted into correction term 2 (2)).

The following equation (27) shows calculation results for calculation example 26-1 (with condition 1 substituted into equation (26)).

With condition 1, the number of technical documents in the first technical document group (group A) is six, and the number of technical documents in the second technical document group (group B) is also six, so that the composition ratio of technical documents in groups A and B is 1:1.

On the other hand, in the case of condition 1, the number of technical documents contained in each intermixed cluster (cluster 1 and cluster 2) is two technical documents for the first technical document group (group A) and one technical document for the second technical document group (group B), so that the intermixing ratio is 2:1.

Hence it is expected that there is at least some influence on similarity correction by the intermixing ratio of technical documents contained in clusters.

$$\text{Similarity(equation (26), condition 1)} = \frac{1}{\text{total number of clusters}}$$

$$\times \sum_{cluster=1}^{\text{total number of clusters}} \left\{ (\text{correction term 1}) \times (\text{correction term 2}) \times (\text{correction term 3}) \times \delta \right\}$$

$$= \frac{1}{\text{total number of clusters}}$$

$$\times \sum_{cluster=1}^{\text{total number of clusters}} \left\{ (\text{correction term 1}) \times \left\{ \frac{\text{MIN}\left(\frac{N}{M},\frac{n}{m}\right)}{\text{MAX}\left(\frac{N}{M},\frac{n}{m}\right)} \right\}^{\zeta} \times (\text{correction term 3}) \times \delta \right\}$$

$$= \frac{1}{4} \sum_{cluster=1}^{4} \left[ 1 \times \left\{ \frac{\text{MIN}\left(\frac{6}{6},\frac{n}{m}\right)}{\text{MAX}\left(\frac{6}{6},\frac{n}{m}\right)} \right\}^{1} \times 1 \times \delta \right] = \frac{1}{4} \left\{ \frac{\text{MIN}\left(\frac{6}{6},\frac{1}{2}\right)}{\text{MAX}\left(\frac{6}{6},\frac{1}{2}\right)} + \frac{\text{MIN}\left(\frac{6}{6},\frac{1}{2}\right)}{\text{MAX}\left(\frac{6}{6},\frac{1}{2}\right)} \right\}$$

$$= \frac{1}{4} \left\{ \frac{\left(\frac{1}{2}\right)}{\left(\frac{6}{6}\right)} + \frac{\left(\frac{1}{2}\right)}{\left(\frac{6}{6}\right)} \right\} = 0.25$$

$$\cdots (27)$$

The following equation (28) shows calculation results for calculation example 26-2 (with condition 2 substituted into equation (26)).

$$\text{Similarity}(\text{equation (26), condition 2}) = \frac{1}{\text{total number of clusters}}$$

$$\times \sum_{cluster=1}^{\text{total number of clusters}} \{(\text{correction term 1}) \times (\text{correction term 2}) \times (\text{correction term 3}) \times \delta\}$$

$$= \frac{1}{\text{total number of clusters}}$$

$$\times \sum_{cluster=1}^{\text{total number of clusters}} \left\{ (\text{correction term 1}) \times \left\{ \frac{MIN\left(\frac{N}{M},\frac{n}{m}\right)}{MAX\left(\frac{N}{M},\frac{n}{m}\right)} \right\}^{\zeta} \times (\text{correction term 3}) \times \delta \right\}$$

$$= \frac{1}{4} \sum_{cluster=1}^{4} \left[ 1 \times \left\{ \frac{MIN\left(\frac{55}{104},\frac{n}{m}\right)}{MAX\left(\frac{55}{104},\frac{n}{m}\right)} \right\}^{1} \times 1 \times \delta \right] = \frac{1}{4} \left\{ \frac{MIN\left(\frac{55}{104},\frac{50}{100}\right)}{MAX\left(\frac{55}{104},\frac{50}{100}\right)} + \frac{MIN\left(\frac{55}{104},\frac{1}{2}\right)}{MAX\left(\frac{55}{104},\frac{1}{2}\right)} \right\}$$

$$= \frac{1}{4} \left\{ \frac{\left(\frac{50}{100}\right)}{\left(\frac{55}{104}\right)} + \frac{\left(\frac{1}{2}\right)}{\left(\frac{55}{104}\right)} \right\} = \frac{1}{4} \left\{ \frac{104}{110} + \frac{104}{110} \right\} = \frac{1}{4} \times 1.891 = 0.473$$

$$\ldots (28)$$

The following equation (29) shows calculation results for calculation example 26-3 (with condition 3 substituted into equation (26)).

In the case of condition 3, the sum of the numbers of technical documents contained in clusters is the same as for condition 2, but the intermixing ratio of technical documents contained in intermixed cluster 1 is greatly different from the composition ratio of the first technical document group (group A) and the second technical document group (group B). Hence when calculating similarity, it is desirable that the influence of the intermixing ratio of technical documents contained in intermixed cluster 1 not be so great as in the case of condition 2.

$$\text{Similarity(equation (26), condition 3)} = \frac{1}{\text{total number of clusters}}$$

$$\times \sum_{cluster=1}^{total\ number\ of\ clusters} \{(\text{correction term 1}) \times (\text{correction term 2}) \times (\text{correction term 3}) \times \delta\}$$

$$= \frac{1}{\text{total number of clusters}}$$

$$\times \sum_{cluster=1}^{total\ number\ of\ clusters} \left\{ (\text{correction term 1}) \times \left\{ \frac{MIN\left(\frac{N}{M}, \frac{n}{m}\right)}{MAX\left(\frac{N}{M}, \frac{n}{m}\right)} \right\}^{\zeta} \times (\text{correction term 3}) \times \delta \right\}$$

$$= \frac{1}{4} \sum_{cluster=1}^{4} \left[ 1 \times \left\{ \frac{MIN\left(\frac{55}{104}, \frac{n}{m}\right)}{MAX\left(\frac{55}{104}, \frac{n}{m}\right)} \right\}^{1} \times 1 \times \delta \right] = \frac{1}{4} \left\{ \frac{MIN\left(\frac{55}{104}, \frac{50}{20}\right)}{MAX\left(\frac{55}{104}, \frac{50}{20}\right)} + \frac{MIN\left(\frac{55}{104}, \frac{1}{2}\right)}{MAX\left(\frac{55}{104}, \frac{1}{2}\right)} \right\}$$

$$= \frac{1}{4} \left\{ \frac{\left(\frac{55}{104}\right)}{\left(\frac{50}{20}\right)} + \frac{\left(\frac{1}{2}\right)}{\left(\frac{55}{104}\right)} \right\} = \frac{1}{4} \left\{ \frac{1100}{5200} + \frac{104}{110} \right\} = \frac{1}{4} \times 1.156 = 0.289$$

$$\ldots (29)$$

The similarity value of 0.289 calculated using the above equation (29) (with condition 3 substituted into equation (26)) is the value corrected to a smaller similarity, since the intermixing ratio of technical documents contained in intermixed cluster 1 is different from the composition ratio of the first technical document group (group A) and the second technical document group (group B).

Hence by performing calculation processing for correction term 2 (2), even when the number of technical documents contained in each intermixed cluster is large, the similarity can be corrected according to the intermixing ratios of the technical documents.

The following equation (30) shows calculation results for calculation example 26-4 (with condition 4 substituted into equation (26)).

$$\text{Similarity(equation (26), condition 4)} = \cfrac{1}{\text{total number of clusters}}$$

$$\times \sum_{cluster=1}^{\text{total number of clusters}} \left\{ (\text{correction term 1}) \times (\text{correction term 2}) \times (\text{correction term 3}) \times \delta \right\}$$

$$= \cfrac{1}{\text{total number of clusters}}$$

$$\times \sum_{cluster=1}^{\text{total number of clusters}} \left\{ (\text{correction term 1}) \times \left\{ \cfrac{MIN\left(\cfrac{N}{M}, \cfrac{n}{m}\right)}{MAX\left(\cfrac{N}{M}, \cfrac{n}{m}\right)} \right\}^{\zeta} \times (\text{correction term 3}) \times \delta \right\}$$

$$= \cfrac{1}{4} \sum_{cluster=1}^{4} \left[ 1 \times \left\{ \cfrac{MIN\left(\cfrac{55}{104}, \cfrac{n}{m}\right)}{MAX\left(\cfrac{55}{104}, \cfrac{n}{m}\right)} \right\}^{1} \times 1 \times \delta \right] = \cfrac{1}{4} \left\{ \cfrac{MIN\left(\cfrac{55}{104}, \cfrac{50}{2}\right)}{MAX\left(\cfrac{55}{104}, \cfrac{50}{2}\right)} + \cfrac{MIN\left(\cfrac{55}{104}, \cfrac{1}{20}\right)}{MAX\left(\cfrac{55}{104}, \cfrac{1}{20}\right)} \right\}$$

$$= \cfrac{1}{4} \left\{ \cfrac{\left(\cfrac{55}{104}\right)}{\left(\cfrac{50}{2}\right)} + \cfrac{\left(\cfrac{1}{20}\right)}{\left(\cfrac{55}{104}\right)} \right\} = \cfrac{1}{4} \left\{ \cfrac{110}{5200} + \cfrac{104}{1100} \right\} = \cfrac{1}{4} \times 0.116 = 0.029$$

$$\ldots (30)$$

The similarity value of 0.029 calculated using the above equation (30) (with condition 4 substituted into equation (26)) corrects the similarity to a smaller value, since the intermixing ratio of technical documents contained in cluster 1 and cluster 2 is extremely unequal, and in addition the intermixing ratio of intermixed cluster 1 and intermixed cluster 2 differs greatly from the composition ratio of technical documents of the first technical document group (group A) and the second technical document group (group B).

Fig. 14 shows, in a table, similarity calculation examples when correction term 2 (2) is adopted (calculation results when conditions 1 through 4 are substituted into correction term 2 (2)).

Intermixed cluster 1 and intermixed cluster 2 for conditions 1 and 2, as well as intermixed cluster 2 for condition 3, can be regarded as examples of states in which technical documents are well-mixed, as indicated in Fig. 9 (the intermixing ratio of technical documents in each intermixed cluster is close to the ratio of the numbers of technical documents contained in the first technical document group and the second technical document group). In this case, the value of the correction term is calculated to be rather large, with the result that the similarity value is increased.

Conversely, the intermixed cluster 1 for condition 3 and each of the intermixed clusters for condition 4 can be said to be in a state of poor mixing of technical documents (the intermixing ratio of technical documents in the intermixed cluster is greatly different from the ratio of numbers of technical documents contained in the first technical document group and in the second technical document group), so that the correction term value is calculated to be smaller, with the result that the similarity is calculated as a smaller value.

Hence as indicated in equation (4), by calculating the similarity in combination with correction term 1 (1), it is possible to improve the accuracy of calculation of similarity indicating the extent of the technical relations between technical document groups.

Fig. 15 shows, in a table, similarity calculation examples when correction term 1 (1) and correction term 2 (2) are adopted (calculation results when conditions 1 through 4 are substituted into correction term 1 (1) and correction term 2 (2)).

As indicated in the figure, when condition 1 is substituted into the equation using the correction term 1 (1) and the correction term 2 (2), the similarity is calculated according to the intermixing ratio and the number of technical documents contained in clusters. Hence the similarity value of 0.25 when condition 1 is substituted is smaller than the similarity value of 0.5 when condition 1 is substituted into equation (1) (when there are no correction terms), but is quite close to the expected value, and can be regarded as satisfactorily representing the technical similarity among technical documents.

When condition 2 is substituted into the equation using correction term 1 (1) and correction term 2 (2), similarity is calculated according to the number of technical documents and intermixing ratio in clusters. Hence when condition 2 is substituted into equation (1) (with no correction), the similarity is 0.5, but upon using correction term 1 and correction term 2 (2) with condition 2 substituted, the similarity is corrected to 0.909, considerably closer to the expected similarity value, and satisfactorily representing the similarity among technical documents.

By thus calculating the similarity using the correction term 1 and correction term 2 (2), cluster 1 with a large number of technical documents can be weighted.

When condition 3 is substituted into the equation using correction term 1 (1) and correction term 2 (2), the similarity is calculated according to the number of technical documents and intermixing ratio within clusters. Hence compared with the case of condition 2, although the sum of technical documents contained in clusters is the same, the number of technical documents in intermixed cluster 1 alone is not particularly great, and moreover when the intermixing ratio of technical documents in cluster 1 differs from the ratio of the number of technical documents of the first technical document group (group A) and the second technical document group (group B), it is possible to prevent particular emphasis on the existence of cluster 1.

Here, the calculated similarity is corrected from a similarity of 0.5 with condition 3 substituted into equation (1) (no correction) to a similarity of 0.111 with condition 3 substituted using correction term 1 and correction term 2 (2); the result is quite close to the expected value, and can be said to represent the similarity between technical document groups.

When condition 4 is substituted into the equation using correction term 1 (1) and correction term 2 (2), the similarity is calculated according to the number of technical documents and the intermixing ratio within clusters. Hence compared to the case of condition 2, the sum of the number of technical documents within clusters is the same, but the numbers in intermixed cluster 1 and intermixed cluster 2 are not particularly great, and when the state of mixing of technical documents is still more extreme, the intermixing ratio of technical documents in each intermixed cluster greatly differs from the ratio of the numbers of technical documents in groups A and B, so that the influence on the similarity is reduced.

Here the calculated similarity is corrected from the value of 0.5 with condition 4 substituted into equation (1) (no correction) to the value 0.019 with condition 4 substituted using correction term 1 and correction term 2 (2); the result is quite close to the expected value, and can be said to represent the similarity between technical document groups.

Application type 4: Example of calculation of correction term 2 (3)

Below, correction based on expectation value differences for technical documents in intermixed clusters is explained.

It is natural to suppose that the closer the number m of technical documents of the first technical document group (group A) in a certain cluster is to the expectation value $((m+n)M/(M+N))$ when technical documents are retrieved randomly from groups A and B, the more thoroughly the documents are mixed. (This is a definition of the third mixing state, parallel to the probability ratio of the above equation (9) and the intermixing ratio of equation (25).)

Hence in this invention, the expectation value for retrieving technical documents of the first technical document group (group A) is calculated by multiplying the number of technical documents contained in each intermixed cluster $(m+n)$ by the probability $(M/(M+N))$ of retrieving a technical document of the first technical document group (group A) from among a technical document group which mixes the first technical document group (group A) and the second technical document group (group B). Further, the difference between the expectation value and the number m of technical documents of the first technical document group (group A) contained in each intermixed cluster is calculated as the expectation value difference (see equation (31) below). Correction is performed such that the smaller this difference (the closer to 0), the higher is the similarity.

An example of calculation of the expectation value difference is described using the following equation (31).

$$\text{Expectation value difference} = \left| (m + n) \left( \frac{M}{M + N} \right) - m \right|$$

$$= \frac{|mM + nM - mM - mN|}{M + N}$$

$$= \frac{|nM - mN|}{M + N}$$

$$\ldots (31)$$

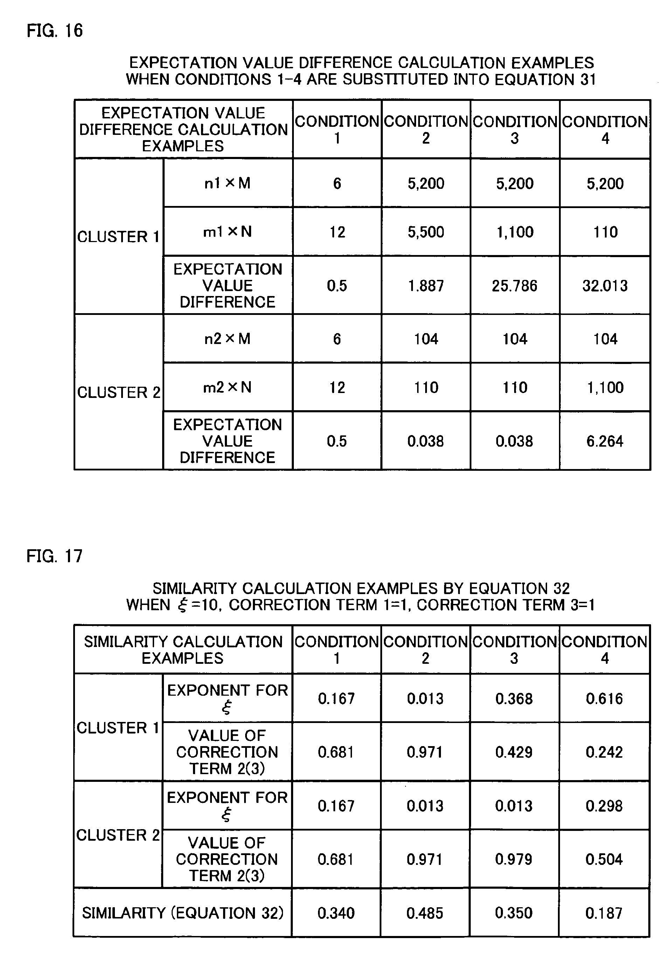

Fig. 16 shows examples of calculation of an expectation value difference when conditions 1 through 4 are substituted into the above equation (31).

As is seen from the calculation results using the above equation (31), when the similarity is corrected such that the closer the number of technical documents of group A and the number of technical documents of group B in a certain cluster are to the expectation values when randomly retrieving documents from groups A and B, the more the cluster is emphasized, it is sufficient to take the negative value of the expectation value in Fig. 16 and place this in the exponent portion.

By placing the negative value of the expectation value difference in the exponent portion, when the number of technical documents anticipated from the expectation value exists in an intermixed cluster, the expectation value difference = 0, and when the exponent = 0, calculation can be performed with the correction term value set to one. However, if only the expectation value is used, the result depends not only on the mixing state, but also on the size of a prescribed intermixed cluster; hence the expectation value difference is divided by the number of technical documents contained in the cluster.

An embodiment of correction term 2 (3) determined in this way is described below.

$$\text{Correction term 2 (3)} = \xi^{\frac{|nM - mN|}{(M+N)(m+n)}}$$

$$\ldots (32)$$

Here $\xi$ is an arbitrary constant, with $\xi > 1$.

By calculating correction term 2 as indicated in equation (32) above, for example, the corrected value can be made the same when the cluster size is 100 and the expectation value difference is 10, and when the cluster size is 10 and the expectation value difference is 1.

The larger the value of $\xi$ used, the more sensitive the response to the expectation value difference, so that the similarity can be corrected to a smaller value.

Fig. 17 is a table of similarity calculation examples for cases in which conditions 1 to 4 are substituted into equation (32), when $\xi = 10$.

Fig. 18 is a table of similarity calculation examples for cases in which correction term 1 (1) and correction term 2 (3) are adopted (with conditions 1 through 4 substituted into correction term 1 (1) and correction term 2 (3)).

As is clear from the figures, when condition 1 is substituted into the equation using correction term 1 (1) and correction term 2 (3), the similarity is calculated according to the number of technical documents in clusters and expectation value differences (the closer the number of technical documents of the first technical document group (group A) and the number of technical documents of the second technical document group (group B) in a given cluster are to the expectation values, resulting when documents are retrieved randomly from groups A and B, the larger the value to which the calculated similarity is corrected.) By this means, a similarity of 0.340 can be calculated for the case of substitution of condition 1 using correction term 1 and correction term 2 (3), close to the value of 0.5 when condition 1 is substituted into equation (1) (no correction), so that a value close to the expected value can be calculated.

In the case of condition 2, the number of technical documents contained in intermixed cluster 1 is greater than the numbers for clusters 2 through 4, and in addition the expectation value difference is small, and so the composition of technical documents contained in the intermixed cluster 1 should be emphasized.

When condition 2 is substituted into the equation using correction term 1 (1) and correction term 2 (3), and the similarity is calculated according to the number of technical documents contained in clusters and expectation value difference (with correction performed such that the closer the number of technical documents of the first technical document group (group A) and the number of technical documents of the second technical document group (group B) contained in a certain cluster to the expectation value when documents are retrieved at random from groups A and B, the larger the similarity value calculated). As a result, the similarity value of 0.935 calculated with condition 2 substituted using correction term 1 and correction term 2 (3) is corrected to a larger value than a value of 0.5 for substitution of condition 1 into equation (1) (no correction), and this value is close to the expected value.

In the case of condition 3, the sum of the number of technical documents contained in clusters is the same as for the above condition 2, but intermixed cluster 1 alone is not particularly large, so that there should be no particular emphasis placed on cluster 1. Moreover, the technical documents contained in the intermixed cluster 1 deviate greatly from the expectation values for documents retrieved randomly from the first technical document group (group A) and the second technical document group (group B), so that the calculated similarity should be decreased, under the influence of the large expectation value difference for intermixed cluster 1.

When condition 3 is substituted into the equation using correction term 1 (1) and correction term 2 (3), the similarity is calculated according to the number of technical documents contained in clusters and expectation value differences (with correction performed so as to obtain a large calculated similarity when the number of technical documents of the first technical document group (group A) and the number of technical documents of the second technical document group (group B) in a certain cluster are close to the expectation values when documents are retrieved at random from groups A and B). By this means, when condition 3 is substituted using correction term 1 and correction term 2 (3), a similarity of 0.207 is calculated. This similarity value is also close to the expected value.

In the case of condition 4, the sum of the number of technical documents contained in clusters is the same as for the above condition 3, but the numbers of technical documents contained in intermixed cluster 1 and intermixed cluster 2 are not particularly large, and the mixing state is even more extreme, and so it is desired that the result not be influenced by the weighting of intermixed cluster 1.

When condition 4 is substituted into the equation using correction term 1 (1) and correction term 2 (3), the similarity is calculated according to the number of technical documents contained in clusters and the expectation value differences (with correction performed to calculate a larger similarity to the extent that the number of technical documents of the first technical document group (group A) and the number of technical documents of the second technical document group (group B) contained in a certain cluster are close to the expectation value when documents are retrieved at random from groups A and B). As a result, when condition 4 is substituted using correction term 1 and correction term 2 (3), a similarity of 0.146 is calculated. This similarity value is also close to the expected value.

INDUSTRIAL AP-PLICABILITY

According to the present invention, a similarity calculation device, which calculates an index for judging technical similarity between a first technical document group and a second technical document group, each comprising patent documents, technical reports, or other technical documents comprises:

technical document group input means for inputting the first technical document group and the second technical document group for comparison;
technical information input means for inputting technical information such as keywords or IPC symbols;
cluster analysis means for searching technical documents contained in the first technical document group and the second technical document group and including the technical information which has been input and decomposing the searched technical documents into a cluster for each technical information;
similarity calculation means for calculating, as the similarity, the ratio of the number of intermixed clusters containing technical documents of both the first technical document group and the second technical document group, to the total number of clusters obtained as a result of the cluster analysis; and,
output means for outputting the calculated similarity to recording means, to display means, or to communication means.

Therefore, an index indicating the similarity of technical content described in technical document groups can easily be calculated, based on the ratio of the total number of analyzed clusters to the number of intermixed clusters.

Also according to the present invention, the similarity calculation means execute a function for calculating the sum, over all intermixed clusters, of the product of a first correction value which takes a value according to the number of technical documents contained in each intermixed cluster and a second correction value which takes a value according to the state of mixing of technical documents of the first technical document group and the technical documents of the second technical document group in each intermixed cluster, and for dividing the sum by the calculated total number of clusters to calculate the similarity.

Therefore, correction can be performed which, due to the existence of a correction term 1, weights more heavily an intermixed cluster according to the number of technical documents contained therein, and due to the existence of a correction term 2, weights a cluster as more important as the composition of technical documents contained in the intermixed cluster is closer to a prescribed value, so as to increase the similarity value, such that the result of the similarity calculation can be corrected so as to agree with human perception.

Hence through calculation of similarity using the correction term 1 and correction term 2, the similarity can be corrected emphasizing intermixed clusters with a large number of technical documents, and correcting the similarity to a smaller value when the state of mixing of technical documents is uneven.

Also according to the present invention, the similarity calculation means execute a function for calculating the sum, over all intermixed clusters, of a correction value proportional to the $\alpha$th power (where $0<\alpha$) of the number of technical documents in each cluster, and dividing the sum by the calculated total number of clusters to calculate the similarity.

Therefore, the similarity can be calculated such that a cluster assumes more importance when the number of technical documents within the cluster is greater.

Also according to the present invention, the similarity calculation means execute a function for dividing the $\alpha$th power (where $0<\alpha$) of the number of technical documents in each cluster by a standardizing factor such as total number of cluster to calculate the similarity.

Therefore, it is possible to ensure that $0 \leq$ similarity $\leq 1$. As the standardizing factor, the average value of the number of technical documents in all clusters is employed, so that the number of technical documents can be calculated using as reference the average value of the number of technical documents in all clusters.

Also according to the present invention, the similarity calculation means execute a function for calculating the sum, over all intermixed clusters, of a correction value proportional to the $\gamma$th power (where $0<\gamma$) of the probability of retrieving the m technical documents from the first technical document group and the n technical documents from the second technical document group, and dividing the sum by the calculated total number of clusters to calculate the similarity.

In other words, a function is provided to perform computation with (number of combinations retrieving m technical documents from group A and n technical documents from group B)/(number of combinations retrieving m+n technical documents from a mixture of group A and group B) placed in the numerator in the similarity calculation means. Therefore, the similarity can be corrected to a small value for large bias and to a large value for small bias, according to the bias (artificiality) of the number of technical documents of group A and group B contained in each intermixed cluster. As the standardizing factor, the $\gamma$th power (where $0<\gamma$) of the maximum value of the probability of retrieving m technical documents from the first technical document group and n technical documents from the second technical document group is provided, so that the calculated similarity can be ensured to be in the range $0 \leq$ similarity $\leq 1$.

Also according to the present invention, the similarity calculation means execute a function for calculating the sum, over all intermixed clusters, of a correction value proportional to the $\zeta$th power (where $0<\zeta$) of the ratio of a composition ratio N/M and an intermixing ratio n/m, for the composition ratio N/M of the number of technical documents N contained in the second technical document group to the number of technical documents M contained in the first technical document group and for the intermixing ratio n/m of the number of technical documents n of the second technical document group to the number of technical documents m of the first technical document group contained in each intermixed cluster obtained as a result of the cluster analysis, and dividing the sum by the calculated total number of clusters to calculate the similarity.

Therefore, the similarity can be calculated so as to be higher (approaching one) to the extent that the composition ratio of the numbers of technical documents of group A and group B is the same as the intermixing ratio of technical documents within each cluster.

By setting the exponent $\zeta$ for the ratio of the composition ratio and the intermixing ratio such that $\zeta>1$, the influence of intermixed clusters with a small ratio of the ratio of the number of technical documents of groups A and B and the intermixing ratio of technical documents within each cluster can be prevented from greatly influencing the result of similarity calculation.

And, by setting the exponent $\zeta$ to $\zeta=1$, the similarity can be made to simply increase or decrease according to the ratio of the composition ratio of the number of technical documents of groups A and B and the intermixing ratio of technical documents in each cluster.

And, by setting the numerator exponent such that $0<\zeta<1$, the influence of the result of similarity calculation can be reduced when the ratio of the composition ratio of the number of technical documents of groups A and B and the intermixing ratio of technical documents within each cluster is large.

Also according to the present invention, the similarity calculation means execute a function for calculating an expectation value for retrieving a technical document of the first technical document group by multiplying the probability of retrieving a technical document of the first technical document group from among a technical document group covering the first technical document group and the second technical document group by the number of technical documents contained in each intermixed cluster, and calculating as an expectation value difference the difference between the expectation value and the number of technical documents of the first technical document group contained in each intermixed cluster, as well as for calculating the sum, over all intermixed clusters, of a correction value obtained by setting the expectation value difference as negative exponent for an arbitrary constant $\xi$ (where $1<\xi$), and dividing the sum by the calculated total number of clusters to calculate the similarity.

Therefore, correction can be performed so as to cause the similarity calculation result to react sensitively to an expectation value difference according to the setting of a parameter $\xi$.

Also according to the present invention, the similarity calculation means execute a function for calculating the expectation value for retrieving a technical document of the first technical document group by multiplying the probability of retrieving a technical document of the first technical document group from among a technical document group covering the first technical document group and the second technical document group by the number of technical documents contained in each intermixed cluster, and calculating as an expectation value difference the difference between the expectation value and the number of technical documents of the first technical document group contained in each intermixed cluster, as well as for calculating the sum, over all intermixed clusters, of a correction value obtained by dividing the expectation value difference by the number of technical documents in each intermixed cluster and setting the divided expectation value difference as negative exponent for an arbitrary constant $\xi$ (where $1<\xi$), and then dividing the sum by the calculated total number of clusters to calculate the similarity.

Therefore, correction can be performed so as to cause the similarity calculation result to react sensitively to an expectation value difference according to the setting of a parameter $\xi$.

## Claims

1. A similarity calculation device, which calculates an index for judging technical similarity between a first technical document group and a second technical document group, each comprising patent documents, technical reports, or other technical documents, **characterized in** comprising:

   technical document group input means for inputting the first technical document group and the second technical document group for comparison;
   technical information input means for inputting technical information such as keywords or IPC symbols;
   cluster analysis means for retrieving technical documents containing the input technical information from technical documents contained in the first technical document group and the second technical document group, and for clustering the retrieved technical documents by each technical information;
   similarity calculation means for calculating, as the similarity, the ratio of the number of intermixed clusters containing technical documents of both the first technical document group and the second technical document group, to the total number of clusters obtained as a result of the cluster analysis; and,
   output means for outputting the calculated similarity to recording means, to display means, or to communication means.

2. A similarity calculation device, which calculates an index for judging technical similarity between a first technical document group and a second technical document group, each comprising patent documents, technical reports, or other technical documents, **characterized in** comprising:

   technical document group input means for inputting the first technical document group and the second technical document group for comparison;
   technical information input means for inputting technical information such as keywords or IPC symbols;
   cluster analysis means for retrieving technical documents containing the input technical information from technical documents contained in the first technical document group and the second technical document group, and for clustering the retrieved technical documents by each technical information;
   similarity calculation means for calculating the total number of clusters obtained as a result of the cluster analysis and the number of intermixed clusters containing technical documents of both the first technical document group and the second technical document group, as well as for calculating the sum, over all intermixed clusters, of the product of a first correction value which takes a value according to the number of technical documents contained in each intermixed cluster and a second correction value which takes a value according to the state of mixing of technical documents of the first technical document group and the technical documents of the second technical document group in each intermixed cluster, and dividing the sum by the calculated total number of clusters to calculate the similarity; and,
   output means for outputting the calculated similarity to recording means, to display means, or to communication means.

**3.** A similarity calculation device, which calculates an index for judging technical similarity between a first technical document group and a second technical document group, each comprising patent documents, technical reports, or other technical documents, **characterized in** comprising:

technical document group input means for inputting the first technical document group and the second technical document group for comparison;
technical information input means for inputting technical information such as keywords or IPC symbols;
cluster analysis means for retrieving technical documents containing the input technical information from technical documents contained in the first technical document group and the second technical document group, and for clustering the retrieved technical documents by each technical information;
similarity calculation means for calculating the total number of clusters obtained as a result of the cluster analysis and the number of intermixed clusters containing technical documents of both the first technical document group and the second technical document group, as well as for calculating the sum, over all intermixed clusters, of a correction value proportional to the $\alpha$th power (where $0<\alpha$) of the number of technical documents in each cluster, and dividing the sum by the calculated total number of clusters to calculate the similarity; and,
output means for outputting the calculated similarity to recording means, to display means, or to communication means.

**4.** A similarity calculation device, which calculates an index for judging technical similarity between a first technical document group and a second technical document group, each comprising patent documents, technical reports, or other technical documents, **characterized in** comprising:

technical document group input means for inputting the first technical document group and the second technical document group for comparison;
technical information input means for inputting technical information such as keywords or IPC symbols;
cluster analysis means for retrieving technical documents containing the input technical information from technical documents contained in the first technical document group and the second technical document group, and for clustering the retrieved technical documents by each technical information;
similarity calculation means for calculating the total number of clusters obtained as a result of the cluster analysis and the number of intermixed clusters containing technical documents of both the first technical document group and the second technical document group, as well as for calculating the sum, over all intermixed clusters, of a correction value obtained by dividing the $\alpha$th power (where $0<\alpha$) of the number of technical documents in each cluster by a standardizing factor, and dividing the sum by the calculated total number of clusters to calculate the similarity; and,
output means for outputting the calculated similarity to recording means, to display means, or to communication means.

**5.** The similarity calculation device according to Claim 4, wherein the standardizing factor is the average value of the number of technical documents in all clusters.

**6.** A similarity calculation device, which calculates an index for judging technical similarity between a first technical document group and a second technical document group, each comprising patent documents, technical reports, or other technical documents, **characterized in** comprising:

technical document group input means for inputting the first technical document group and the second technical document group for comparison;
technical information input means for inputting technical information such as keywords or IPC symbols;
cluster analysis means for retrieving technical documents containing the input technical information from technical documents contained in the first technical document group and the second technical document group, and for clustering the retrieved technical documents by each technical information;
similarity calculation means for calculating the total number of clusters obtained as a result of the cluster analysis and the number of intermixed clusters containing technical documents of both the first technical document group and the second technical document group, as well as for calculating the sum, over all intermixed clusters, of a correction value proportional to the $\gamma$th power (where $0<\gamma$) of the probability of retrieving the m technical documents from the first technical document group and the n technical documents from the second technical document group, in order to perform correction according to the probability of the number of technical documents of the first technical document group and the second technical document group contained in each intermixed cluster obtained as a result of the cluster analysis, and dividing the sum by the calculated total number of clusters to calculate the similarity; and,

output means for outputting the calculated similarity to recording means, to display means, or to communication means.

7. A similarity calculation device, which calculates an index for judging technical similarity between a first technical document group and a second technical document group, each comprising patent documents, technical reports, or other technical documents, **characterized in** comprising:

technical document group input means for inputting the first technical document group and the second technical document group for comparison;

technical information input means for inputting technical information such as keywords or IPC symbols;

cluster analysis means for retrieving technical documents containing the input technical information from technical documents contained in the first technical document group and the second technical document group, and for clustering the retrieved technical documents by each technical information;

similarity calculation means for calculating the total number of clusters obtained as a result of the cluster analysis and the number of intermixed clusters containing technical documents of both the first technical document group and the second technical document group, as well as for calculating the sum, over all intermixed clusters, of a correction value obtained by dividing, by a standardizing factor, the $\gamma$th power (where $0<\gamma$) of the probability of retrieving the m technical documents from the first technical document group and the n technical documents from the second technical document group, in order to perform correction according to the probability of the number of technical documents of the first technical document group and the second technical document group contained in each intermixed cluster obtained as a result of the cluster analysis, and dividing the sum by the calculated total number of clusters to calculate the similarity; and,

output means for outputting the calculated similarity to recording means, to display means, or to communication means.

8. The similarity calculation device according to Claim 7, wherein the standardizing factor is the $\gamma$th power (where $0<\gamma$) of the maximum value of the probability of retrieving the m technical documents from the first technical document group and the n technical documents from the second technical document group.

9. A similarity calculation device, which calculates an index for judging technical similarity between a first technical document group and a second technical document group, each comprising patent documents, technical reports, or other technical documents, **characterized in** comprising:

technical document group input means for inputting the first technical document group and the second technical document group for comparison;

technical information input means for inputting technical information such as keywords or IPC symbols;

cluster analysis means for retrieving technical documents containing the input technical information from technical documents contained in the first technical document group and the second technical document group, and for clustering the retrieved technical documents by each technical information;

similarity calculation means for calculating the total number of clusters obtained as a result of the cluster analysis and the number of intermixed clusters containing technical documents of both the first technical document group and the second technical document group, as well as for calculating the sum, over all intermixed clusters, of a correction value proportional to the $\zeta$th power (where $0<\zeta$) of the ratio of a composition ratio N/M and an intermixing ratio n/m; for the composition ratio N/M of the number of technical documents N contained in the second technical document group to the number of technical documents M contained in the first technical document group and for the intermixing ratio n/m of the number of technical documents n of the second technical document group to the number of technical documents m of the first technical document group contained in each intermixed cluster obtained as a result of the cluster analysis, and dividing the sum by the calculated total number of clusters to calculate the similarity; and,

output means for outputting the calculated similarity to recording means, to display means, or to communication means.

10. A similarity calculation device, which calculates an index for judging technical similarity between a first technical document group and a second technical document group, each comprising patent documents, technical reports, or other technical documents, **characterized in** comprising:

technical document group input means for inputting the first technical document group and the second technical document group for comparison;

technical information input means for inputting technical information such as keywords or IPC symbols;

cluster analysis means for retrieving technical documents containing the input technical information from technical documents contained in the first technical document group and the second technical document group, and for clustering the retrieved technical documents by each technical information;

similarity calculation means for calculating the total number of clusters obtained as a result of the cluster analysis and the number of intermixed clusters containing technical documents of both the first technical document group and the second technical document group, and calculating an expectation value for retrieving a technical document of the first technical document group by multiplying the probability of retrieving a technical document of the first technical document group from among a technical document group covering the first technical document group and the second technical document group by the number of technical documents contained in each intermixed cluster, and calculating as an expectation value difference the difference between the expectation value and the number of technical documents of the first technical document group contained in each intermixed cluster, as well as for calculating the sum, over all intermixed clusters, of a correction value obtained by setting the expectation value difference as negative exponent for an arbitrary constant $\xi$ (where $1<\xi$), and dividing the sum by the calculated total number of clusters to calculate the similarity; and

output means for outputting the calculated similarity to recording means, to display means, or to communication means.

11. A similarity calculation device, which calculates an index for judging technical similarity between a first technical document group and a second technical document group, each comprising patent documents, technical reports, or other technical documents, **characterized in** comprising:

technical document group input means for inputting the first technical document group and the second technical document group for comparison;

technical information input means for inputting technical information such as keywords or IPC symbols;

cluster analysis means for retrieving technical documents containing the input technical information from technical documents contained in the first technical document group and the second technical document group, and for clustering the retrieved technical documents by each technical information;

similarity calculation means for calculating the total number of clusters obtained as a result of the cluster analysis and the number of intermixed clusters containing technical documents of both the first technical document group and the second technical document group, and calculating the expectation value for retrieving a technical document of the first technical document group by multiplying the probability of retrieving a technical document of the first technical document group from among a technical document group covering the first technical document group and the second technical document group by the number of technical documents contained in each intermixed cluster, and calculating as an expectation value difference the difference between the expectation value and the number of technical documents of the first technical document group contained in each intermixed cluster, as well as for calculating the sum, over all intermixed clusters, of a correction value obtained by dividing the expectation value difference by the number of technical documents in each intermixed cluster and setting the divided expectation value difference as negative exponent for an arbitrary constant $\xi$ (where $1<\xi$), and then dividing the sum by the calculated total number of clusters to calculate the similarity; and

output means for outputting the calculated similarity to recording means, to display means, or to communication means.

12. A similarity calculation program for calculating an index for judging technical similarity between technical document groups, which operates by means of information processing means for a similarity calculation device comprising technical document group input means for inputting the technical document groups, technical information input means for inputting technical information such as keywords, cluster analysis means for performing cluster analysis of the technical document groups by the technical information, similarity calculation means for calculating the total number of clusters and the number of intermixed clusters and calculating the similarity, output means for outputting the calculated similarity, and information processing means capable of controlling the technical document group input means, the technical information input means, the cluster analysis means, the similarity calculation means, and the output means,

**characterized in** causing the information processing means to achieve:

a function, executed by the technical document group input means, for input of a first technical document group and a second technical document group for comparison;

a function, executed by the technical information input means, for input of the technical information such as keywords or IPC symbols;

a function, executed by the cluster analysis means, for retrieving technical documents containing the input technical information from technical documents contained in the first technical document group and the second technical document group, and for clustering the retrieved technical documents by each technical information;

a function, executed by the similarity calculation means, for calculating the total number of clusters obtained as a result of the cluster analysis and the number of intermixed clusters containing technical documents of both the first technical document group and the second technical document group, and for calculating, as the similarity, the ratio of the number of intermixed clusters, containing technical documents of both the first technical document group and the second technical document group, to the total number of clusters obtained as a result of the cluster analysis; and

a function, executed by the output means, for outputting the calculated similarity to recording means, to display means, or to communication means.

**13.** A similarity calculation program for calculating an index for judging technical similarity between technical document groups, which operates by means of information processing means for a similarity calculation device comprising technical document group input means for inputting the technical document groups, technical information input means for inputting technical information such as keywords, cluster analysis means for performing cluster analysis of the technical document groups by the technical information, similarity calculation means for calculating the total number of clusters and the number of intermixed clusters and calculating the similarity, output means for outputting the calculated similarity, and information processing means capable of controlling the technical document group input means, the technical information input means, the cluster analysis means, the similarity calculation means, and the output means,

**characterized in** causing the information processing means to achieve:

a function, executed by the technical document group input means, for input of a first technical document group and a second technical document group for comparison;

a function, executed by the technical information input means, for input of the technical information such as keywords or IPC symbols;

a function, executed by the cluster analysis means, for retrieving technical documents containing the input technical information from technical documents contained in the first technical document group and the second technical document group, and for clustering the retrieved technical documents by each technical information;

a function, executed by the similarity calculation means, for calculating the total number of clusters obtained as a result of the cluster analysis and the number of intermixed clusters containing technical documents of both the first technical document group and the second technical document group, as well as for calculating the sum, over all intermixed clusters, of the product of a first correction value which takes a value according to the number of technical documents contained in each intermixed cluster and a second correction value which takes a value according to the state of mixing of technical documents of the first technical document group and the technical documents of the second technical document group in each intermixed cluster, and dividing the sum by the calculated total number of clusters to calculate the similarity; and

a function, executed by the output means, for outputting the calculated similarity to recording means, to display means, or to communication means.

**14.** A similarity calculation program for calculating an index for judging technical similarity between technical document groups, which operates by means of information processing means for a similarity calculation device comprising technical document group input means for inputting the technical document groups, technical information input means for inputting technical information such as keywords, cluster analysis means for performing cluster analysis of the technical document groups by the technical information, similarity calculation means for calculating the total number of clusters and the number of intermixed clusters and calculating the similarity, output means for outputting the calculated similarity, and information processing means capable of controlling the technical document group input means, the technical information input means, the cluster analysis means, the similarity calculation means, and the output means,

**characterized in** causing the information processing means to achieve:

a function, executed by the technical document group input means, for input of a first technical document group and a second technical document group for comparison;

a function, executed by the technical information input means, for input of the technical information such as keywords or IPC symbols;

a function, executed by the cluster analysis means, for retrieving technical documents containing the input technical information from technical documents contained in the first technical document group and the second technical document group, and for clustering the retrieved technical documents by each technical information;

a function, executed by the similarity calculation means, for calculating the total number of clusters obtained as a result of the cluster analysis and the number of intermixed clusters containing technical documents of both the first technical document group and the second technical document group, as well as for calculating the sum, over all intermixed clusters, of a correction value proportional to the $\alpha$th power (where $0<\alpha$) of the number of technical documents in each cluster, and dividing the sum by the calculated total number of clusters to calculate the similarity; and

a function, executed by the output means, for outputting the calculated similarity to recording means, to display means, or to communication means.

15. A similarity calculation program for calculating an index for judging technical similarity between technical document groups, which operates by means of information processing means for a similarity calculation device comprising technical document group input means for inputting the technical document groups, technical information input means for inputting technical information such as keywords, cluster analysis means for performing cluster analysis of the technical document groups by the technical information, similarity calculation means for calculating the total number of clusters and the number of intermixed clusters and calculating the similarity, output means for outputting the calculated similarity, and information processing means capable of controlling the technical document group input means, the technical information input means, the cluster analysis means, the similarity calculation means, and the output means,

**characterized in** causing the information processing means to achieve:

a function, executed by the technical document group input means, for input of a first technical document group and a second technical document group for comparison;

a function, executed by the technical information input means, for input of the technical information such as keywords or IPC symbols;

a function, executed by the cluster analysis means, for retrieving technical documents containing the input technical information from technical documents contained in the first technical document group and the second technical document group, and for clustering the retrieved technical documents by each technical information;

a function, executed by the similarity calculation means, for calculating the total number of clusters obtained as a result of the cluster analysis and the number of intermixed clusters containing technical documents of both the first technical document group and the second technical document group, as well as for calculating the sum, over all intermixed clusters, of a correction value obtained by dividing the $\alpha$th power (where $0<\alpha$) of the number of technical documents in each cluster by a standardizing factor, and dividing the sum by the calculated total number of clusters to calculate the similarity; and

a function, executed by the output means, for outputting the calculated similarity to recording means, to display means, or to communication means.

16. The similarity calculation program according to Claim 15, further causing the information processing means to achieve a function, executed.by the similarity calculation means, for using, as the standardizing factor, the average value of the number of technical documents in all clusters.

17. A similarity calculation program for calculating an index for judging technical similarity between technical document groups, which operates by means of information processing means for a similarity calculation device comprising technical document group input means for inputting the technical document groups, technical information input means for inputting technical information such as keywords, cluster analysis means for performing cluster analysis of the technical document groups by the technical information, similarity calculation means for calculating the total number of clusters and the number of intermixed clusters and calculating the similarity, output means for outputting the calculated similarity, and information processing means capable of controlling the technical document group input means, the technical information input means, the cluster analysis means, the similarity calculation means, and the output means,

**characterized in** causing the information processing means to achieve:

a function, executed by the technical document group input means, for input of a first technical document group and a second technical document group for comparison;

a function, executed by the technical information input means, for input of the technical information such as keywords or IPC symbols;

a function, executed by the cluster analysis means, for retrieving technical documents containing the input technical information from technical documents contained in the first technical document group and the second technical document group, and for clustering the retrieved technical documents by each technical information;

a function, executed by the similarity calculation means, for calculating the total number of clusters obtained as a result of the cluster analysis and the number of intermixed clusters containing technical documents of both the first technical document group and the second technical document group, as well as for calculating the sum, over all intermixed clusters, of a correction value proportional to the $\gamma$th power (where $0<\gamma$) of the probability of retrieving the m technical documents from the first technical document group and the n technical documents from the second technical document group, in order to perform correction according to the probability of the number of technical documents of the first technical document group and the second technical document group contained in each intermixed cluster obtained as a result of the cluster analysis, and dividing the sum by the calculated total number of clusters to calculate the similarity; and

a function, executed by the output means, for outputting the calculated similarity to recording means, to display means, or to communication means.

18. A similarity calculation program for calculating an index for judging technical similarity between technical document groups, which operates by means of information processing means for a similarity calculation device comprising technical document group input means for inputting the technical document groups, technical information input means for inputting technical information such as keywords, cluster analysis means for performing cluster analysis of the technical document groups by the technical information, similarity calculation means for calculating the total number of clusters and the number of intermixed clusters and calculating the similarity, output means for outputting the calculated similarity, and information processing means capable of controlling the technical document group input means, the technical information input means, the cluster analysis means, the similarity calculation means, and the output means,

**characterized in** causing the information processing means to achieve:

a function, executed by the technical document group input means, for input of a first technical document group and a second technical document group for comparison;

a function, executed by the technical information input means, for input of the technical information such as keywords or IPC symbols;

a function, executed by the cluster analysis means, for retrieving technical documents containing the input technical information from technical documents contained in the first technical document group and the second technical document group, and for clustering the retrieved technical documents by each technical information;

a function, executed by the similarity calculation means, for calculating the total number of clusters obtained as a result of the cluster analysis and the number of intermixed clusters containing technical documents of both the first technical document group and the second technical document group, as well as for calculating the sum, over all intermixed clusters, of a correction value obtained by dividing, by a standardizing factor, the $\gamma$th power (where $0<\gamma$) of the probability of retrieving the m technical documents from the first technical document group and the n technical documents from the second technical document group, in order to perform correction according to the probability of the number of technical documents of the first technical document group and the second technical document group contained in each intermixed cluster obtained as a result of the cluster analysis, and dividing the sum by the calculated total number of clusters to calculate the similarity; and

a function, executed by the output means, for outputting the calculated similarity to recording means, to display means, or to communication means.

19. The similarity calculation program according to Claim 18, further causing the information processing means to achieve a function, executed by the similarity calculation means, for using, as the standardizing factor, the $\gamma$th power (where $0<\gamma$) of the maximum value of the probability of retrieving the m technical documents from the first technical document group and the n technical documents from the second technical document group.

20. A similarity calculation program for calculating an index for judging technical similarity between technical document groups, which operates by means of information processing means for a similarity calculation device comprising technical.document group input means for inputting the technical document groups, technical information input means for inputting technical information such as keywords, cluster analysis means for performing cluster analysis of the technical document groups by the technical information, similarity calculation means for calculating the total number of clusters and the number of intermixed clusters and calculating the similarity, output means for outputting the calculated similarity, and information processing means capable of controlling the technical document group input means, the technical information input means, the cluster analysis means, the similarity calculation means, and the output means,
**characterized in** causing the information processing means to achieve:

a function, executed by the technical document group input means, for input of a first technical document group and a second technical document group for comparison;
a function, executed by the technical information input means, for input of the technical information such as keywords or IPC symbols;
a function, executed by the cluster analysis means, for retrieving technical documents containing the input technical information from technical documents contained in the first technical document group and the second technical document group, and for clustering the retrieved technical documents by each technical information;
a function, executed by the similarity calculation means, for calculating the total number of clusters obtained as a result of the cluster analysis and the number of intermixed clusters containing technical documents of both the first technical document group and the second technical document group, as well as for calculating the sum, over all intermixed clusters, of a correction value proportional to the $\zeta$th power (where $0<\zeta$) of the ratio of a composition ratio N/M and an intermixing ratio n/m, for the composition ratio N/M of the number of technical documents N contained in the second technical document group to the number of technical documents M contained in the first technical document group and for the intermixing ratio n/m of the number of technical documents n of the second technical document group to the number of technical documents m of the first technical document group contained in each intermixed cluster obtained as a result of the cluster analysis, and dividing the sum by the calculated total number of clusters to calculate the similarity; and
a function, executed by the output means, for outputting the calculated similarity to recording means, to display means, or to communication means.

21. A similarity calculation program for calculating an index for judging technical similarity between technical document groups, which operates by means of information processing means for a similarity calculation device comprising technical document group input means for inputting the technical document groups, technical information input means for inputting technical information such as keywords, cluster analysis means for performing cluster analysis of the technical document groups by the.technical information, similarity calculation means for calculating the total number of clusters and the number of intermixed clusters and calculating the similarity, output means for outputting the calculated similarity, and information processing means capable of controlling the technical document group input means, the technical information input means, the cluster analysis means, the similarity calculation means, and the output means,
**characterized in** causing the information processing means to achieve:

a function, executed by the technical document group input means, for input of a first technical document group and a second technical document group for comparison;
a function, executed by the technical information input means, for input of the technical information such as keywords or IPC symbols;
a function, executed by the cluster analysis means, for retrieving technical documents containing the input technical information from technical documents contained in the first technical document group and the second technical document group, and for clustering the retrieved technical documents by each technical information;
a function, executed by the similarity calculation means, for calculating the total number of clusters obtained as a result of the cluster analysis and the number of intermixed clusters containing technical documents of both the first technical document group and the second technical document group, and calculating an expectation value for retrieving a technical document of the first technical document group by multiplying the probability of retrieving a technical document of the first technical document group from among a technical document group covering the first technical document group and the second technical document group by the number of technical documents contained in each intermixed cluster, and calculating as an expectation value difference the difference between the expectation value and the number of technical documents of the first technical document group contained in each intermixed cluster, as well as for calculating the sum, over all intermixed clusters, of a correction value obtained by setting the expectation value difference as negative exponent for an arbitrary constant $\xi$ (where $1<\xi$), and dividing the sum by the calculated total number of clusters to calculate the similarity; and
a function, executed by the output means, for outputting the calculated similarity to recording means, to display means, or to communication means.

22. A similarity calculation program for calculating an index for judging technical similarity between technical document groups, which operates by means of information processing means for a similarity calculation device comprising technical document group input means for inputting the technical document groups, technical information input means for inputting technical information such as keywords, cluster analysis means for performing cluster analysis of the technical document groups by the technical information, similarity calculation means for calculating the total number of clusters and the number of intermixed clusters and calculating the similarity, output means for outputting the calculated similarity, and information processing means capable of controlling the technical document group input means, the technical information input means, the cluster analysis means, the similarity calculation means, and the output means,
**characterized in** causing the information processing means to achieve:

a function, executed by the technical document group input means, for input of a first technical document group and a second technical document group for comparison;

a function, executed by the technical information input means, for input of the technical information such as keywords or IPC symbols;

a function, executed by the cluster analysis means, for retrieving technical documents containing the input technical information from technical documents contained in the first technical document group and the second technical document group, and for clustering the retrieved technical documents by each technical information;

a function, executed by the similarity calculation means, for calculating the total number of clusters obtained as a result of the cluster analysis and the number of intermixed clusters containing technical documents of both the first technical document group and the second technical document group, and calculating the expectation value for retrieving a technical document of the first technical document group by multiplying the probability of retrieving a technical document of the first technical document group from among a technical document group covering the first technical document group and the second technical document group by the number of technical documents contained in each intermixed cluster, and calculating as an expectation value difference the difference between the expectation value and the number of technical documents of the first technical document group contained in each intermixed cluster, as well as for calculating the sum, over all intermixed clusters, of a correction value obtained by dividing the expectation value difference by the number of technical documents in each intermixed cluster and setting the divided expectation value difference as negative exponent for an arbitrary constant $\xi$ (where $1<\xi$), and then dividing the sum by the calculated total number of clusters to calculate the similarity; and

a function, executed by the output means, for outputting the calculated similarity to recording means, to display means, or to communication means.

23. A similarity calculation method for calculating an index for judging technical similarity between technical document groups, using a similarity calculation device comprising technical document group input means for inputting the technical document groups, technical information input means for inputting technical information such as keywords, cluster analysis means for performing cluster analysis of the technical document groups by the technical information, similarity calculation means for calculating the total number of clusters and the number of intermixed clusters and calculating the similarity, and output means for outputting the calculated similarity, comprising:

a process, executed by the technical document group input means, of inputting a first technical document group and a second technical document group for comparison;

a process, executed by the technical information input means, of inputting the technical information such as keywords or IPC symbols;

a process, executed by the cluster analysis means, of retrieving technical documents containing the input technical information from technical documents contained in the first technical document group and the second technical document group, and of clustering the retrieved technical documents by each technical information;

a process, executed by the similarity calculation means, of calculating the total number of clusters obtained as a result of the cluster analysis and the number of intermixed clusters containing technical documents of both the first technical document group and the second technical document group, and of calculating, as the similarity, the ratio of the number of intermixed clusters, containing technical documents of both the first technical document group and the second technical document group, to the total number of clusters obtained as a result of the cluster analysis; and

a process, executed by the output means, of outputting the calculated similarity to recording means, to display means, or to communication means.

24. A similarity calculation method for calculating an index for judging technical similarity between technical document groups, using a similarity calculation device comprising technical document group input means for inputting the technical document groups, technical information input means for inputting technical information such as keywords, cluster analysis means for performing cluster analysis of the technical document groups by the technical information, similarity calculation means for calculating the total number of clusters and the number of intermixed clusters and calculating the similarity, and output means for outputting the calculated similarity, comprising:

a process, executed by the technical document group input means, of inputting a first technical document group and a second technical document group for comparison;

a process, executed by the technical information input means, of inputting the technical information such as keywords or IPC symbols;

a process, executed by the cluster analysis means, of retrieving technical documents containing the input technical information from technical documents contained in the first technical document group and the second technical document group, and clustering the retrieved technical documents by each technical information;

a process, executed by the similarity calculation means, of calculating the total number of clusters obtained as a result of the cluster analysis and the number of intermixed clusters containing technical documents of both the first technical document group and the second technical document group, as well as calculating the sum, over all intermixed clusters, of the product of a first correction value which takes a value according to the number of technical documents contained in each intermixed cluster and a second correction value which takes a value according to the state of mixing of technical documents of the first technical document group and the technical documents of the second technical document group in each intermixed cluster, and dividing the sum by the calculated total number of clusters to calculate the similarity; and

a process, executed by the output means, of outputting the calculated similarity to recording means, to display means, or to communication means.

25. A similarity calculation method for calculating an index for judging technical similarity between technical document groups, using a similarity calculation device comprising technical document group input means for inputting the technical document groups, technical information input means for inputting technical information such as keywords, cluster analysis means for performing cluster analysis of the technical document groups by the technical information, similarity calculation means for calculating the total number of clusters and the number of intermixed clusters and calculating the similarity, and output means for outputting the calculated similarity, comprising:

a process, executed by the technical document group input means, of inputting a first technical document group and a second technical document group for comparison;

a process, executed by the technical information input means, of inputting the technical information such as keywords or IPC symbols;

a process, executed by the cluster analysis means, of retrieving technical documents containing the input technical information from technical documents contained in the first technical document group and the second technical document group, and clustering the retrieved technical documents by each technical information;

a process, executed by the similarity calculation means, of calculating the total number of clusters obtained as a result of the cluster analysis and the number of intermixed clusters containing technical documents of both the first technical document group and the second technical document group, as well as calculating the sum, over all intermixed clusters, of a correction value proportional to the $\alpha$th power (where $0 < \alpha$) of the number of technical documents in each cluster, and dividing the sum by the calculated total number of clusters to calculate the similarity; and

a process, executed by the output means, of outputting the calculated similarity to recording means, to display means, or to communication means.

26. A similarity calculation method for calculating an index for judging technical similarity between technical document groups, using a similarity calculation device comprising technical document group input means for inputting the technical document groups, technical information input means for inputting technical information such as keywords, cluster analysis means for performing cluster analysis of the technical document groups by the technical information, similarity calculation means for calculating the total number of clusters and the number of intermixed clusters and calculating.the similarity, and output means for outputting the calculated similarity, comprising:

a process, executed by the technical document group input means, of inputting a first technical document group and a second technical document group for comparison;

a process, executed by the technical information input means, of inputting the technical information such as keywords or IPC symbols;

a process, executed by the cluster analysis means, of retrieving technical documents containing the input technical information from technical documents contained in the first technical document group and the second technical document group, and clustering the retrieved technical documents by each technical information;

a process, executed by the similarity calculation means, of calculating the total number of clusters obtained as a result of the cluster analysis and the number of intermixed clusters containing technical documents of both the first technical document group and the second technical document group, as well as calculating the sum, over all intermixed clusters, of a correction value obtained by dividing the $\alpha$th power (where $0<\alpha$) of the number of technical documents in each cluster by a standardizing factor, and dividing the sum by the calculated total number of clusters to calculate the similarity; and

a process, executed by the output means, of outputting the calculated similarity to recording means, to display means, or to communication means.

27. The similarity calculation method according to Claim 26, wherein the similarity calculation means use, as the standardizing factor, the average value of the number of technical documents in all clusters.

28. A similarity calculation method for calculating an index for judging technical similarity between technical document groups, using a similarity calculation device comprising technical document group input means for inputting the technical document groups, technical information input means for inputting technical information such as keywords, cluster analysis means for performing cluster analysis of the technical document groups by the technical information, similarity calculation means for calculating the total number of clusters and the number of intermixed clusters and calculating the similarity, and output means for outputting the calculated similarity, comprising:

a process, executed by the technical document group input means, of inputting a first technical document group and a second technical document group for comparison;

a process, executed by the technical information input means, of inputting the technical information such as keywords or IPC symbols;

a process, executed by the cluster analysis means, of retrieving technical documents containing the input technical information from technical documents contained in the first technical document group and the second technical document group, and clustering the retrieved technical documents by each technical information;

a process, executed by the similarity calculation means, of calculating the total number of clusters obtained as a result of the cluster analysis and the number of intermixed clusters containing technical documents of both the first technical document group and the second technical document group, as well as calculating the sum, over all intermixed clusters, of a correction value proportional to the $\gamma$th power (where $0<\gamma$) of the probability of retrieving the m technical documents from the first technical document group and the n technical documents from the second technical document group, in order to perform correction according to the probability of the number of technical documents of the first technical document group and the second technical document group contained in each intermixed cluster obtained as a result of the cluster analysis, and dividing the sum by the calculated total number of clusters to calculate the similarity; and

a process, executed by the output means, of outputting the calculated similarity to recording means, to display means, or to communication means.

29. A similarity calculation method for calculating an index for judging technical similarity between technical document groups, using a similarity calculation device comprising technical document group input means for inputting the technical document groups, technical information input means for inputting technical information such as keywords, cluster analysis means for performing cluster analysis of the technical document groups by the technical information, similarity calculation means for calculating the total number of clusters and the number of intermixed clusters and calculating the similarity, and output means for outputting the calculated similarity, comprising:

a process, executed by the technical document group input means, of inputting a first technical document group and a second technical document group for comparison;

a process, executed by the technical information input means, of inputting the technical information such as keywords or IPC symbols;

a process, executed by the cluster analysis means, of retrieving technical documents containing the input technical information from technical documents contained in the first technical document group and the second technical document group, and clustering the retrieved technical documents by each technical information;

a process, executed by the similarity calculation means, of calculating the total number of clusters obtained as a result of the cluster analysis and the number of intermixed clusters containing technical documents of both the first technical document group and the second technical document group, as well as calculating the sum, over all intermixed clusters, of a correction value obtained by dividing, by a standardizing factor, the $\gamma$th power (where $0<\gamma$) of the probability of retrieving the m technical documents from the first technical document group and the n technical documents from the second technical document group, in order to perform correction according to the probability of the number of technical documents of the first technical document group and the second technical document group contained in each intermixed cluster obtained as a result of the cluster analysis, and dividing the sum by the calculated total number of clusters to calculate the similarity; and

a process, executed by the output means, of outputting the calculated similarity to recording means, to display means, or to communication means.

30. The similarity calculation method according to Claim 29, wherein the similarity calculation means use, as the standardizing factor, the $\gamma$th power (where $0<\gamma$) of the maximum value of the probability of retrieving the m technical documents from the first technical document group and the n technical documents from the second technical document group.

31. A similarity calculation method for calculating an index for judging technical similarity between technical document groups, using a similarity calculation device comprising technical document group input means for inputting the technical document groups, technical information input means for inputting technical information such as keywords, cluster analysis means for performing cluster analysis of the technical document groups by the technical information, similarity calculation means for calculating the total number of clusters and the number of intermixed clusters and calculating the similarity, and output means for outputting the calculated similarity, comprising:

a process, executed by the technical document group input means, of inputting a first technical document group and a second technical document group for comparison;

a process, executed by the technical information input means, of inputting the technical information such as keywords or IPC symbols;

a process, executed by the cluster analysis means, of retrieving technical documents containing the input technical information from technical documents contained in the first technical document group and the second technical document group, and clustering the retrieved technical documents by each technical information;

a process, executed by the similarity calculation means, of calculating the total number of clusters obtained as a result of the cluster analysis and the number of intermixed clusters containing technical documents of both the first technical document group and the second technical document group, as well as calculating the sum, over all intermixed clusters, of a correction value proportional to the $\zeta$th power (where $0<\zeta$) of the ratio of a composition ratio N/M and an intermixing ratio n/m, for the composition ratio N/M of the number of technical documents N contained in the second technical document group to the number of technical documents M contained in the first technical document group and for the intermixing ratio n/m of the number of technical documents n of the second technical document group to the number of technical documents m of the first technical document group contained in each intermixed cluster obtained as a result of the cluster analysis, and dividing the sum by the calculated total number of clusters to calculate the similarity; and

a process, executed by the output means, of outputting the calculated similarity to recording means, to display means, or to communication means.

32. A similarity calculation method for calculating an index for judging technical similarity between technical document groups, using a similarity calculation device comprising technical document group input means for inputting the technical document groups, technical information input means for inputting technical information such as keywords, cluster analysis means for performing cluster analysis of the technical document groups by the technical information, similarity calculation means for calculating the total number of clusters and the number of intermixed clusters and calculating the similarity, and output means for outputting the calculated similarity, comprising:

a process, executed by the technical document group input means, of inputting a first technical document group and a second technical document group for comparison;

a process, executed by the technical information input means, of inputting the technical information such as keywords or IPC symbols;

a process, executed by the cluster analysis means, of retrieving technical documents containing the input technical information from technical documents contained in the first technical document group and the second technical document group, and clustering the retrieved technical documents by each technical information;

a process, executed by the similarity calculation means, of calculating the total number of clusters obtained as a result of the cluster analysis and the number of intermixed clusters containing technical documents of both the first technical document group and the second technical document group, and calculating an expectation value for retrieving a technical document of the first technical document group by multiplying the probability of retrieving a technical document of the first technical document group from among a technical document group covering the first technical document group and the second technical document group by the number of technical documents contained in each intermixed cluster, and calculating as an expectation value difference the difference between the expectation value and the number of technical documents of the first technical document group contained in each intermixed cluster, as well as calculating the sum, over all intermixed clusters, of a correction value obtained by setting the expectation value difference as negative exponent for an arbitrary constant $\xi$ (where $1<\xi$), and dividing the sum by the calculated total number of clusters to calculate the similarity; and

a process, executed by the output means, of outputting the calculated similarity to recording means, to display means, or to communication means.

33. A similarity calculation method for calculating an index for judging technical similarity between technical document groups, using a similarity calculation device comprising technical document group input means for inputting the technical document groups, technical information input means for inputting technical information such as keywords, cluster analysis means for performing cluster analysis of the technical document groups by the technical information, similarity calculation means for calculating the total number of clusters and the number of intermixed clusters and calculating the similarity, and output means for outputting the calculated similarity, comprising:

a process, executed by the technical document group input means, of inputting a first technical document group and a second technical document group for comparison;

a process, executed by the technical information input means, of inputting the technical information such as keywords or IPC symbols;

a process, executed by the cluster analysis means, of retrieving technical documents containing the input technical information from technical documents contained in the first technical document group and the second technical document group, and clustering the retrieved technical documents by each technical information;

a process, executed by the similarity calculation means, of calculating the total number of clusters obtained as a result of the cluster analysis and the number of intermixed clusters containing technical documents of both the first technical document group and the second technical document group, and calculating the expectation value for retrieving a technical document of the first technical document group by multiplying the probability of retrieving a technical document of the first technical document group from among a technical document group covering the first technical document group and the second technical document group by the number of technical documents contained in each intermixed cluster, and calculating as an expectation value difference the difference between the expectation value and the number of technical documents of the first technical document group contained in each intermixed cluster, as well as calculating the sum, over all intermixed clusters, of a correction value obtained by dividing the expectation value difference by the number of technical documents in each intermixed cluster and setting the divided expectation value difference as negative exponent for an arbitrary constant $\xi$ (where $1<\xi$), and then dividing the sum by the calculated total number of clusters to calculate the similarity; and

a process, executed by the output means, of outputting the calculated similarity to recording means, to display means, or to communication means.

FIG. 1

DATABASE

PATENT DOCUMENTS,
TECHNICAL REPORTS, ...

KEYWORDS, IPC, ...

20

COMMUNICATION
NETWORK

10

364

SIMILARITY CALCULATION DEVICE

30

FIG. 2

```
                      ┌─ 364
                      │
              ┌─ 30   │  ┌─ 365      ┌─ 370         ┌─ 372
  ┌──────────────────────────────────────────────────────────────────────┐
  │         ┌─────────────┐  ┌───────────────┐  ┌───────────────┐         │
  │         │TRANSMISSION/│  │ INPUT MEANS   │  │ DISPLAY MEANS │         │
  │         │ RECEPTION   │  │ (LCD DISPLAY) │  │ (CRT, etc)    │         │
  │         │  MEANS      │  └───────────────┘  └───────────────┘         │
  │         └─────────────┘         ↕ ┌─ 371           ↕ ┌─ 373           │
  │                          ┌───────────────┐  ┌───────────────┐         │
  │                          │   INPUT I/F   │  │  DISPLAY I/F  │         │
  │                          └───────────────┘  └───────────────┘         │
  │              ┌─ 399                ↕                 ↕                 │
  │  ───────────────────────────────────────────────────────────────     │
  │    ↕ ┌─ 380        ↕ ┌─ 381    ↕ ┌─ 385       ↕ ┌─ 379    ↕ ┌─ 390    │
  │  ┌─────────┐  ┌──────────┐ ┌───────────┐ ┌───────────┐ ┌──────────┐   │
  │  │  CPU    │  │ MEMORY   │ │ RECORDING │ │ RECORDING │ │ CALENDAR │   │
  │  │(INFORM- │  └──────────┘ │ MEANS I/F │ │ MEDIA I/F │ │  CLOCK   │   │
  │  │ ATION   │               └───────────┘ └───────────┘ └──────────┘   │
  │  │PROCESS- │                   ↕ ┌─ 384       ↕ ┌─ 378                │
  │  │ ING     │               ┌───────────┐ ┌───────────────┐           │
  │  │ MEANS)  │               │   HDD     │ │  RECORDING    │           │
  │  └─────────┘               │(RECORDING │ │   MEDIA       │           │
  │                            │ MEANS)    │ │ MOUNTING UNIT │           │
  │                            └───────────┘ ├───────────────┤           │
  │                                          │  RECORDING    │           │
  │                                          │   MEDIA       │           │
  │                                          └───────────────┘           │
  │                                                   └─ 377             │
  └──────────────────────────────────────────────────────────────────────┘
```

FIG. 3

```
        ╭───────────────────────────╮      ╭───────────────────────────╮
        │  FIRST TECHNICAL DOCUMENT │      │ SECOND TECHNICAL DOCUMENT │
        │    GROUP (GROUP A)        │      │     GROUP (GROUP B)       │
        │    A1,A2,A3,,,,AM         │      │     B1,B2,B3,,,,BN         │
        ╰───────────────────────────╯      ╰───────────────────────────╯
```

54

FIG. 4

```
        ┌──────────┐      ┌──────────────────┐      ┌──────────────┐
        │   USER   │      │    SIMILARITY    │      │   DATABASE   │
        └──────────┘      │ CALCULATION DEVICE│      └──────────────┘
             │            └──────────────────┘              │
             │                      │                       │
   ┌─ S10    │                      │                       │
 ┌─────────────────────┐            │                       │
 │ INPUT INSTRUCTION OF │──────────▶│                       │
 │ SIMILARITY CALCULATION│           │   ┌─ S100             │
 └─────────────────────┘    ┌──────────────────┐            │
             │              │   READ/DISPLAY   │            │
             │◀─────────────│   INPUT SCREEN   │            │
   ┌─ S12    │              └──────────────────┘            │
 ┌──────────────────────┐           │                       │
 │ INPUT CONDITIONS OF  │           │                       │
 │ SIMILARITY CALCULATION│          │                       │
 │                      │           │                       │
 │ - TECHNICAL DOCUMENT │           │                       │
 │ TYPES                │           │                       │
 │                      │           │                       │
 │ - FIRST TECHNICAL    │           │                       │
 │ DOCUMENT GROUP       │           │                       │
 │                      │           │                       │
 │ - SECOND TECHNICAL   │           │                       │
 │ DOCUMENT GROUP       │           │                       │
 │                      │           │                       │
 │ - IPC                │           │                       │
 │                      │──────────▶│                       │
 │ - KEYWORDS           │           │                       │
 │                      │    ┌─ S102 │                      │
 │ - CORRECTION INFORMATION│  ┌────────────────┐            │
 └──────────────────────┘   │    ACQUIRE     │────────────▶│
             │              │ TECHNICAL DOCUMENTS│          │
             │              └────────────────┘   ┌─ S130    │
             │                      │        ┌──────────────────┐
             │                      │◀───────│      READ         │
             │                      │        │TECHNICAL DOCUMENTS│
             │               ┌─ S104 │        └──────────────────┘
             │         ┌───────────────────┐           │
             │         │SIMILARITY CALCULATION│          │
             │         │    PROCESSING     │           │
             │         └───────────────────┘           │
             │                ┌─ S106                   │
             │         ┌───────────────────┐           │
             │◀────────│ SIMILARITY DISPLAY│            │
             │         │    PROCESSING     │            │
             │         └───────────────────┘            │
       ┌─ S14 │              ┌─ S108              ┌─ S140 │
      ┌─────┐             ┌─────┐              ┌─────┐
      │ END │             │ END │              │ END │
      └─────┘             └─────┘              └─────┘
```

FIG. 5

– INPUT SCREEN –

1. INPUT CLUSTER ANALYSIS CONDITIONS

| (1) DOCUMENTS FOR PROCESSING | |
|---|---|
| | ▼ |
| 1. PATENT PUBLICATIONS | |
| 2. TECHNICAL DOCUMENTS | |
| : | |
| : | |
| : | |
| 3. ALL DOCUMENTS | |

| (2) PORTIONS FOR PROCESSING | |
|---|---|
| | ▼ |
| 1. ENTIRE TEXT | |
| 2. CLAIMS ONLY | |
| : | |
| | |
| | |

| (3) CRITERIA FOR CLUSTER ANALYSIS | |
|---|---|
| | ▼ |
| 1. IPC " " | |
| 2. KEYWORD " " | |
| : | |
| | |
| | |

2. DOCUMENT GROUPS EXTRACTION CONDITIONS

FIRST DOCUMENT GROUP

(1) TIME PERIOD

● DATES | 03/06/13 | ▼ | 03/09/11 | ▼

○ LAST | – | ▲▼ | MONTHS

○ LAST | – | ▲▼ | DAYS

(2) INDUSTRY

| SELECT FROM BELOW | ▼ |
|---|---|
| 1. TELECOMMUNICATION | |
| 2. ELECTRIC APPLIANCE | |
| 3. FINANCE | |
| 4. ... | |

(3) NAME OF COMPANY/INDIVIDUAL

| SELECT FROM BELOW | ▼ |
|---|---|
| 1. COMPANY ○○○○ | |
| 2. COMPANY △△△△ | |
| 3. ... | |
| 4. ... | |

SECOND DOCUMENT GROUP

(1) TIME PERIOD

○ DATES | 03/09/11 | ▼ | – | ▼

● LAST | 6 | ▲▼ | MONTHS

○ LAST | – | ▲▼ | DAYS

(2) INDUSTRY

| SELECT FROM BELOW | ▼ |
|---|---|
| 1. TELECOMMUNICATION | |
| 2. ELECTRIC APPLIANCE | |
| 3. FINANCE | |
| 4. ... | |

(3) NAME OF COMPANY/INDIVIDUAL

| SELECT FROM BELOW | ▼ |
|---|---|
| 1. COMPANY ○○○○ | |
| 2. COMPANY △△△△ | |
| 3. ... | |
| 4. ... | |

3. CORRECTION METHOD

CORRECTION TERM 1

| 2. NUMBER OF DOCUMENTS | ▼ |
|---|---|
| 1. NONE | |
| 2. NUMBER OF DOCUMENTS | |
| 3. ... | |
| 4. ... | |
| 5. ... | |

CORRECTION TERM 2

| 4.EXPECTATION VALUE DIFFERENCE | ▼ |
|---|---|
| 1. NONE | |
| 2. PROBABILITY | |
| 3. INTERMIXING RATIO | |
| 4.EXPECTATION VALUE DIFFERENCE | |
| 5. ... | |

## FIG. 6

### – SIMILARITY DISPLAY SCREEN –

### 1. CLUSTER ANALYSIS CONDITIONS

| |
|---|
| 1. PATENT PUBLICATIONS, 2. TECHNICAL DOCUMENTS, 7. KEYWORD "TELEPHONE", ... |

### 2. DOCUMENT GROUPS EXTRACTION CONDITIONS

FIRST DOCUMENT GROUP

| | |
|---|---|
| (1) TIME PERIOD | 03/06/13 – 03/09/11 |
| (2) INDUSTRY | 1. TELECOMMUNICATION |
| (3) NAME OF COMPANY | 1. COMPANY ○○○○ |
| (4) OTHERS | |

SECOND DOCUMENT GROUP

| | |
|---|---|
| (1) TIME PERIOD | 03/06/13 – 03/12/13 |
| (2) INDUSTRY | 2. ELECTRIC APPLIANCE |
| (3) NAME OF COMPANY | 2. COMPANY △△△△ |
| (4) OTHERS | |

### 3. CONDITIONS OF CORRECTION METHOD

| |
|---|
| CORRECTION TERM 1 = 2, CORRECTION TERM 2 = 4, CORRECTION TERM 3 = 0.300 |

### 4. SIMILARITY CALCULATION RESULT

| SIMILARITY | 0.935 |
|---|---|

### 5. CONTENTS OF CLUSTERS OBTAINED

| | CLUSTER 1 | CLUSTER 2 | ... | ... |
|---|---|---|---|---|
| CRITERIA | G06F17/30 | TEXT PROCESSING | ... | ... |
| CORRECTION TERM 1 | 3.774 | 0.075 | ... | ... |
| CORRECTION TERM 2 | 0.971 | 0.971 | ... | ... |
| CORRECTION TERM 3 | 1.000 | 1.000 | ... | ... |

### 6. CONDITIONS OF SIMILARITY CALCULATION

FIG. 7

| A1,B1 | A2,B2,B3 | A3 | B1 | ⋯ | A100,AM,B13 | BN |

G06F17/30 | TEXT PROCESSING | B01 | INORGANIC COMPOUNDS

FIG. 8

```
     SIMILARITY CALCULATION
           PROCESSING

                              ┌─ S200
   MIX TECHNICAL DOCUMENT GROUP A
   AND TECHNICAL DOCUMENT GROUP B

                              ┌─ S202
        CLUSTER ANALYSIS
           PROCESSING

                              ┌─ S204
      DETERMINE FORMULA FOR
        CORRECTION TERM 1

                              ┌─ S206
      DETERMINE FORMULA FOR
        CORRECTION TERM 2

                              ┌─ S208
        DETERMINE VALUE OF
        CORRECTION TERM 3

                              ┌─ S210
        CALCULATE SIMILARITY

                              ┌─ S212
               END
```

FIG. 9

| CONDITIONS | | CONDITION 1 | CONDITION 2 | CONDITION 3 | CONDITION 4 |
|---|---|---|---|---|---|
| FIRST TECHNICAL DOCUMENT GROUP | NUMBER OF TECHNICAL DOCUMENTS M | 6 | 104 | 104 | 104 |
| SECOND TECHNICAL DOCUMENT GROUP | NUMBER OF TECHNICAL DOCUMENTS N | 6 | 55 | 55 | 55 |
| TOTAL NUMBER OF TECHNICAL DOCUMENTS | | 12 | 159 | 159 | 159 |
| CLUSTER 1 | NUMBER OF TECHNICAL DOCUMENTS m1 | 2 | 100 | 20 | 2 |
| | NUMBER OF TECHNICAL DOCUMENTS n1 | 1 | 50 | 50 | 50 |
| | TOTAL NUMBER OF TECHNICAL DOCUMENTS | 3 | 150 | 70 | 52 |
| CLUSTER 2 | NUMBER OF TECHNICAL DOCUMENTS m2 | 2 | 2 | 2 | 20 |
| | NUMBER OF TECHNICAL DOCUMENTS n2 | 1 | 1 | 1 | 1 |
| | TOTAL NUMBER OF TECHNICAL DOCUMENTS | 3 | 3 | 3 | 21 |
| CLUSTER 3 | NUMBER OF TECHNICAL DOCUMENTS m3 | 2 | 2 | 82 | 82 |
| CLUSTER 4 | NUMBER OF TECHNICAL DOCUMENTS n4 | 4 | 4 | 4 | 4 |
| EXPECTED SIMILARITY VALUE | TOLERANCE ±0.050 | 0.300 | 0.900 | 0.200 | 0.050 |

FIG. 10

A1,A2,A7,A8,A10,A15,A18······A120,Am−1
B4,B5,B7,B15,B17,B18······B150,Bn−10

CLUSTER 1

A3,A4
B1

CLUSTER 2

A10

CLUSTER 3

B4,B5

CLUSTER 4

FIG. 11

SIMILARITY CALCULATION EXAMPLES BY EQUATION 4
WHEN $\alpha$=1, CORRECTION TERM 2=1, CORRECTION TERM 3=1

| SIMILARITY CALCULATION EXAMPLES | | CONDITION 1 | CONDITION 2 | CONDITION 3 | CONDITION 4 |
|---|---|---|---|---|---|
| (M+N)/4 | | 12/4 | 159/4 | 159/4 | 159/4 |
| CLUSTER 1 | NUMBER OF TECHNICAL DOCUMENTS (m1+n1) | 3 | 150 | 70 | 52 |
| | VALUE OF CORRECTION TERM 1 | 1 | 3.774 | 1.761 | 1.308 |
| CLUSTER 2 | NUMBER OF TECHNICAL DOCUMENTS (m2+n2) | 3 | 3 | 3 | 21 |
| | VALUE OF CORRECTION TERM 1 | 1 | 0.075 | 0.075 | 0.528 |
| SIMILARITY (EQUATION 4) | | 0.5 | 0.962 | 0.459 | 0.459 |

FIG. 12

SIMILARITY CALCULATION EXAMPLES BY EQUATION 10
WHEN $\gamma$=1, CORRECTION TERM 1=1, CORRECTION TERM 3=1

| SIMILARITY CALCULATION EXAMPLES | | CONDITION 1 | CONDITION 2 | CONDITION 3 | CONDITION 4 |
|---|---|---|---|---|---|
| CLUSTER 1 | INTERMIXING PROBABILITY | 0.409 | 0.113 | 0.000 | 0.000 |
| | MAXIMUM VALUE OF INTERMIXING PROBABILITY | 0.409 | 0.280 | 0.133 | 0.141 |
| | VALUE OF CORRECTION TERM 2(1) | 1 | 0.404 | 0.000 | 0.000 |
| CLUSTER 2 | INTERMIXING PROBABILITY | 0.409 | 0.448 | 0.448 | 0.001 |
| | MAXIMUM VALUE OF INTERMIXING PROBABILITY | 0.409 | 0.448 | 0.448 | 0.194 |
| | VALUE OF CORRECTION TERM 2(1) | 1 | 1 | 1 | 0.004 |
| SIMILARITY (EQUATION 10) | | 0.5 | 0.351 | 0.25 | 0.001 |

FIG. 13

SIMILARITY CALCULATION EXAMPLES WHEN ADOPTING
CORRECTION TERM 1(1) AND CORRECTION TERM 2(1)

| SIMILARITY CALCULATION EXAMPLES | | CONDITION 1 | CONDITION 2 | CONDITION 3 | CONDITION 4 |
|---|---|---|---|---|---|
| CLUSTER 1 | VALUE OF CORRECTION TERM 1 | 1 | 3.774 | 1.761 | 1.308 |
| | VALUE OF CORRECTION TERM 2(1) | 1 | 0.404 | 0.000 | 0.000 |
| | CORRECTION TERM 1 × CORRECTION TERM 2(1) | 1 | 1.525 | 0.000 | 0.000 |
| CLUSTER 2 | VALUE OF CORRECTION TERM 1 | 1 | 0.075 | 0.075 | 0.528 |
| | VALUE OF CORRECTION TERM 2(1) | 1 | 1 | 1 | 0.004 |
| | CORRECTION TERM 1 × CORRECTION TERM 2(1) | 1 | 0.075 | 0.075 | 0.002 |
| SIMILARITY (CORRECTION TERM 1 × CORRECTION TERM 2(1)) | | 0.5 | 0.4 | 0.019 | 0.0005 |

## FIG. 14

SIMILARITY CALCULATION EXAMPLES BY EQUATION 26
WHEN $\zeta=1$, CORRECTION TERM 1=1, CORRECTION TERM 3=1

| SIMILARITY CALCULATION EXAMPLES | | CONDITION 1 | CONDITION 2 | CONDITION 3 | CONDITION 4 |
|---|---|---|---|---|---|
| N/M | | 1 | 0.529 | 0.529 | 0.529 |
| CLUSTER 1 | n1/m1 | 0.5 | 0.5 | 2.5 | 25 |
| | VALUE OF CORRECTION TERM 2(2) | 0.5 | 0.945 | 0.212 | 0.021 |
| CLUSTER 2 | n2/m2 | 0.5 | 0.5 | 0.5 | 0.05 |
| | VALUE OF CORRECTION TERM 2(2) | 0.5 | 0.945 | 0.945 | 0.095 |
| SIMILARITY (EQUATION 26) | | 0.25 | 0.473 | 0.289 | 0.029 |

## FIG. 15

SIMILARITY CALCULATION EXAMPLES WHEN ADOPTING
CORRECTION TERM 1(1) AND CORRECTION TERM 2(2)

| SIMILARITY CALCULATION EXAMPLES | | CONDITION 1 | CONDITION 2 | CONDITION 3 | CONDITION 4 |
|---|---|---|---|---|---|
| CLUSTER 1 | VALUE OF CORRECTION TERM 1 | 1 | 3.774 | 1.761 | 1.308 |
| | VALUE OF CORRECTION TERM 2(2) | 0.5 | 0.945 | 0.212 | 0.021 |
| | CORRECTION TERM 1 × CORRECTION TERM 2(2) | 0.5 | 3.566 | 0.373 | 0.027 |
| CLUSTER 2 | VALUE OF CORRECTION TERM 1 | 1 | 0.075 | 0.075 | 0.528 |
| | VALUE OF CORRECTION TERM 2(2) | 0.5 | 0.945 | 0.945 | 0.095 |
| | CORRECTION TERM 1 × CORRECTION TERM 2(2) | 0.5 | 0.071 | 0.071 | 0.050 |
| SIMILARITY (CORRECTION TERM 1 × CORRECTION TERM 2(2)) | | 0.25 | 0.909 | 0.111 | 0.019 |

FIG. 16

EXPECTATION VALUE DIFFERENCE CALCULATION EXAMPLES
WHEN CONDITIONS 1-4 ARE SUBSTITUTED INTO EQUATION 31

| EXPECTATION VALUE DIFFERENCE CALCULATION EXAMPLES | | CONDITION 1 | CONDITION 2 | CONDITION 3 | CONDITION 4 |
|---|---|---|---|---|---|
| CLUSTER 1 | n1 × M | 6 | 5,200 | 5,200 | 5,200 |
| | m1 × N | 12 | 5,500 | 1,100 | 110 |
| | EXPECTATION VALUE DIFFERENCE | 0.5 | 1.887 | 25.786 | 32.013 |
| CLUSTER 2 | n2 × M | 6 | 104 | 104 | 104 |
| | m2 × N | 12 | 110 | 110 | 1,100 |
| | EXPECTATION VALUE DIFFERENCE | 0.5 | 0.038 | 0.038 | 6.264 |

FIG. 17

SIMILARITY CALCULATION EXAMPLES BY EQUATION 32
WHEN $\xi$ =10, CORRECTION TERM 1=1, CORRECTION TERM 3=1

| SIMILARITY CALCULATION EXAMPLES | | CONDITION 1 | CONDITION 2 | CONDITION 3 | CONDITION 4 |
|---|---|---|---|---|---|
| CLUSTER 1 | EXPONENT FOR $\xi$ | 0.167 | 0.013 | 0.368 | 0.616 |
| | VALUE OF CORRECTION TERM 2(3) | 0.681 | 0.971 | 0.429 | 0.242 |
| CLUSTER 2 | EXPONENT FOR $\xi$ | 0.167 | 0.013 | 0.013 | 0.298 |
| | VALUE OF CORRECTION TERM 2(3) | 0.681 | 0.971 | 0.979 | 0.504 |
| SIMILARITY (EQUATION 32) | | 0.340 | 0.485 | 0.350 | 0.187 |

FIG. 18

SIMILARITY CALCULATION EXAMPLES WHEN ADOPTING
CORRECTION TERM 1(1) AND CORRECTION TERM 2(3)

| SIMILARITY CALCULATION EXAMPLES | | CONDITION 1 | CONDITION 2 | CONDITION 3 | CONDITION 4 |
|---|---|---|---|---|---|
| CLUSTER 1 | VALUE OF CORRECTION TERM 1 | 1 | 3.774 | 1.761 | 1.308 |
| | VALUE OF CORRECTION TERM 2(3) | 0.681 | 0.971 | 0.429 | 0.242 |
| | CORRECTION TERM 1 × CORRECTION TERM 2(3) | 0.681 | 3.665 | 0.755 | 0.317 |
| CLUSTER 2 | VALUE OF CORRECTION TERM 1 | 1 | 0.075 | 0.075 | 0.528 |
| | VALUE OF CORRECTION TERM 2(3) | 0.681 | 0.971 | 0.971 | 0.504 |
| | CORRECTION TERM 1 × CORRECTION TERM 2(3) | 0.681 | 0.073 | 0.073 | 0.266 |
| SIMILARITY (CORRECTION TERM 1 × CORRECTION TERM 2(3)) | | 0.340 | 0.935 | 0.207 | 0.146 |

FIG. 19

## INTERNATIONAL SEARCH REPORT

| | International application No. |
|---|---|
| | PCT/JP2004/004451 |

**A. CLASSIFICATION OF SUBJECT MATTER**
Int.Cl⁷ G06F17/30

According to International Patent Classification (IPC) or to both national classification and IPC

**B. FIELDS SEARCHED**

Minimum documentation searched (classification system followed by classification symbols)
Int.Cl⁷ G06F17/30

Documentation searched other than minimum documentation to the extent that such documents are included in the fields searched

| | | | |
|---|---|---|---|
| Jitsuyo Shinan Koho | 1922-1996 | Kokai Jitsuyo Shinan Koho | 1971-2004 |
| Toroku Jitsuyo Shinan Koho | 1994-2004 | Jitsuyo Shinan Toroku Koho | 1996-2004 |

Electronic data base consulted during the international search (name of data base and, where practicable, search terms used)
JICST FILE(JOIS), WPI, INSPEC(DIALOG)

**C. DOCUMENTS CONSIDERED TO BE RELEVANT**

| Category* | Citation of document, with indication, where appropriate, of the relevant passages | Relevant to claim No. |
|---|---|---|
| A | Kimio ARAI, "Tokkyo Joho Bunseki to Patent Map", The Journal of Information Science and Technology Association, 01 January, 2003 (01.01.03), Vol.53, No.1, pages 16 to 21, full text; all drawings | 1-33 |

☐ Further documents are listed in the continuation of Box C.  ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>28 June, 2004 (28.06.04) | Date of mailing of the international search report<br>13 July, 2004 (13.07.04) |
|---|---|
| Name and mailing address of the ISA/<br>Japanese Patent Office | Authorized officer |
| Facsimile No. | Telephone No. |

Form PCT/ISA/210 (second sheet) (January 2004)